(19) Europäisches Patentamt
European Patent Office
Office européen des brevets

(11) EP 4 495 757 A1

(12) # EUROPEAN PATENT APPLICATION
published in accordance with Art. 153(4) EPC

(43) Date of publication:
**22.01.2025 Bulletin 2025/04**

(21) Application number: **23795171.0**

(22) Date of filing: **20.04.2023**

(51) International Patent Classification (IPC):
***G06F 3/14*** *(2006.01)*

(52) Cooperative Patent Classification (CPC):
**G06F 3/14**

(86) International application number:
**PCT/CN2023/089393**

(87) International publication number:
**WO 2023/207738 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 CN 202210462994**

(71) Applicant: **Huawei Technologies Co., Ltd.**
**Shenzhen, Guangdong 518129 (CN)**

(72) Inventors:
- **MA, Liangchuan**
  **Shenzhen, Guangdong 518129 (CN)**
- **WANG, Zhengyun**
  **Shenzhen, Guangdong 518129 (CN)**
- **MAO, Songpo**
  **Shenzhen, Guangdong 518129 (CN)**
- **WANG, Yaojun**
  **Shenzhen, Guangdong 518129 (CN)**
- **MAO, Xinjie**
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **DISPLAY METHOD OF ELECTRONIC DEVICE HAVING FLEXIBLE SCREEN, AND ELECTRONIC DEVICE**

(57) Embodiments of this application provide a display method for an electronic device with a flexible screen and an electronic device. In a process in which a screen is unfolded or folded, a first animation may be generated and displayed. As an unfolding angle of the screen gradually increases, a size of an interface for displaying content gradually increases, relative positions of elements on the interface gradually increase, and sizes of the elements gradually increase. In addition, as the unfolding angle of the screen gradually decreases, the size of the interface for displaying content gradually decreases, the relative positions of the elements on the interface gradually decrease, and the sizes of the elements gradually decrease. In other words, in embodiments of this application, in a process in which the screen is unfolded or folded, the screen may play an animation adapted to the unfolding angle of the screen, and content in the animation has good transition effect, so that user experience may be improved.

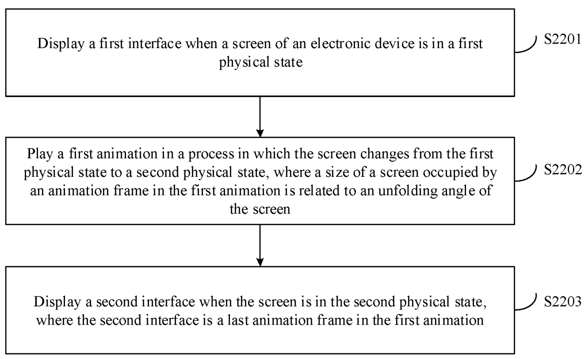


FIG. 22



Processed by Luminess, 75001 PARIS (FR)

## Description

This application claims priority to Chinese Patent Application No. 202210462994.3, filed with the China National Intellectual Property Administration on April 28, 2022 and entitled "DISPLAY METHOD FOR ELECTRONIC DEVICE WITH FLEXIBLE SCREEN AND ELECTRONIC DEVICE", which is incorporated herein by reference in its entirety.

## TECHNICAL FIELD

Embodiments of this application relate to the field of terminal technologies, and in particular, to a display method for an electronic device with a flexible screen and an electronic device.

## BACKGROUND

A flexible screen includes a screen of a type such as a flexible organic light emitting diode (organic light emitting diode, OLED). Compared with a conventional screen, the flexible screen is light and thin, and is easy to bend. Currently, the flexible screen has been applied to an electronic device such as a mobile phone or a tablet computer.

A user may fold or unfold a screen when using an electronic device with the flexible screen. Currently, display of the screen lacks dynamic effect in a process in which the screen is unfolded or folded.

## SUMMARY

Embodiments of this application provide a display method for an electronic device with a flexible screen and an electronic device, so that an animation can be displayed when a physical state of the screen changes.

According to a first aspect, an embodiment of this application provides a display method for an electronic device with a flexible screen. The method may be performed by an electronic device or a chip in the electronic device. In the method, a first interface is displayed when a screen of the electronic device is in a first physical state. A first animation is played in a process in which the screen changes from the first physical state to a second physical state, where a size of an animation frame in the first animation is related to an unfolding angle of the screen. A second interface is displayed when the screen is in the second physical state, where the second interface is a last animation frame in the first animation.

In this embodiment of this application, in a process in which the screen is unfolded or folded, the screen may play an animation adapted to an unfolding angle of the screen, and content in the animation has good transition effect, so that user experience may be improved.

In a possible implementation, the method further includes: generating the first animation in response to that the screen changes from the first physical state to the second physical state.

In a possible implementation, the generating the first animation includes: generating the first animation based on information about a first interface layout of the first interface and information about a second interface layout of the second interface.

In a possible implementation, the generating the first animation based on information about a first interface layout of the first interface and information about a second interface layout of the second interface includes: obtaining change forms of elements on an interface based on the information about the first interface layout of the first interface and the information about the second interface layout of the second interface; and generating the first animation based on the change forms of the elements, and play duration and a dynamic-effect curve of the first animation.

In a possible implementation, the elements include at least one of the following: a wallpaper, an application icon, text, a picture, a folder, a card, a desktop widget, a navigation bar, a status bar, and a widget (widget).

In a possible implementation, the change forms of the elements include at least one of the following: a position changes, a size changes, and content changes.

In a possible implementation, the screen may be any one of the following: an outward-folding screen, an inward-folding screen, and a scroll screen.

In a possible implementation, when the screen is the outward-folding screen or the inward-folding screen, the first physical state is any one of the following: a folded state, an intermediate state, or an unfolded state, where the intermediate state is a state between the folded state and the unfolded state. When the first physical state is the folded state, the second physical state is the intermediate state or the unfolded state. When the first physical state is the unfolded state, the second physical state is the intermediate state or the folded state. When the first physical state is the intermediate state, the second physical state is the unfolded state, the folded state, or another intermediate state.

According to a second aspect, an embodiment of this application provides an electronic device. The electronic device may include a processor and a memory. The memory is configured to store computer-executable program code. The program code includes instructions. When the processor executes the instructions, the instructions enable the electronic device to perform the method in the first aspect.

According to a third aspect, an embodiment of this application provides an electronic device. The electronic device may include a unit, a module, or a circuit configured to perform the method provided in the first aspect.

According to a fourth aspect, an embodiment of this application provides a computer program product including instructions. When the computer program product is run on a computer, the computer is enabled to perform the method in the first aspect.

According to a fifth aspect, an embodiment of this application provides a computer-readable storage medium. The computer-readable storage medium stores instructions, and when the instructions are run on a computer, the computer is enabled to perform the method in the first aspect.

For beneficial effects of the possible implementations of the second aspect to the sixth aspect, refer to the beneficial effects brought by the first aspect. Details are not described herein again.

## BRIEF DESCRIPTION OF DRAWINGS

FIG. 1 is a diagram of various physical states of a screen of an electronic device according to an embodiment of this application;

FIG. 2 is a diagram of interfaces of a screen in an unfolding process according to an embodiment of this application;

FIG. 3 is a diagram of a hardware structure of an electronic device according to an embodiment of this application;

FIG. 4 is diagram of another structure of an electronic device according to an embodiment of this application;

FIG. 5A and FIG. 5B are a schematic flowchart of an embodiment of a display method for an electronic device with a flexible screen according to an embodiment of this application;

FIG. 6 is a diagram of interface layouts according to an embodiment of this application;

FIG. 7 is a diagram of generating a settings application icon in an animation frame according to an embodiment of this application;

FIG. 8 is a diagram of generating a schedule widget in an animation frame according to an embodiment of this application;

FIG. 9 is a diagram of processing a large folder according to an embodiment of this application;

FIG. 10A to FIG. 10D are a diagram of synthesizing elements according to an embodiment of this application;

FIG. 11 is a diagram of interfaces of a screen in an unfolding process according to an embodiment of this application;

FIG. 12A is another diagram of interfaces of a screen in an unfolding process according to an embodiment of this application;

FIG. 12Ba to FIG. 12Bf are another diagram of interfaces of a screen in an unfolding process according to an embodiment of this application;

FIG. 13Ais a diagram of interfaces of a memo application in a screen unfolding process according to an embodiment of this application;

FIG. 13Ba to FIG. 13Be are a diagram of interfaces of a memo application in a screen unfolding process according to an embodiment of this application;

FIG. 14 is another diagram of interfaces of a memo application in a screen unfolding process according to an embodiment of this application;

FIG. 15A to FIG. 15C are a schematic flowchart of another embodiment of a display method for an electronic device with a flexible screen according to an embodiment of this application;

FIG. 16A is a diagram of a preset wallpaper according to an embodiment of this application;

FIG. 16B is a diagram of generating a wallpaper in an animation frame according to an embodiment of this application;

FIG. 16C is a diagram of synthesizing elements and a wallpaper according to an embodiment of this application;

FIG. 16D is another diagram of interfaces of a screen in an unfolding process according to an embodiment of this application;

FIG. 17A to FIG. 17C are a schematic flowchart of another embodiment of a display method for an electronic device with a flexible screen according to an embodiment of this application;

FIG. 18A to FIG. 18D are another diagram of synthesizing elements and a wallpaper according to an embodiment of this application;

FIG. 19A to FIG. 19C are a schematic flowchart of another embodiment of a display method for an electronic device with a flexible screen according to an embodiment of this application;

FIG. 20 is a schematic flowchart of another embodiment of a display method for an electronic device with a flexible screen according to an embodiment of this application;

FIG. 21 is a diagram of a change of a physical state of an electronic device according to an embodiment of this application; and

FIG. 22 is a schematic flowchart of another embodiment of a display method for an electronic device with a flexible screen according to an embodiment of this application.

## DESCRIPTION OF EMBODIMENTS

The display method provided in embodiments of this application is applicable to an electronic device with a flexible screen. When using the electronic device with a flexible screen, a user may unfold or fold the screen. That is, the screen may be opened or closed. The screen of the electronic device may include but is not limited to an outward-folding screen, a scroll screen, an inward-folding screen, a diagonal-folding screen, and the like. The screen of the electronic device may be folded at least once. In the following embodiments, description is provided by using an example in which the screen of the electronic device is folded once.

In an opening and closing process, the screen may include three physical states: a folded state, an intermediate state, and an unfolded state respectively. In FIG. 1, an example in which the electronic device has an outward-folding screen and the outward-folding screen is completely unfolded from the folded state is used. The outward-folding screen successively goes through the folded state, the intermediate state, and the unfolded state. A screen shown in a in FIG. 1 is in the folded state, a screen shown in b in FIG. 1 is in the intermediate state, and a screen shown in c in FIG. 1 is in the unfolded state. In an embodiment, the state of the screen shown in b in FIG. 1 may also be referred to as a support state. This is not limited in this embodiment of this application.

The electronic device in embodiments of this application may be referred to as user equipment (user equipment, UE), a terminal (terminal), or the like. For example, the electronic device may be an electronic device with a flexible screen, such as a mobile phone, a tablet computer (portable Android device, PAD), a personal digital assistant (personal digital assistant, PDA), a handheld device with a wireless communication function, a computing device, an in-vehicle device, or a wearable device, a virtual reality (virtual reality, VR) terminal device, an augmented reality (augmented reality, AR) terminal device, a wireless terminal in industrial control (industrial control), or a wireless terminal in a smart home (smart home). A form of the electronic device is not specifically limited in embodiments of this application.

Currently, in an embodiment, a size of an interface for displaying content on the screen changes. For example, when the screen is unfolded from the folded state to the unfolded state, the size of the interface changes from a small size to a large size; and when the screen is folded from the unfolded state to the folded state, the size of the interface changes from a large size to a small size. During changing of the size of the interface, content displayed on the interface has poor transition effect, resulting in poor user experience. The interface described in this embodiment of this application is a user interface (user interface, UI).

With reference to FIG. 2, the display method in embodiments of this application is described by using an example in which the screen is unfolded from the folded state to the unfolded state. Refer to a in FIG. 2. When the screen is in the folded state, an interface for displaying content is an interface 1. Refer to d in FIG. 2. When the screen is in the unfolded state, an interface for displaying content is an interface 2. For example, content displayed on the interface 1 is a combination of several shapes (a circle and a triangle). When the screen is unfolded from the folded state to the unfolded state, the electronic device may take a screenshot of the interface 1 to obtain a first image, and zoom in (for example, stretch) the first image based on a size of the interface 2 to a same size as the second interface, to obtain a second image.

In a process in which the screen is unfolded from the folded state to the unfolded state, the electronic device may process the first image as fade-out effect, that is, gradually increase a transparency of the first image, and the electronic device may process the second image as fade-in effect, that is, gradually decrease a transparency of the second image. Finally, when the screen is in the unfolded state, the second image (that is, a transparency of the second image is 0) is displayed on the interface 2, and the first image disappears. For this process, refer to a to d in FIG. 2. It should be understood that a transparency of an image is represented with different grayscales in FIG. 2.

Refer to FIG. 2. The electronic device stretches the first image, and the second image is deformed. As a result, a user sees a deformed image in a process in which the screen is unfolded. In addition, the content displayed on the screen has poor transition effect, and there is no effect of the first image gradually enlarging. Besides, the faded-out first image and the faded-in second image may further overlap. That is, the user may see the first image and the second image at the same time, as shown in b and c in FIG. 2.

For the foregoing problem, in a process in which the screen is opened or closed, if an animation with good content transition effect can be displayed on the interface, the user can see that each element on the interface can move and zoom naturally, without deformation and a sudden change of an element position, which brings good sensory experience to the user. An objective of the display method for an electronic device with a flexible screen provided in this embodiment of this application is to generate and play an animation with good content transition effect in a process in which a screen is opened or closed, to improve user experience.

The element may be understood as content that can be viewed by the user on the interface. In an embodiment, the element may include but is not limited to: a wallpaper, an application icon, text, a picture, a widget (widget), and the like. A control is used to perform layout of the element (or referred to as an object or data) on the interface. In this embodiment of this application, if the control is considered as a container, an object (for example, text or a picture) placed in the container is referred to as an element. Because the control can be nested for use, an element in a child control (or a child view) is referred to as a child element relative to a parent control (or a parent view).

In an embodiment, the control may include but is not limited to: a linear layout (Linear Layout) control, a list view control, a grid view (GridView) control, a recycler view (RecyclerView) control, a view pager (ViewPager) control, and an image view (ImageView) control. The following briefly describes the various controls:

The linear layout control is used to implement flow layout, to control horizontal or vertical arrangement of an element in the control.

The list view control is used to display an element (or an object, which may include text and a picture) in a list. With this control, an element may be grouped into a column with or without a column header, and an accompanying icon and text are displayed. The list view control may be used to organize a list item called a list item element (which may include text and a picture) into one of the following four different views: 1. Large (standard) icon; 2. Small icon; 3. List; and 4. Report. In addition, the control further manages a sorting method of elements in the list and an appearance of selected elements.

The grid view control is used to display an element (or an object, which may include text and a picture) in a grid.

The recycler view control may display an element (or an object, which may include text and a picture) in a list, a grid, or the like. Compared with the list view control, the recycler view control has a more powerful element reuse mechanism and provides more layout managers (LayoutManager) to process a plurality of layouts. The layout manager may be customized to determine an item layout rule. For example, the recycler view control may provide the following layouts: 1. a linear layout, which is similar to the list view control to implement a horizontal or vertical element layout; 2. a grid layout, where a quantity of elements may be specified; and 3. a waterfall layout, where a list direction or a quantity of elements in a same direction may be specified.

The view pager control provides effect of switching between a plurality of pages. This control is of a container type, and another control can be added to this control. The view pager control requires a pager adapter (adapter) type to provide data for it. An adapter (adapter) may be created to fill a plurality of views (view) for the control. When the user swipes left or right, the user can switch between different views (view).

The image view control displays an image (picture).

Before the display method for an electronic device with a flexible screen provided in this embodiment of this application is described, a hardware structure of the electronic device is first described. FIG. 3 is a diagram of a hardware structure of an electronic device according to an embodiment of this application.

Refer to FIG. 3. The electronic device 300 may include: a processor 310, an external memory interface 320, an internal memory 321, a universal serial bus (universal serial bus, USB) interface 330, a charging management module 340, a power management module 341, a battery 350, a communication module 360, an audio module 370, a speaker 370A, a receiver 370B, a microphone 370C, a headset jack 370D, a sensor 380, a button 390, a motor 391, a camera 392, and a display 393, a subscriber identity module (subscriber identification module, SIM) card interface 394, and the like. It may be understood that a structure shown in this embodiment does not constitute a specific limitation on the electronic device 300. In some other embodiments of this application, the electronic device 300 may include more or fewer components than those shown in the figure, or combine some components, or split some components, or have a different component arrangement. The components shown in the figure may be implemented by using hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display processing unit (display processing unit, DPU), a neural-network processing unit (neural-network processing unit, NPU), and/or the like. Different processing units may be independent components, or may be integrated into one or more processors. In some embodiments, the electronic device 300 may alternatively include one or more processors 310. The controller is a nerve center and a command center of the electronic device 300. The controller may generate an operation control signal based on an instruction operation code and a time sequence signal, to complete control of instruction fetching and instruction execution. A memory may be further disposed in the processor 310, and is configured to store instructions and data.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The USB interface 330 is an interface that conforms to a USB standard specification, and may be specifically a mini USB interface, a micro USB interface, a USB type-C interface, or the like. The USB interface 330 may be configured to be connected to the charger to charge the electronic device 300, or may be configured to transmit data between the electronic device 300 and a peripheral device, or may be configured to connect to a headset for playing audio through the headset.

It may be understood that an interface connection relationship between the modules shown in this embodiment of the present invention is merely an example for description, and does not constitute a limitation on the structure of the electronic device 300. In some other embodiments of this application, different interface connection manners in the foregoing embodiments or a combination of a plurality of interface connection manners may alternatively be used for the electronic device 300.

The external memory interface 320 may be configured to connect to an external memory card, for example, a micro SD card, to extend a storage capability of the electronic device 300. The external memory card communicates with the processor 310 through the external memory interface 320, to implement a data storage function. For example, data files such as music, photos, and videos are stored in the external memory card.

The internal memory 321 may be configured to store one or more computer programs, and the one or more computer programs include instructions. The processor 310 runs the instructions stored in the internal memory 321, so that the electronic device 300 performs various functional applications, data processing, and the like. The internal memory 321 may include a program storage area and a data storage area. The program storage area may store an operating system. The program storage area may further store one or more applications (for example, Gallery and Contacts), and the like. The data storage area may store data (for example, a photo and a contact) created during use of the electronic device 300, and the like. In addition, the internal memory 321 may include a high-speed random access memory, and may also include a nonvolatile memory, for example, at least one magnetic disk storage device, a flash memory device, or a universal flash storage (universal flash storage, UFS). In some embodiments, the processor 310 runs the instructions stored in the internal memory 321 and/or the instructions stored in the memory disposed in the processor 310, to enable the electronic device 300 to perform various functional applications and data processing.

The charging management module 340 is configured to receive a charging input from a charger. The charger may be a wireless charger or a wired charger. The power management module 341 is configured to connect to the battery 350. The power management module 341 receives an input from the battery 350 and/or the charging management module 340, and supplies power to the processor 310, the internal memory 321, the display 393, the camera 392, the communication module 360, and the like. In some other embodiments, the power management module 341 may alternatively be disposed in the processor 310. In some other embodiments, the power management module 341 and the charging management module 340 may also be disposed in a same component.

The communication module 360 may include a mobile communication module and/or a wireless communication module. The mobile communication module provides wireless communication solutions that are applied to the electronic device 300 and that include 2G/3G/4G/5G wireless communication solutions and the like. The wireless communication module may provide a wireless communication solution that is applied to the electronic device 300 and that includes a wireless local area network (wireless local area network, WLAN), BLuetooth, a global navigation satellite system (global navigation satellite system, GNSS), frequency modulation (frequency modulation, FM), NFC, an infrared (infrared, IR) technology, or the like.

The electronic device 300 may implement a display function through a GPU, the display 393, the application processor AP, and the like. The display 393 is configured to display an image, a video, and the like. The display 393 in this embodiment of this application is a flexible screen. For related descriptions, refer to the screen shown in FIG. 1.

The electronic device 300 may implement a photographing function by using the ISP, one or more cameras 392, the video codec, the GPU, one or more displays 393, the application processor, and the like.

The electronic device 300 may implement an audio function by using the audio module 370, the speaker 370A, the receiver 370B, the microphone 370C, the headset jack 370D, the application processor, and the like.

The sensor 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like. Functions of various types of sensors are not described in detail in this embodiment of this application.

The button 390 includes a power button, a volume button, and the like. The button 390 may be a mechanical button or a touch button. The electronic device 300 may receive a button input, and generate a button signal input related to user setting and function control of the electronic device 300.

The motor 391 is configured to implement vibration of the electronic device 300. The SIM card interface 394 is configured to connect to a SIM card. In some embodiments, the electronic device 300 uses an eSIM, namely, an embedded SIM card.

A software system of a terminal device may use a layered architecture, an event-driven architecture, a microkernel architecture, a micro service architecture, or a cloud architecture. In this embodiment of this application, an Android (Android) system is used as an example of a software system of a layered architecture, to describe a structure of the electronic device. FIG. 4 is diagram of another structure of an electronic device according to an embodiment of this application. In a layered architecture, a software system of the terminal device is divided into several layers, and each layer has a clear role and task. The layers communicate with each other through a software interface.

In some embodiments, the Android system may be divided into four layers: an application (application) layer, an application framework (application framework) layer, Android runtime (Android runtime) and a system library, and a kernel (kernel) layer respectively. A layer of the software structure of the electronic device is not limited in this embodiment of this application. Refer to FIG. 4. In this embodiment of this application, the Android runtime, the system library, and the kernel layer may be considered as one layer, which is referred to as a system layer. It should be understood that in FIG. 4, a hardware layer in the electronic device is further added based on the Android system.

It should be understood that modules included in the layers shown in FIG. 4 are modules in this embodiment of this application, and modules included in the following layers do not constitute a limitation on a structure of the electronic device and a layer (example description) at which modules are deployed. For example, a drawing module may be deployed at the application layer, or may be deployed at the application framework layer. In an embodiment, the modules shown in FIG. 4 may be separately deployed, or several modules may be deployed together. Division of the modules in FIG. 4 is an example. In an embodiment, names of the modules shown in FIG. 4 are examples for description.

The application layer may include a series of application packages. The application layer may include applications such as Camera, Gallery, Calendar, Call, Map, Navigation, Bluetooth, Music, Video, and Messages. The application may include a system application and a third-party application. In FIG. 4, an example in which the system application includes a desktop application and a wallpaper application is used. The third-party application is an application installed on the electronic device. In FIG. 4, an example in which the third-party application is a memo application is used.

The application framework layer provides an application programming interface (application programming interface, API) and a programming framework for an application at the application layer. The application framework layer may include some predefined functions. Refer to FIG. 4. The application framework layer may include: a system service module, a window manager service (window manager service, WMS), a drawing module, a rendering module, and a layer synthesizer (Surface Flinger, SF).

The system service module may provide a monitoring service for an application, for example, may monitor a change of a folded state of a screen. The WMS is configured to manage a user interface. The drawing module is configured to draw elements displayed on the interface. The rendering module is configured to perform rendering processing on an element drawn by the drawing module. The SF is configured to perform layer synthesizing on all rendered elements to obtain a to-be-displayed interface.

In this embodiment of this application, the Android runtime, the system library, and the kernel layer are considered as one layer. Therefore, the system layer may include the Android runtime, the system library, and functional modules at the kernel layer. Refer to FIG. 4. The system layer may include a plurality of functional modules, for example, a state monitoring service, a surface manager (surface manager), a media library (Media Libraries), a three-dimensional graphics processing library (for example, OpenGL ES), and a 2D graphics engine (for example, SGL). The state monitoring service is configured to determine a specific orientation of a mobile phone, a physical state of a flexible screen, and the like based on monitoring data reported by the kernel layer. It should be understood that in FIG. 4, description is provided by using an example in which the system layer includes the state monitoring service. The system layer further includes a hinge detection module. The hinge detection module may be configured to obtain an angle of a hinge and report the angle to the state monitoring service, so that the state monitoring service determines a physical state of the flexible screen based on the angle of the hinge.

In addition, the system layer further includes a hardware driver configured to drive the hardware to work. For example, a driver layer includes a sensor driver, a display driver (display driver), a graphics processing unit driver (graphics processing unit driver, GPU driver), and the like. This is not limited in this embodiment of this application. It should be understood that FIG. 4 shows a display driver in this embodiment of this application. The display driver is configured to drive the display to display an interface.

The hardware layer includes hardware in the electronic device. For details, refer to descriptions in FIG. 3. It should be understood that the hardware layer in FIG. 4 shows the hinge for supporting opening and closing of the screen and the display in the following embodiments.

Based on the structure of the electronic device shown in FIG. 4, the following describes, with reference to a specific embodiment, a display method for an electronic device with a flexible screen provided in an embodiment of this application. The following several embodiments may be combined with each other, and a same or similar concept or process may not be described repeatedly in some embodiments.

FIG. 5A and FIG. 5B are a schematic flowchart of an embodiment of a display method for an electronic device with a flexible screen according to an embodiment of this application. Refer to FIG. 5A and FIG. 5B. The display method for the electronic device with a flexible screen according to this embodiment of this application may include the following steps.

S501: An application registers a listener with a system service module.

The listener includes an onpredraw listener. The onpredraw listener is configured to generate information about an interface layout with a screen in an unfolded state or a folded state when it is detected that a physical state of the screen changes. The information about the interface layout indicates the interface layout. When the screen is unfolded, the onpredraw listener may generate an interface layout with the screen in the unfolded state. When the screen is folded, the onpredraw listener may generate an interface layout with the screen in the folded state.

In an embodiment, the application registering the onpredraw listener may include but is not limited to a desktop application in a system application and a third-party application. In an embodiment, a wallpaper application in the system application does not need to register the onpredraw listener.

It should be understood that, regardless of whether the screen is unfolded or folded, that a physical state of the screen changes may be understood as that the screen changes from a first physical state to a second physical state. That the screen is unfolded may be understood as that the screen is unfolded from the first physical state "folded state" to the second physical state "unfolded state", or the screen is unfolded from the first physical state "folded state" to the second physical state "intermediate state", or the screen is unfolded from the first physical state "intermediate state" to the second physical state "unfolded state", or the screen is unfolded from the first physical state "first intermediate state" to the second physical state "second intermediate state". It should be understood that, that the screen is folded may be understood as that the screen is folded from the first physical state "unfolded state" to the second physical state "folded state", or the screen is folded from the first physical state "unfolded state" to the second physical state "intermediate state", or the screen is folded from the first physical state "intermediate state" to the second physical state "folded state", or the screen is folded from the first physical state "second intermediate state" to the second physical state "first intermediate state". An unfolding angle of the screen in the first intermediate state is less than an unfolding angle of the screen in the second intermediate state. The unfolding angle of the screen may be shown by an angle β in b in FIG. 1.

In an embodiment, the listener may further include an angle listener. The angle listener is configured to listen to the unfolding angle of the screen.

In an embodiment, the system application such as the desktop application or the wallpaper application may register a listener with the system service module when the electronic device is powered on, and the third-party application may register a listener with the system service module when the third-party application is started.

S502: The screen changes from the first physical state to the second physical state in response to a first operation.

The first operation is used to trigger the screen to be unfolded or folded. That is, the screen changes from the first physical state to the second physical state. In an embodiment, the first operation may be that a user manually unfolds or folds the screen. Alternatively, the first operation may be a control on a user operation interface or a physical button on the electronic device, to trigger the screen to be unfolded or folded. Alternatively, the first operation may be a voice indication of the user. For example, when the user says "Unfold the screen", unfolding of the screen may be triggered.

S503: In a process in which the screen changes from the first physical state to the second physical state, a hinge detection module acquires an angle of a hinge.

Hinge movement (such as opening or closing of the hinge) causes the screen to be opened or closed, that is, causes the physical state of the screen to change. Therefore, in a process in which the screen changes from the first physical state to the second physical state, the hinge detection module may acquire the angle of the hinge, to monitor the physical state of the screen.

It should be understood that the angle of the hinge may represent the unfolding angle of the screen.

S504: The hinge detection module sends the angle of the hinge to a state monitoring service.

S505: The state monitoring service obtains the second physical state of the screen and physical state change information of the screen based on the angle of the hinge.

The state monitoring service uses the angle of the hinge with the screen in the second physical state as a second angle. The state monitoring service may determine the second physical state of the screen based on the second angle. When the second angle is 0°, the second physical state of the screen is the folded state. When the second angle is 180°, the second physical state of the screen is the unfolded state. When the second angle is greater than 0° and less than 180°, the second physical state of the screen is the intermediate state.

It may be figured out that, when the screen changes from another physical state to the first physical state, based on the descriptions in S503 and S504, the hinge detection module may alternatively send the second angle of the hinge to the state monitoring service. Therefore, the state monitoring service may store an angle of the hinge with the screen in the first physical state, that is, a first angle. The state monitoring service may obtain the physical state change information of the screen based on the first angle and the second angle. The physical state change information of the screen represents that the screen is unfolded or the screen is folded.

When the second angle is greater than the first angle, the state monitoring service may determine that the screen is unfolded, and correspondingly the physical state change information of the screen represents that the screen is unfolded. When the second angle is less than the first angle, the state monitoring service may determine that the screen is folded, and correspondingly the physical state change information of the screen represents that the screen is folded.

S506: The state monitoring service sends a first message to the system service module.

The first message may include the physical state change information of the screen.

In an embodiment, in a case in which the application has registered the angle listener with the system service module, the first message may further include the unfolding angle of the screen, that is, the second angle.

S507: The system service module generates information about a second interface layout in response to the first message.

The interface layout may be understood as a layout of elements displayed on an interface, for example, sizes and position layouts of the elements. In an embodiment, an interface layout with the screen in the first physical state may be referred to as a first interface layout.

When receiving the first message, the system service module may generate the information about the second interface layout based on the physical state change information of the screen in the first message. The information about the second interface layout indicates the second interface layout. In an embodiment, the information about the second interface layout includes information such as positions and sizes of elements displayed on the second interface layout. In other words, the second interface layout may be obtained based on the information about the second interface layout, to generate an interface.

The second interface layout is an interface layout with the screen in the unfolded state or the folded state. In an embodiment, in response to the first message, the system service module may invoke an onpredraw function to generate the information about the second interface layout. When the physical state change information of the screen represents that the screen is unfolded, the second interface layout is the interface layout with the screen in the unfolded state, and the system service module may invoke the onpredraw function to generate information about the interface layout with the screen in the unfolded state. When the physical state change information of the screen represents that the screen is folded, the second interface layout is the interface layout with the screen in the folded state, and the system service module may invoke the onpredraw function to generate information about the interface layout with the screen in the folded state.

Herein, the first interface layout and the second interface layout are described with reference to FIG. 6. In FIG. 6, description is provided by using an example in which a desktop (main interface) of an electronic device is displayed on an interface, the first physical state is the folded state, and the second physical state is the unfolded state. Refer to a in FIG. 6. When the screen is in the first physical state "folded state", an interface for displaying content is an interface 1. Refer to b in FIG. 6. When the electronic device is in the second physical state "unfolded state", an interface for displaying content is an interface 2. In a process in which the screen is unfolded from the folded state to the unfolded state, an element displayed on the interface may remain unchanged. However, a size of the interface 2 is greater than a size of the interface 1. To enable the element displayed on the interface to adapt to the size of the interface, positions, sizes, and the like of elements on the interface 2 are correspondingly changed compared with those on the interface 1.

S508: The system service module sends a first listening message to the application.

The first listening message includes the information about the second interface layout.

In an embodiment, in a case in which the application has registered the angle listener with the system service module, the first listening message may further include the unfolding angle of the screen, that is, the second angle.

S509: The application generates a first animation based on information about the first interface layout and the information about the second interface layout.

The information about the first interface layout may include information such as positions and sizes of elements on the first interface layout. As shown in a in FIG. 6, the first interface layout is a layout of elements on the interface 1, and the information about the first interface layout includes information such as positions and sizes of the elements on the interface 1.

In an embodiment, play duration and a dynamic-effect curve of the first animation may be preset. The play duration of the first animation may be understood as duration for playing the first animation. The dynamic-effect curve represents dynamic display effect of the first animation. For example, the dynamic-effect curve may be a straight line. For example, displacements of a same element in two adjacent animation frames in the first animation are the same. Alternatively, the dynamic-effect curve may be a parabolic. For example, displacements of a same element in two adjacent animation frames in the first animation are different. For example, displacements of same content in two adjacent animation frames at the beginning are relatively small. As a quantity of frames increases, displacements of the same content in two adjacent animation frames gradually increase, and displacements of the same content in last two adjacent animation frames gradually decrease.

In an embodiment, the dynamic-effect curve may be replaced with a dynamic-effect parameter, and the application may obtain the dynamic-effect curve based on the dynamic-effect parameter. In the following embodiment, the dynamic-effect curve is used as an example for description.

The first animation is formed by a plurality of consecutive animation frames. The application may obtain a quantity of frames of the first animation based on preset play duration of the first animation and a refresh rate of the electronic device. It may be understood that the refresh rate of the electronic device is related to a quantity of frames that can be displayed by the electronic device in unit duration. For example, if the refresh rate of the electronic device is 60 Hz, the electronic device may display a frame every 16.67 ms. In this way, the application may calculate a quotient of the play duration of the first animation and the refresh rate of the electronic device. The quotient is the quantity of frames of the first animation. For example, if the refresh rate of the electronic device is 60 Hz, and the play duration of the first animation is 500 ms, the quantity of frames of the first animation is 29.

After determining the quantity of frames of the first animation, the application may generate the first animation based on the information about the first interface layout and the information about the second interface layout.

The following describes a manner in which the application generates the first animation from two aspects.

In a first aspect, the second physical state is the folded state or the unfolded state. For example, the screen is unfolded from the "folded state or intermediate state" to the "unfolded state", or the screen is folded from the "unfolded state or intermediate state" to the "folded state".

In an embodiment, in a case in which the second physical state is the folded state or the unfolded state, regardless of whether the first physical state is the intermediate state or a non-intermediate state (the folded state or the unfolded state), the play duration of the first animation may be the preset play duration of the first animation.

In an embodiment, in a case in which the second physical state is the folded state or the unfolded state, when the first physical state is the intermediate state, the unfolding angle of the screen is not 180°, but is less than 180°. To reduce power consumption of the application and adapt to a change of the unfolding angle of the screen, the play duration (referred to as first duration) of the first animation may be adaptively reduced. For example, the application may obtain an angle difference between the first angle and the second angle, to obtain a proportion of the angle difference in 180°, and then use a product of the proportion and the first duration as second duration in this embodiment. The second duration is play duration of the first animation when the first physical state is the intermediate state and the second physical state is the folded state or the unfolded state. In this embodiment, the application may determine the quantity of frames of the first animation based on the second duration and the refresh rate of the electronic device.

In this embodiment of this application, the application may determine layout information of each animation frame in the first animation based on the information about the first interface layout, the information about the second interface layout, the quantity of frames of the first animation, and the dynamic-effect curve, to obtain a layout of each animation frame. The application may generate each animation frame, that is, obtain a plurality of consecutive animation frames, namely, the first animation, based on the layout information of each animation frame by performing steps such as drawing, rendering, and layer synthesizing. In this embodiment of this application, steps such as drawing, rendering, and layer synthesizing are not described in detail. For details, refer to related descriptions of current steps such as drawing, rendering, and layer synthesizing.

It should be understood that types of elements on the interface are different, and change forms of the elements are different in a process in which the screen changes from the first physical state to the second physical state. For example, the change forms of the elements may include any one of the following: a displacement changes, a size changes, and content changes. Therefore, when the application determines the layout information of each animation frame in the first animation, the application may determine layout information of the element in each animation frame based on the change forms of the elements, to obtain the layout information of each animation frame.

The following uses an example in which the elements on the interface include a desktop icon (BubbleTextView), a desktop widget (LauncherAppWidgetHostView), a card (AbilityFormHostView), a large folder (CardFolder), a navigation bar, and a status bar, to separately describe change forms of layouts of the elements on the interface in a process in which the screen changes from the first physical state to the second physical state, and a process in which the application determines the layout information of each animation frame in the first animation.

It should be understood that the following uses an example in which the screen is unfolded from the folded state to the unfolded state for description.

1. Desktop icon.

The desktop icon may include an application icon, for example, a settings application icon, a phone application icon, and a messaging application icon. The following uses a settings application icon 61 as an example for description.

The information about the second interface layout may include: a second position of the settings application icon 61 on the interface 2, and a size of the settings application icon 61 on the interface 2. In an embodiment, the second position of the settings application icon 61 on the interface 2 may be represented by coordinates of upper, lower, left, and right corners of the settings application icon 61 on the interface 2. When the screen is in the first physical state "folded state", the interface 1 is generated by the application by performing steps such as drawing and rendering. Therefore, the application may further obtain the information about the first interface layout. The information about the first interface layout includes: a first position of the settings application icon 61 on the interface 1, and a size of the settings application icon 61 on the interface 1.

In an embodiment, with reference to FIG. 6, when the screen is unfolded from the folded state to the unfolded state, a size of the settings application icon 61 on the second interface layout remains unchanged. However, a position of the settings application icon 61 on the interface changes. For example, the settings application icon 61 moves from a position A to a position B. In this embodiment, the application may determine, based on the information about the first interface layout and the information about the second interface layout, that a change form of the settings application icon 61 (desktop icon) is: a size remains unchanged and a position is translated.

In an embodiment, the change form of the settings application icon 61 (desktop icon) may alternatively be: a size changes and a position changes. In this embodiment, for the change form of the settings application icon 61 and a manner in which the application generates the settings application icon 61 in the animation frame, refer to related descriptions of an icon in a large folder 65 (or the large folder 65).

Herein, description is provided by using an example in which "a change form of the settings application icon 61 (desktop icon) is: a size remains unchanged and a position is translated".

In this example, when the screen is unfolded from the folded state to the unfolded state, the application may obtain a displacement of the settings application icon 61 based on the first position and the second position. In an embodiment, the application may obtain, based on the first position, first coordinates X1 of a central position of the settings application icon 61 on the interface 1, and the application may obtain, based on the second position, second coordinates X2 of a central position of the settings application icon 61 on the interface 2. The application may obtain a displacement S of the settings application icon 61 by using the following formula 1:

$$S = X2 - X1 + \Delta Width \qquad \text{Formula 1}$$

ΔWidth is a width change of the interface 2 compared with the interface 1.

After obtaining the displacement of the settings application icon 61, the application may determine a displacement of the settings application icon 61 in two adjacent animation frames in the first animation based on the displacement of the settings application icon 61, the quantity of frames of the first animation, and the dynamic-effect curve. After determining the displacement of the settings application icon 61 in two adjacent animation frames in the first animation, the application may sequentially calculate a position of the settings application icon 61 in each animation frame based on the first position of the settings application icon 61 on the first interface layout and the displacement of the settings application icon 61 in two adjacent animation frames in the first animation.

In an embodiment, the dynamic-effect curve is a straight line. That is, displacements of the settings application icon 61 in two adjacent animation frames are the same. For example, the screen is unfolded from the folded state to the unfolded state. A 1$^{st}$ animation frame in the first animation is shown in a in FIG. 7, that is, the first interface layout with the screen in the folded state. In the 1$^{st}$ animation frame, a position of the settings application icon 61 is A. The application may add a displacement to the position A to obtain a position of the settings application icon 61 in a 2$^{nd}$ animation frame. The 2$^{nd}$ animation frame in the first animation is shown in b in FIG. 7. In the 2$^{nd}$ animation frame, the position of the settings application icon 61 is A1. The application may continue to add a displacement to the position A1, to obtain a position of the settings application icon 61 in a 3$^{rd}$ animation frame. The 3$^{rd}$ animation frame in the first animation is shown in c in FIG. 7. In the 3$^{rd}$ animation frame, the position of the settings application icon 61 is A2. By analogy, the application may obtain a position of the settings application icon 61 in a last animation frame. The last animation frame in the first animation is shown in d in FIG. 7. In the last animation frame, the position of the application icon is B. A displacement between A1 and A and a displacement between A2 and A1 are equal. It should be understood that a dashed arrow is used between c in FIG. 7 and d in FIG. 7, to represent that there are other animation frames between c in FIG. 7 and d in FIG. 7.

In an embodiment, the dynamic-effect curve is a parabolic. That is, the displacements of the settings application icon 61 in two adjacent animation frames are different. For example, description is provided by using an example in which the displacements of the settings application icon 61 in two adjacent animation frames gradually increase and then gradually decrease. For example, the screen is unfolded from the folded state to the unfolded state. In a 1$^{st}$ animation frame, a position of the settings application icon 61 is A. In a 2$^{nd}$ animation frame, a position of the settings application icon 61 is A11. In a 3$^{rd}$ animation frame, a position of the settings application icon 61 is A21. In a 25$^{th}$ animation frame, a position of the settings application icon 61 is A25. In a 26$^{th}$ animation frame, a position of the settings application icon 61 is A26. In a 27$^{th}$ animation frame, a position of the settings application icon 61 is A27. In a last animation frame, a position of the settings application icon 61 is B.

A displacement between A21 and A11 is greater than a displacement between A11 and A, and a displacement between A27 and A26 is greater than a displacement between A26 and A25.

In an embodiment, even if the size of the settings application icon 61 does not change, the application still needs to pay attention to the size of the settings application icon 61, to ensure that the size of the settings application icon 61 remains unchanged in a process in which the physical state of the screen changes, and avoid a problem that the size of the settings application icon 61 changes abruptly when the user views the first animation.

In an embodiment, after the application obtains the position of the settings application icon 61 in each animation frame, the settings application icon 61 in each animation frame may be generated through steps such as drawing and rendering.

In an embodiment, after the application obtains the position of the settings application icon 61 in each animation frame, when the settings application icon 61 in each animation frame is generated, steps such as drawing and rendering do not need to be repeatedly performed on the settings application icon 61. Instead, a rendered settings application icon 61 in the 1st animation frame may be reused, to generate a settings application icon 61 in a next animation frame after a corresponding displacement (that is, a displacement between two adjacent animation frames). In this embodiment, a generation time of the settings application icon 61 in an animation frame may be shortened, and generation efficiency is improved.

2. Desktop widget.

For example, as shown in FIG. 6, the desktop widget may include a time and date widget 62, a schedule widget 63, and the like.

First, the time and date widget 62 is described.

The information about the second interface layout may include: a fourth position of the time and date widget 62 on the interface 2 and a size of the time and date widget 62. The information about the first interface layout includes: a third position of the time and date widget 62 on the interface 1 and a size of the time and date widget 62. In this way, the application may determine, based on the information about the first interface layout and the information about the second interface layout, that a change form of the time and date widget 62 is: a size remains unchanged and a position is translated. Refer to FIG. 6. When the screen is unfolded from the folded state to the unfolded state, a size of the time and date widget 62 on the second interface layout remains unchanged. However, a position of the time and date widget 62 on the interface changes. For example, the settings application icon is translated from a position C to a position D.

For a displacement manner of the time and date widget 62, refer to related descriptions of the "settings application icon 61". For a manner in which the application generates the time and date widget 62 in each animation frame, still refer to related descriptions of the "settings application icon 61".

Next, the schedule widget 63 is described.

The information about the second interface layout may include: a sixth position of the schedule widget 63 on the interface 2 and a second size of the schedule widget 63. The second size may include a second height H1 and a second width W2 of the schedule widget 63. The information about the first interface layout includes: a fifth position of the schedule widget 63 on the interface 1 and a first size of the schedule widget 63. The first size may include a first height H1 and a first width W2 of the schedule widget 63. The application may determine, based on the information about the first interface layout and the information about the second interface layout, that a change form of the schedule widget 63 is: a size changes, and a position changes due to changes of the size. Refer to FIG. 6. When the screen is unfolded from the folded state to the unfolded state, a size of the schedule widget 63 on the second interface layout changes. For example, a width of the schedule widget 63 increases.

The application may obtain a width change $\Delta W$ of the schedule widget 63 based on the first size and the second size, where $\Delta W = W2 - W1$.

After obtaining the width change $\Delta W$ of the schedule widget 63, the application may determine a width change of the schedule widget 63 in two adjacent animation frames in the first animation based on the width change $\Delta W$ of the displacement of the schedule widget 63, the quantity of frames of the first animation, and the dynamic-effect curve. After determining the width change of the schedule widget 63 in two adjacent animation frames in the first animation, the application may calculate a width of the schedule widget 63 in each animation frame based on the width in the first size of the schedule widget 63 on the first interface layout and the width change of the schedule widget 63 in two adjacent animation frames in the first animation.

For example, the dynamic-effect curve is a straight line. That is, width changes of the schedule widget 63 in two adjacent animation frames are the same. For example, the screen is unfolded from the folded state to the unfolded state. A 1st animation frame in the first animation is shown in a in FIG. 8, that is, the first interface layout with the screen in the folded state. In the 1st animation frame, a width of the schedule widget 63 is W1. The application may add a width change to the width W1 to obtain a width of the schedule widget 63 in a 2nd animation frame. The 2nd animation frame is shown in b in FIG. 8. In the 2nd animation frame, the width of the schedule widget 63 is W11. The application may add a width change to the width W11 to obtain a width of the schedule widget 63 in a 3rd animation frame. The 3rd animation frame is shown in c in FIG. 8. In the 3rd animation frame, the width of the schedule widget 63 is W12. By analogy, the application may obtain a width of the schedule widget 63 in a last animation frame. The last animation frame is shown in d in FIG. 8. In the last animation frame, the width of the schedule widget 63 is W2. A width difference between W11 and W1 is equal to a width difference between W12 and W11.

In an embodiment, after the application calculates the width of the schedule widget 63 in each animation frame, the schedule widget 63 in each animation frame may be generated through steps such as drawing and rendering.

In an embodiment, after the application obtains the width of the schedule widget 63 in each animation frame, when the schedule widget 63 in each animation frame is generated, steps such as drawing and rendering do not need to be repeatedly performed on the schedule widget 63. Instead, a rendered schedule widget 63 in the 1st animation frame may be reused, to generate a schedule widget 63 in a next animation frame after stretching of a corresponding width. In this embodiment, a generation time of the schedule widget 63 in an animation frame may be shortened, and generation efficiency is improved.

3. Card.

In an embodiment, the card may include an icon of an application that the user is interested in. For example, as shown in FIG. 6, a card 64 may include an audio-type application icon and a video-type application icon.

For a change form of the card 64, refer to related descriptions of the "schedule widget 63". For a manner in which the application generates the card 64 in each animation frame, refer to related descriptions of the "schedule widget 63".

4. Large folder.

The large folder may include an icon of at least one application, as shown in FIG. 6.

If an application icon included in the large folder on the second interface layout is referred to as a second icon, and an application icon included in the large folder on the first interface layout is referred to as a first icon, the information about the second interface layout may include an eighth position and a fourth size of the large folder 65 on the interface 2, and a tenth position and a sixth size of the second icon on the interface 2. The information about the first interface layout includes: a seventh position and a third size of the large folder 65 on the interface 1, and a ninth position and a fifth size of the first icon on the interface 1. The third size includes a third height H3 and a third width W3, the fourth size includes a fourth height H4 and a fourth width W4, the fifth size includes a fifth height H5 and a third width W5, and the sixth size includes a sixth height H6 and a sixth width W6.

In this way, the application may determine, based on the information about the first interface layout and the information about the second interface layout, that a change form of the large folder 65 is: a size changes, a position changes, and content included in the large folder 65 changes. Refer to FIG. 6. When the screen is unfolded from the folded state to the unfolded state, a size of the large folder 65 in the second interface layout increases, sizes of icons in the large folder 65 also increase, a position of the large folder 65 changes, and positions of the icons in the large folder 65 also change. In addition, content in the large folder 65 also changes. For example, a quantity of icons allowed to be placed in the large folder 65 changes from 4 to 9. As shown in a and b in FIG. 6, a quantity of icons of applications in the large folder 65 changes from 4 to 6. It should be understood that the quantity of icons allowed to be placed in the large folder 65 and changes of the quantity of icons in the large folder 65 in FIG. 6 are examples for description.

For a manner in which the application obtains the large folder 65 and displacements and sizes of the icons in the large folder 65, refer to related descriptions of the "settings application icon 61" and the "schedule widget 63". For a manner in which the application generates the large folder 65 in each animation frame and the icons in the large folder 65, refer to related descriptions of the "settings application icon 61" and the "schedule widget 63".

It should be noted that, different from the schedule widget 63, the schedule widget 63 only has a width change, while the large folder 65 and the icons in the large folder 65 not only have a width change, but also have a height change. When the screen changes from the first physical state to the second physical state, with a size change of the large folder 65 used as an example, the size change of the large folder 65 includes: a width change W4-W3 and a height change H4-H3. For a manner in which the application obtains the large folder 65 in each animation frame and widths of the icons in the large folder 65, and a manner in which the application generates the large folder 65 in each animation frame and the icons in the large folder 65, refer to related descriptions of the "schedule widget 63". For a manner in which the application obtains the large folder 65 in each animation frame and heights of the icons in the large folder 65, refer to a manner of obtaining the widths.

It should be noted that in a process in which the screen is unfolded from the folded state to the unfolded state, positions of the icons in the large folder 65 change in a divergent manner relative to a central position of the large folder 65. That is, as the unfolding angle of the screen increases, the positions of the icons in the large folder 65 are increasingly distant from the central position of the large folder 65. It can be figured out that in a process in which the screen is folded from the unfolded state to the folded state, the positions of the icons in the large folder 65 change in a convergent manner relative to the central position of the large folder 65. That is, as the unfolding angle of the screen decreases, the positions of the icons in the large folder 65 are increasingly close to the central position of the large folder 65.

Moreover, in addition to a change of the positions and the sizes, a change of the large folder 65 further includes a change of content. For example, the quantity of icons allowed to be placed in the large folder 65 changes from 4 to 9, and the quantity of icons of applications in the large folder 65 changes from 4 to 6.

In this embodiment, the application may take a screenshot of the icons in the large folder 65 on the first interface layout (for example, the interface 1 shown in a in FIG. 6), to obtain a first image. The first image includes four icons in the large folder 65 on the first interface layout. The application may take a screenshot of the icons in the large folder 65 on the second interface layout (for example, the interface 2 shown in b in FIG. 6), to obtain a second image. The second image includes six icons in the large folder 65 on the second interface layout.

In an embodiment, when the screen changes from the first physical state to the second physical state, the application may determine a transparency of the first image and a transparency of the second image in each animation frame in the first animation based on the first image, the second image, the quantity of frames of the first animation, and the dynamic-effect curve. For example, when the dynamic-effect curve is a straight line, a difference between transparencies of the first image in two adjacent animation frames is equal, and a difference between transparencies of the second image is also equal.

After the transparency of the first image and the transparency of the second image in each animation frame in the first animation are determined, the application may adjust the transparency of the first image and the transparency of the second image, to obtain a processed first image and a processed second image in each animation frame. For example, in a process in which the screen is unfolded from the folded state to the unfolded state, the application may process the first image as fade-out effect, that is, gradually increase the transparency of the first image, and the first image disappears when the screen is in the unfolded state. In addition, the application may process the second image as fade-in effect, that is, gradually reduce the transparency of the second image, and finally the transparency is 0. For this process, refer to related descriptions in FIG. 2.

It should be further noted that in this embodiment of this application, after obtaining the processed first image and second image in each animation frame, the application may align central positions of the processed first image and second image in each animation frame with a central position of the large folder in each animation frame, to avoid that the large folder 65 obtained through rendering does not overlap with the large folder 65 obtained through screenshot, resulting in ghosting.

For example, the screen is unfolded from the folded state to the unfolded state. The large folder 65 and the four icons in the large folder 65 with the screen in the folded state are shown in a in FIG. 9. As the unfolding angle of the screen increases, the size of the large folder 65 gradually increases, and icons included in the large folder 65 gradually increase, as shown in b and c in FIG. 9. When the screen is in the unfolded state, the large folder 65 and the six icons in the large folder 65 may be displayed on the screen.

5. Navigation bar and status bar.

As shown in FIG. 6, the interface includes a navigation bar 66 and a status bar 67. In an embodiment, the navigation bar 66 may not be displayed on the interface.

For a displacement manner of the navigation bar 66 and the status bar 67, refer to related descriptions of the "settings application icon 61". For a manner in which the application generates the navigation bar 66 and the status bar 67 in each animation frame, still refer to related descriptions of the "settings application icon 61".

In the manner shown in "the first aspect", the application may obtain elements in each animation frame in the first animation, and the application may synthesize the elements into one animation frame in a layer synthesizing manner, to obtain each animation frame. For example, for an animation frame, the layer synthesizing module may perform layer synthesizing on the rendered elements in the animation frame to obtain the animation frame. Based on a same processing manner, the application may obtain a plurality of consecutive animation frames, that is, the first animation.

For example, the layer synthesizing module performs layer synthesizing on each element in each animation frame shown in FIG. 7, FIG. 8, and FIG. 9, to obtain a plurality of animation frames shown in FIG. 10A to FIG. 10D. It should be understood that in addition to displaying the displacements of the settings application icon, FIG. 7 further shows other elements except the schedule widget 63 and the large folder 65. It should be understood that a in FIG. 10A shows the settings application icon 61 in an animation frame generated by the application and other elements except the schedule widget 63 and the large folder 65, b in FIG. 10B shows the schedule widget 63 in the animation frame generated by the application, c in FIG. 10C shows the large folder 65 generated by the application, and d in FIG. 10D shows the animation frame generated by the application.

In a second aspect, the second physical state is the intermediate state. For example, the screen changes from "the folded state, the unfolded state, or the intermediate state" to "another intermediate state".

A difference from the case in the foregoing "first aspect" lies in that a final unfolding angle of the screen is not 0° or 180°. That is, a final interface is not the interface 1 or the interface 2 shown in FIG. 6. The information about the second interface layout indicates that the screen is a layout in the unfolded state or the folded state. Therefore, when the second physical state is the intermediate state, the application needs to obtain information about a third interface layout based on the information about the second interface layout. The information about the third interface layout is layout information with the screen in the second physical state "intermediate state", so that a size of an interface for displaying content matches the unfolded state of the screen.

In an embodiment, because the display plays the first animation when the screen is fully unfolded or fully folded, and the second physical state is the "intermediate state", if the first animation is played, content in the first animation gradually occupies the whole screen, which does not match the unfolding angle of the screen. However, effect expected to be achieved in this application is as follows: As the unfolding angle of the screen gradually increases, the size of the interface for displaying content on the screen gradually increases, and the remaining part does not display the content. As the unfolding angle of the screen gradually decreases, the size of the interface for displaying content on the screen gradually decreases, and the remaining part does not display the content.

Therefore, to enable an animation played on the screen to match the unfolding angle of the screen so that the user can feel effect of gradually unfolding or folding the interface, in an embodiment, the application may obtain a proportion of the second angle of the screen in 180°, and then calculate a product of the quantity of frames of the first animation (referred to as a first quantity of frames) and the proportion to obtain a second frame quantity. The second frame quantity may be understood as a quantity of frames of an animation that needs to be played when the second physical state of the screen is the "intermediate state". In other words, the application may adaptively play some animation frames or all animation frames in the first animation based on an unfolding degree of the screen.

In this embodiment, after generating the first animation, the application may use a set of a first second frame quantity of animation frames as a second animation. In this way, the application may obtain an animation that needs to be played when the screen changes from the first physical state to the second physical state "intermediate state".

In an embodiment, in the foregoing example, the application needs to obtain the first animation, but only some of the animation frames are played, and no remaining animation frame is played. If the application draws and renders the remaining animation frames, a waste of resources may be caused. Therefore, in an embodiment, the application may generate the information about the third interface layout based on the second angle, the information about the first interface layout, and the information about the second interface layout. The information about the third interface layout represents an interface layout with the screen in the second physical state "intermediate state".

In this embodiment, the application may obtain a proportion of the second angle of the screen in 180°, and then obtain the information about the third interface layout based on the proportion and the information about the second interface layout.

In an embodiment, with reference to descriptions of the desktop icon, the desktop widget, the card, the large folder, the navigation bar, and the status bar, the application may obtain a displacement, a width change, a size change, and the like (which may be respectively referred to as a first displacement, a first width change, and a first size change) of each element based on the information about the first interface layout and the information about the second interface layout. The application may separately multiply the first displacement, the first width change, and the first size change of each element by the proportion. In this way, a second displacement, a second width change, and a second size change of each element on the interface may be obtained when the screen changes from the first physical state to the second physical state "intermediate state". Based on the information about the first interface layout, and the second displacement, the second width change, and the second size change of each element on the interface, the application may obtain a position, a size, and the like of each element on the third interface layout, that is, the information about the third interface layout.

An application icon is used as an example. The application may add a second displacement to a first position of an application icon in the information about the first interface layout, to obtain a third position of the application icon in the information about the third interface layout on the interface. For a width change and a size change, refer to descriptions about the displacement.

After obtaining the information about the third interface layout, the application may generate the second animation based on the information about the first interface layout, the information about the third interface layout, the quantity of frames of the first animation, and the dynamic-effect curve. For this process, refer to the process of generating the first animation.

For example, the screen is unfolded. The first physical state is the folded state, and the second physical state is the intermediate state (for example, the unfolding angle of the screen is 90°), and the first interface layout is an interface layout with the screen in the folded state, as shown in a in FIG. 11. The second interface layout is an interface layout with the screen in the unfolded state, as shown in c in FIG. 11. In this embodiment of this application, because the second physical state is the intermediate state, information about an interface layout corresponding to the second physical state "intermediate state" needs to be obtained. According to the foregoing descriptions, the information about the third interface layout may be obtained. The third interface layout is an interface layout with the unfolding angle of the screen to be 120°, as shown in b in FIG. 11. A size (width) of an interface 3 shown in b in FIG. 11 may be a size (width) obtained after a half of the interface 1 (for example, a half of the size of the interface 1) shown in a in FIG. 11 is added to the size (width) of the interface 1.

S510: Play the first animation.

After generating the first animation, the application may control the display to display the first animation, so that the first animation may be played in a process in which the screen is opened or closed.

In an embodiment, after generating the first animation, the application may send each animation frame in the first animation for display, so that a display driver drives the display to play the first animation.

In an embodiment, the application obtains one animation frame. For example, after performing layer synthesizing on elements in the animation frame to obtain one animation frame, the layer synthesizing module may store the animation frame in a buffer (buffer) of the layer synthesizing module. That the application sends each animation frame in the first animation for display may be understood as follows: The layer synthesizing module may store, in the buffer every 16.67 ms (for example, a refresh rate of the electronic device is 60 Hz), an animation frame obtained through layer synthesizing, and the display driver may obtain one animation frame from the buffer of the layer synthesizing module every 16.67 ms. After obtaining the animation frame, the display driver may drive the display to display the animation frame. In this way, the display may continuously display the animation frames in the first animation. That is, the display may play the first animation.

For example, the screen is unfolded from the folded state to the unfolded state. The screen shown in a in FIG. 12A is in the folded state, and a desktop is displayed on the interface 1. In a process in which the screen is gradually unfolded, the desktop may be displayed on the interface 3 based on an unfolding degree of the screen, as shown in b in FIG. 12A. Content may not be displayed on an area other than the interface 3 on the screen. For example, a black screen is displayed. Finally, when the screen is in the unfolded state, the desktop may be displayed on the interface 2, as shown in c in FIG. 12A. It should be understood that, as the screen is gradually unfolded, the size of the interface for displaying content gradually increases.

An interface shown in b in FIG. 12A is an example for description. b in FIG. 12A can represent that the size of the interface for displaying content gradually increases in a process in which the screen is unfolded, and a position, a size, and the like of an element on the interface change. It should be understood that in b in FIG. 12A, the content displayed on the screen should be displayed in accordance with the unfolding angle of the screen, as shown by effect in FIG. 12Bb to FIG. 12Be. Content on the interface shown in FIG. 12Ais different from content on the interface shown in FIG. 12Ba to FIG. 12Bf.

It may be understood that, for example, the screen is folded from the unfolded state to the folded state, interfaces displayed on the screen may be sequentially shown in d to a in FIG. 12A.

For example, the screen is unfolded from the folded state to the unfolded state. Refer to FIG. 12Ba to FIG. 12Bf. As the screen is gradually unfolded, the size of the interface for displaying content gradually increases, and a position, a size, and the like of an element on the interface change.

In the foregoing examples, an example in which the desktop is displayed on the screen is used. In FIG. 13A, FIG. 13Ba to FIG. 13Be, and FIG. 14, a memo application is used as an example, and a display process of the screen is described by using an example in which the screen is unfolded from the folded state to the unfolded state.

An interface 1 of a memo with the screen in the folded state is shown in a in FIG. 13A, and the interface 1 of the memo is an interface for displaying a memo list 141. In an embodiment, the interface 1 of the memo has an associated interface 2 of the memo, and the interface 2 of the memo is an interface for displaying any memo content in the memo list 141. In this example, in a process in which the screen is gradually unfolded, the size of the interface for displaying content is increasingly large, and the display gradually displays the interface 2 of the memo based on the interface 1 of the memo. That is, more content on the interface 2 of the memo is displayed, as shown in b in FIG. 13A. When the screen is fully unfolded to the unfolded state, the interface 2 of the memo may be completely displayed on the screen, as shown in c in FIG. 13A.

An interface shown in b in FIG. 13A is an example for description. b in FIG. 13A can represent that the size of the interface for displaying content gradually increases in a process in which the screen is unfolded, and the display gradually displays the interface 2 of the memo based on the interface 1 of the memo. It should be understood that in b in FIG. 13A, the content displayed on the screen should be displayed in accordance with an unfolding angle of the screen, as shown by effect in FIG. 13Bb to FIG. 13Bd. Content on the interface shown in FIG. 13A is different from content on the interface shown in FIG. 13Ba to FIG. 13Be.

For example, the screen is unfolded from the folded state to the unfolded state. Refer to FIG. 13Ba to FIG. 13Be. As the screen is gradually unfolded, the size of the interface for displaying content gradually increases, and the display gradually displays the interface 2 of the memo based on the interface 1 for displaying the memo. That is, more content on the interface 2 of the memo is displayed.

In an embodiment, the interface 1 of the memo does not have the associated interface 2 of the memo. For a display process of the screen, refer to the display process of the desktop on the screen. An interface 1 of the memo with the screen in the folded state is shown in a in FIG. 14. As an unfolding angle of the screen increases, elements on the interface 1 of the memo may be changed through translation, size broadening, and the like, as shown in b and c in FIG. 14.

It should be understood that in a case in which the interface 1 of the memo has an associated interface 2 of the memo, the information about the first interface layout may include information about a layout of the interface 2 of the memo. However, the interface 2 of the memo is in a hidden invisible state. That is, the interface 2 of the memo is not displayed on the screen. In a case in which the interface 1 of the memo does not have the associated interface 2 of the memo, the information about the first interface layout does not include the information about a layout of the interface 2 of the memo. In this embodiment, the memo application may determine, based on the information about the first interface layout, whether the interface 1 of the memo has the associated interface 2 of the memo, to determine content that needs to be displayed in the process of opening and closing the screen.

In an embodiment, the steps shown in FIG. 5A and FIG. 5B are optional steps, and the steps may be combined with each other. In an embodiment, the modules shown in FIG. 5A may also be combined, and the combined modules are configured to perform at least one step in FIG. 5A and FIG. 5B.

In this embodiment of this application, in a process in which the screen is unfolded or folded, a first animation may be generated and displayed. As the unfolding angle of the screen gradually increases, the size of the interface for displaying content gradually increases, relative positions of elements on the interface gradually increase, and sizes of the elements gradually increase. In addition, as the unfolding angle of the screen gradually decreases, the size of the interface for displaying content gradually decreases, the relative positions of the elements on the interface gradually decrease, and the sizes of the elements gradually decrease. In other words, in this embodiment of this application, in a process in which the screen is unfolded or folded, the screen may play an animation adapted to the unfolding angle of the screen, and content in the animation has good transition effect, so that user experience may be improved.

The foregoing embodiment describes a process in which the application generates the first animation and displays the first animation. When a desktop is displayed on the screen, not only elements on the desktop are displayed, but also a wallpaper is displayed. In an embodiment, a system application (a desktop application and a wallpaper application) may generate an element and a wallpaper in each animation frame based on the steps shown in FIG. 5A and FIG. 5B, so that in a process in which the screen changes from the first physical state to the second physical state, the wallpaper also needs to be adapted to the unfolding angle of the screen for display.

In an embodiment, the wallpaper application belongs to the system application. When the electronic device is powered on, the wallpaper application may register an angle listener with the system service module, but does not register an onpredraw listener. In this embodiment, the wallpaper application may perform the following steps shown in FIG. 15Ato FIG. 15C, to generate a wallpaper in each animation frame.

A process of generating a wallpaper by the wallpaper application is described below with reference to FIG. 15A to FIG. 15C. Refer to FIG. 15A to FIG. 15C. After S506, the wallpaper application may perform S506A to S508A. It should be understood that in FIG. 15A to FIG. 15C, the wallpaper application and the desktop application are distinguished.

S506A: The system service module sends a second listening message to the wallpaper application.

The second listening message includes a second angle, that is, the unfolding angle of the screen with the screen in the second physical state.

S507A: The wallpaper application obtains, based on the second angle, a second width of a second wallpaper with the screen in the second physical state.

In an embodiment, there is a mapping relationship between the unfolding angle of the screen and a width of a wallpaper displayed on the screen. In an embodiment, the wallpaper application obtains, based on the second angle and the mapping relationship, the second width of the second wallpaper with the screen in the second physical state.

In an embodiment, the wallpaper application may obtain, based on the second angle and a width of a preset wallpaper, the second width of the second wallpaper with the screen in the second physical state.

The preset wallpaper is a wallpaper with the screen in the unfolded state. As shown in FIG. 16A, description is provided by using an example in which the wallpaper is three circles in FIG. 16A. When the screen is in the folded state, the wallpaper application may clip a portion of wallpaper in the preset wallpaper that matches a size of an interface in the folded state for display. For example, the wallpaper application may use a center line (dotted line) of the preset wallpaper as a start point, and clip a same distance toward two sides, to obtain a wallpaper that matches a size of an interface in the folded state through clipping, as shown by a wallpaper in a dashed-line box in FIG. 16A. In an embodiment, the wallpaper application may alternatively be clipped by using a rightmost boundary or a leftmost boundary of the preset wallpaper as a start point. A clipping manner is not limited in this embodiment of this application. In the following embodiment, an example in which the center line of the preset wallpaper is a start point is used to describe how to clip the wallpaper toward two sides.

In an embodiment, there is a mapping relationship between the unfolding angle of the screen and a width of a wallpaper, and the wallpaper application may obtain a second width of the wallpaper based on the second angle and the mapping relationship. For example, in the mapping relationship, when the unfolding angle of the screen is 180°, the width of the wallpaper is W2. When the unfolding angle of the screen is 90°, the width of the wallpaper is W3. When the unfolding angle of the screen is 45°, the width of the wallpaper is W4. When the unfolding angle of the screen is 0°, the width of the wallpaper is W1. For example, when the second angle is 90°, the wallpaper application may determine, based on the mapping relationship, that the width of the wallpaper is W3.

In an embodiment, the wallpaper application may obtain a proportion of the second angle in 180°, and then obtain, based on the proportion and the width of the preset wallpaper, the second width of the second wallpaper with the screen in the second physical state. For example, the wallpaper application may use a product of the width of the preset wallpaper and the proportion as the second width.

S508A: The wallpaper application generates a wallpaper in each animation frame in a first animation frame based on the second width, a first width of a first wallpaper with the screen in the first physical state, and the preset wallpaper.

The wallpaper application may determine the quantity of frames of the first animation based on the play duration of the first animation and the refresh rate of the electronic device. Refer to related descriptions in the foregoing embodiment. The wallpaper application may obtain, based on the second width and the first width of the first wallpaper with the screen in the first physical state, a width difference of the wallpaper in a process in which the physical state of the screen changes. The wallpaper application may determine a width difference between wallpapers in two adjacent animation frames in the first animation based on the quantity of frames, the width difference, and the dynamic-effect curve of the first animation.

For example, the dynamic-effect curve is a straight line. That is, the width difference between wallpapers in two adjacent animation frames is equal. An example in which the screen is unfolded from the folded state to the unfolded state is used. a in FIG. 16B shows a wallpaper in a $1^{st}$ animation frame, that is, the first wallpaper with the screen in the first physical state. The wallpaper application may obtain a wallpaper in a $2^{nd}$ animation frame by clipping the preset wallpaper based on the first wallpaper and the width difference between wallpapers in two adjacent animation frames, as shown in b in FIG. 16B. The wallpaper application may obtain a wallpaper in a $3^{rd}$ animation frame by clipping the preset wallpaper based on the wallpaper in the $2^{nd}$ animation frame and the width difference between wallpapers in two adjacent animation frames, as shown in c in FIG. 16B. By analogy, when the screen is in the unfolded state, a wallpaper in a last animation frame may be the preset wallpaper, as shown in d in FIG. 16B.

It may be figured out that in a process in which the screen is folded, for example, the screen is folded from the unfolded state to the folded state, wallpapers on the screen may be sequentially shown in d to a in FIG. 16B.

Correspondingly, S509 may be replaced with S509C.

S509C: The desktop application generates an element in each animation frame in the first animation based on the information about the first interface layout and the information about the second interface layout.

For S509C, refer to related descriptions in S509.

In this embodiment of this application, after S508A, the method may further include the following steps.

S509A: The wallpaper application sends the wallpaper in each animation frame to the layer synthesizing module.

S510A: The desktop application sends the element in each animation frame to the layer synthesizing module.

S511A: The layer synthesizing module performs layer synthesizing on the element in each animation frame generated by the desktop application and the wallpaper in each animation frame generated by the wallpaper application, to obtain each animation frame in the first animation.

For example, for a process in which the layer synthesizing module performs layer synthesizing on the element in each animation frame and the wallpaper in each animation frame, refer to FIG. 16C.

S512A: The layer synthesizing module sends each animation frame in the first animation for display, so that the display driver drives the display to play the first animation.

For S512A, refer to related descriptions in S510.

Refer to a to c in FIG. 16D. An example in which the screen is unfolded from the folded state to the unfolded state is used. A desktop adapted to the unfolding angle may be displayed based on the unfolding angle of the screen. The desktop may include a wallpaper and elements on the desktop.

In an embodiment, the steps shown in FIG. 15A to FIG. 15C are optional steps, and the steps may be combined with each other. In an embodiment, the modules shown in FIG. 15A may also be combined, and the combined modules are configured to perform at least one step in FIG. 15A to FIG. 15C.

In this embodiment of this application, when the desktop is displayed on the screen, not only elements on the desktop may be displayed, but also the wallpaper on the desktop may be displayed. In addition, in a process in which the screen is unfolded or folded, an animation adapted to the unfolding angle of the screen may be generated, and content in the animation has good transition effect, so that user experience may be improved.

In an embodiment, the elements displayed on the screen may include a system element and an application element. It should be understood that when interfaces of different applications are displayed on the screen, a same system element may be displayed on the interface. For example, the system element includes a navigation bar and a status bar. The application element includes an element on an interface of an application. Different applications may display different elements on the interface of the application. In the foregoing embodiment, a solution in which the application generates elements (including the system element and the application element) displayed on the screen is described. In an embodiment, to reduce processing capacity and power consumption of the application, the system service module may generate the system element in each animation frame, and the application generates the application element in each animation frame, so that the system service module achieves a purpose of sharing processing capacity of the application.

In this embodiment, with reference to FIG. 17A to FIG. 17C, S509C in the foregoing embodiment may include the following steps.

S5091: The application determines, based on the information about the first interface layout, whether there is a system element that needs to be drawn by the system service module. If there is a system element that needs to be drawn by the system service module, S5092 is performed; or if there is no system element that needs to be drawn by the system service module, S5095 is performed.

It should be understood that in FIG. 17A to FIG. 17C, description is provided by using an example in which the application is the desktop application.

The application may detect, based on the information about the first interface layout, whether there is a system element that needs to be drawn by the system service module on the first interface layout. For example, with reference to a in FIG. 6, there is a system element on the first interface layout, such as the navigation bar 66 and the status bar 67.

In an embodiment, the application may not perform the determining step in S5091, but directly performs, based on the information about the first interface layout, S5092 when the information about the first interface layout indicates that there is a system element, and performs S5095 when the information about the first interface layout indicates that there is no system element.

S5092: The application sends an identifier of the system element, the play duration of the first animation, and the dynamic-effect curve to the system service module.

In an embodiment, the system service module may store the play duration of the first animation and the dynamic-effect curve. In this embodiment, S5092 may be replaced with: The application sends an identifier of the system element to the system service module.

In an embodiment, "the play duration of the first animation and the dynamic-effect curve" stored in the system service module may be preset in the system service module, or may be synchronized by the application to the system service module (for example, when registering a listener with the system service module, the application may synchronize the play duration of the first animation and the dynamic-effect curve to the system service module). This is not limited in this embodiment of this application.

In an embodiment, it may be preset that a system element in each animation frame is generated by the system service module, and an application element in each animation frame is generated by the application. Therefore, in a process in which the screen is opened or closed, S5091 and S5092 may not be performed. In addition, when the information about the first interface layout indicates that there is a system element, the system service module performs S5093. When the information about the first interface layout indicates that there is no system element, the system service module does not perform S5093. In this embodiment, the application performs S5094.

S5093: The system service module generates a system element in each animation frame in the first animation based on the information about the first interface layout and the information about the second interface layout.

For S5093, refer to related descriptions in S509. In an embodiment, the system service module may query a WMS to obtain the information about the first interface layout.

S5094: The application generates an application element in each animation frame in the first animation based on the information about the first interface layout and the information about the second interface layout.

Correspondingly, S510A and S511Amay be replaced with S5101Ato S5104A.

S5101A: The wallpaper application sends the wallpaper in each animation frame to the layer synthesizing module.

S5102A: The desktop application sends the application element in each animation frame to the layer synthesizing module.

S5103A: The system service module sends the system element in each animation frame to the layer synthesizing module.

S5104A: The layer synthesizing module performs layer synthesizing on the application element in each animation frame generated by the desktop application, the system element in each animation frame generated by the system service module, and the wallpaper in each animation frame generated by the wallpaper application, to obtain each animation frame in the first animation.

S512A: The layer synthesizing module sends each animation frame in the first animation for display, so that the display driver drives the display to play the first animation.

For example, a in FIG. 18A shows application elements in animation frames in the first animation generated by the desktop application, b in FIG. 18B shows system elements in animation frames in the first animation generated by the system service module, and c in FIG. 18C shows wallpapers in animation frames in the first animation generated by the wallpaper application. The layer synthesizing module may perform layer synthesizing on the application elements, the system elements, and the wallpapers in received animation frames in the first animation, to obtain the animation frames in the first animation, that is, obtain the first animation, as shown in d in FIG. 18D.

For example, the screen is unfolded from the folded state to the unfolded state. For display of the screen, refer to FIG. 16D.

S5095: The application generates an element in each animation frame in the first animation based on the information about the first interface layout and the information about the second interface layout.

It should be understood that S5095 is not shown in FIG. 17A to FIG. 17C. After the application performs S5095, S509A to S512A may be further performed in this embodiment of this application.

In an embodiment, the steps shown in FIG. 17A to FIG. 17C are optional steps, and the steps may be combined with each other. In an embodiment, the modules shown in FIG. 17A may also be combined, and the combined modules are configured to perform at least one step in FIG. 17A to FIG. 17C.

It should be understood that, when the wallpaper is not displayed on the screen, the wallpaper application may not perform a corresponding step.

In this embodiment of this application, the system service module generates the system element in each animation frame, and the application generates the application element in each animation frame, so that the system service module achieves a purpose of sharing processing capacity of the application, thereby reducing processing capacity and power consumption of the application, and improving a processing speed and response of the application.

Refer to FIG. 18A to FIG. 18D. The system elements, the application elements, and the wallpapers that are displayed on the screen are respectively generated by the system service module, the desktop application, and the wallpaper application. In an embodiment, generation speeds of the system service module, the desktop application, and the wallpaper application are different. If the system service module, the desktop application, and the wallpaper application send the elements and the wallpapers in the animation frames to the display for display after generating the elements and wallpapers, a phenomenon that elements in different animation frames overlap occurs, and content in the first animation has poor transition effect. To avoid such a problem, in this embodiment of this application, the system service module may indicate the system service module, the desktop application, and the wallpaper application to simultaneously prepare to respectively generate the system elements, the application elements, and the wallpapers, and then indicate to simultaneously perform layer synthesizing on the system elements, the application elements, and the wallpapers and send the system elements, the application elements, and the wallpapers for display, thereby ensuring accuracy of each animation frame.

In this embodiment, when the application registers a listener with the system service module, the listener may further include an onConfigurationChanged listener and an onstagechange listener.

The onConfigurationChanged listener is configured for the system service module to send a third listening message to the desktop application and the wallpaper application in response to a change of the physical state of the screen. The third listening message indicates the desktop application and the wallpaper application to respectively start to generate the application elements and the wallpapers in the animation frames. The onstagechange listener is configured for the system service module to send a fourth listening message to the desktop application and the wallpaper application in response to the system service module, the desktop application, and the wallpaper application respectively generating the system elements, the application elements, and the wallpapers in the animation frames. The fourth listening message indicates the desktop application and the wallpaper application to respectively perform layer synthesizing on the application elements and the wallpapers in the animation frames and send the application elements and the wallpapers for display.

Refer to FIG. 19A to FIG. 19C. In an embodiment, S508 may be replaced with S508B, and S506A may be replaced with S509B.

S508B: The system service module sends a first listening message and the third listening message to the desktop application.

In an embodiment, the first listening message and the third listening message may be sent simultaneously or not simultaneously, or the system service module may combine the first listening message and the third listening message into one listening message for sending.

S509B: The system service module sends a second listening message and the third listening message to the wallpaper application.

It should be understood that S508B and S509B are not distinguished in a sequence, and may be simultaneously performed.

In an embodiment, the second listening message and the third listening message may be sent simultaneously or not simultaneously, or the system service module may combine the second listening message and the third listening message into one listening message for sending.

It should be noted that after S508B and S509B are performed, the system service module may perform a screen freezing operation. The screen freezing operation may be understood as that the system service module indicates the display to wait, and the display does not display an interface.

After S508B and S509B, the system service module may perform S5093 to generate the system element in each animation frame. The desktop application performs S5091, S5092 and S5094, to generate the application element in each animation frame. The wallpaper application performs S507A and S508A to generate the wallpaper in each animation frame.

After generating the application element in each animation frame, the desktop application may perform S510B, and after generating the wallpaper in each animation frame, the wallpaper application may perform S511B.

S510B: The desktop application feeds back a first response message to the system service module.

The first response message indicates that the desktop application has generated the application element in each animation frame.

S511B: The wallpaper application feeds back a second response message to the system service module.

The second response message indicates that the wallpaper application has generated the wallpaper in each animation frame.

In an embodiment, S510B and S511B are optional steps.

In an embodiment, after the system service module performs S508B and S509B, if the system service module does not receive, within preset duration, a message indicating that "generating the animation frame" fails from the desktop application and the wallpaper application, the system service module may determine that the desktop application has generated the application element in each animation frame, and the wallpaper application has generated the wallpaper in each animation frame. In this embodiment of this application, a manner in which the wallpaper application, the desktop application, and the system service module exchange "the wallpaper and the application element in each animation frame have been generated" is not limited.

S512B: The system service module sends the fourth listening message to the desktop application in response to the first response message.

S513B: The system service module sends the fourth listening message to the wallpaper application in response to the second response message.

It should be understood that S512B and S513B are not distinguished in a sequence, and may be simultaneously performed.

After S512B and S513B, the system service module may perform a screen unfreezing operation. The screen unfreezing operation may be understood as that the system service module indicates the display to display an interface.

After S512B and S513B, S5101A to S5104A and S512A may be further performed.

In an embodiment, the steps shown in FIG. 19A to FIG. 19C are optional steps, and the steps may be combined with each other. In an embodiment, the modules shown in FIG. 19A may also be combined, and the combined modules are configured to perform at least one step in FIG. 19A to FIG. 19C.

In an embodiment, in a process of generating and displaying the first animation, for a process in which the system service module performs the screen freezing operation and the screen unfreezing operation, refer to FIG. 20. Refer to FIG. 20. For example, "Start" refers to before the screen is opened or closed, and "End" refers to after the screen displays the first animation. A user may trigger the screen to be folded or unfolded, and the system service module detects that a physical form of the screen changes, and may notify the application (for example, the system application and/or the third-party application) to generate the application element and the wallpaper (if any) in the animation frame. For a manner in which the system service module detects that the physical form of the screen changes, refer to descriptions in S503 to S505. For a manner in which the system service module notifies the application to generate the application element and the wallpaper in the animation frame, refer to descriptions in S508B and S509B.

In an embodiment, the system service module may perform the screen freezing operation when or after notifying the application to generate the application element and the wallpaper in the animation frame. In an embodiment, if the system service module generates the system element in the animation frame, the system element in the animation frame is generated when or after the system service module performs the screen freezing operation. In response to that the application has generated the application element and the wallpaper in the animation frame and that the system service module has also generated the system element in the animation frame, the system service module may perform the screen unfreezing operation and notify the application to start the application element and the wallpaper, and the system service module also starts the system element, so that the display can display the first animation. For a manner in which the system service module detects that the application has generated the application element and the wallpaper in the animation frame, refer to descriptions in S510B and S511B. For a manner in which the system service module notifies the application to start the application element and the wallpaper, refer to descriptions in S512B and S513B.

It should be understood that, that the system service module starts the system element in FIG. 20 may be understood as that the system service module sends the system element in each animation frame to the layer synthesizing module. That the application starts the application element in FIG. 20 may be understood as that the application sends the application element and the wallpaper in each animation frame to the layer synthesizing module.

In an embodiment, if an interface of the third-party application is displayed on the screen, for an action performed by the third-party application, refer to the desktop application. In this embodiment, an action related to the wallpaper application is not included.

In this embodiment of this application, the system service module may indicate the system service module, the desktop application, and the wallpaper application to simultaneously prepare to respectively generate the system element, the application element, and the wallpaper, and then indicate to simultaneously perform layer synthesizing on the system element and the application element and send the system element and the application element for display. This can avoid appearance of elements and wallpapers from different animation frames in one animation frame, thereby ensuring accuracy of each animation frame.

Refer to FIG. 21. When the screen is in the first physical state (the folded state), an interface of at least one application (for example, two applications) may be displayed on the screen. In this way, when the screen changes from the first physical state (the folded state) to the second physical state (the unfolded state), and when the screen is in the second physical state (the unfolded state), the interface of the at least one application (for example, two applications) may also be displayed on the screen. In a process in which the screen is unfolded, the electronic device may also generate an animation based on the information about the first interface layout in a portrait orientation and the information about the second interface layout in a landscape orientation, to play the animation when the physical state of the screen changes. For details, refer to related descriptions in the foregoing embodiments.

For example, refer to a in FIG. 21. When the screen is in the first physical state (the folded state), the screen is divided into two interfaces: an upper interface and a lower interface. An interface a is an interface of an application 1, and an interface b is an interface of an application 2. When the screen changes from the first physical state (the portrait orientation) to the second physical state (the horizontal orientation), with reference to b in FIG. 21, the screen is divided into two interfaces: a left interface and a right interface. An interface c is an interface of the application 1, and an interface d is an interface of the application 2. In an embodiment, the interface a may be referred to as a first interface layout of the application 1, the interface c may be referred to as a second interface layout of the application 1, and the application 1 may generate an animation based on information about the first interface layout and information about the second interface layout. Similarly, the interface b may be referred to as a first interface layout of the application 2, the interface d may be referred to as a second interface layout of the application 2, and the application 2 may generate an animation based on information about the first interface layout and information about the second interface layout. In a process in which the screen changes from the first physical state (the portrait orientation) to the second physical state (the horizontal orientation), the screen may play an animation generated by the application 1 and an animation generated by the application 2.

It should be understood that interfaces (upper, lower, left, or right) occupied by different applications in FIG. 21 are used as an example for description. Interfaces of the application a and the application b may alternatively overlap, or the application a and the application b on the screen may not completely occupy the screen, and an interface of a desktop or another application may be displayed at an unoccupied position on the screen. A manner of displaying interfaces of a plurality of applications on the screen is not limited in embodiments of this application.

In the foregoing embodiments, a display method provided in embodiments of this application is described by using modules in an electronic device as execution bodies. In an embodiment, an electronic device is used as an execution body. Refer to FIG. 22. A display method provided in this embodiment of this application may include the following steps.

S2201: Display a first interface when a screen of the electronic device is in a first physical state.

For example, the first interface may be shown in FIG. 12Ba.

S2202: Play a first animation in a process in which the screen changes from the first physical state to a second physical state, where a size of a screen occupied by an animation frame in the first animation is related to an unfolding angle of the screen.

A larger unfolding angle of the screen indicates a larger size of the screen occupied by the animation frame in the first animation, and a smaller unfolding angle of the screen indicates a smaller size of the screen occupied by the animation frame in the first animation. In a process in which the screen is unfolded, a size of the screen occupied by the animation frame in the first animation gradually increases, and in a process in which the screen is folded, a size of the screen occupied by the animation frame in the first animation gradually decreases.

For example, the animation frame in the first animation may be shown in FIG. 12Bb to FIG. 12Be.

S2203: Display a second interface when the screen is in the second physical state, where the second interface is a last animation frame in the first animation.

For example, the first interface may be shown in FIG. 12Bf.

It should be understood that S2201 to S2203 are not shown in the figure.

It should be noted that the modules or components in the foregoing embodiments may be configured as one or more integrated circuits for implementing the foregoing methods, for example, one or more application-specific integrated circuits (application-specific integrated circuit, ASIC), one or more microprocessors (digital signal processor, DSP), or one or more field programmable gate arrays (field programmable gate array, FPGA). For another example, when one of the foregoing modules is implemented in a form of a processing element scheduling program code, the processing element may be a general-purpose processor, for example, a central processing unit (central processing unit, CPU) or another processor, such as a controller, that may invoke the program code. For another example, the modules may be integrated and implemented in a form of a system-on-a-chip (system-on-a-chip, SOC).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

The term "a plurality of in this specification means two or more. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects. In the formula, the character "/" indicates a "division" relationship between the associated objects. In addition, it should be understood that in description of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

**1.** A display method for an electronic device with a flexible screen, comprising:

displaying a first interface when a screen of the electronic device is in a first physical state;
playing a first animation in a process in which the screen changes from the first physical state to a second physical state, wherein a size of an animation frame in the first animation is related to an unfolding angle of the screen; and
displaying a second interface when the screen is in the second physical state, wherein the second interface is a last animation frame in the first animation.

**2.** The method according to claim 1, wherein the method further comprises:
generating the first animation in response to that the screen changes from the first physical state to the second physical state.

**3.** The method according to claim 2, wherein the generating the first animation comprises:
generating the first animation based on information about a first interface layout of the first interface and information about a second interface layout of the second interface.

**4.** The method according to claim 3, wherein the generating the first animation based on information about a first interface layout of the first interface and information about a second interface layout of the second interface comprises:

obtaining change forms of elements on an interface based on the information about the first interface layout of the first interface and the information about the second interface layout of the second interface; and
generating the first animation based on the change forms of the elements, and play duration and a dynamic-effect curve of the first animation.

**5.** The method according to claim 4, wherein the elements comprise at least one of the following: a wallpaper, an application icon, text, a picture, a folder, a card, a desktop widget, a navigation bar, a status bar, and a widget (widget).

**6.** The method according to claim 5, wherein the change forms of the elements comprise at least one of the following: a position changes, a size changes, and content changes.

**7.** The method according to any one of claims 1 to 6, wherein the screen may be any one of the following:

an outward-folding screen, an inward-folding screen, and a scroll screen.

**8.** The method according to claim 7, wherein when the screen is the outward-folding screen or the inward-folding screen, the first physical state is any one of the following: a folded state, an intermediate state, or an unfolded state, wherein the intermediate state is a state between the folded state and the unfolded state;

when the first physical state is the folded state, the second physical state is the intermediate state or the unfolded state;
when the first physical state is the unfolded state, the second physical state is the intermediate state or the folded state; and
when the first physical state is the intermediate state, the second physical state is the unfolded state, the folded state, or another intermediate state.

**9.** An electronic device, comprising a processor and a memory, wherein

the memory stores computer instructions; and
the processor executes the computer instructions stored in the memory, so that the processor performs the method according to any one of claims 1 to 8.

**10.** A computer-readable storage medium, wherein the computer-readable storage medium stores a computer program or instructions, and when the computer program or the instructions are run, the method according to any one of claims 1 to 8 is implemented.

**11.** A computer program product, comprising a computer program or instructions, wherein when the computer program or the instructions are executed by a processor, the method according to any one of claims 1 to 8 is implemented.

**12.** A program product, wherein the program product comprises a computer program, the computer program is stored in a readable storage medium, at least one processor of a communication apparatus may read the computer program from the readable storage medium, and the at least one processor executes the computer program, so that the communication apparatus implements the method according to any one of claims 1 to 8.

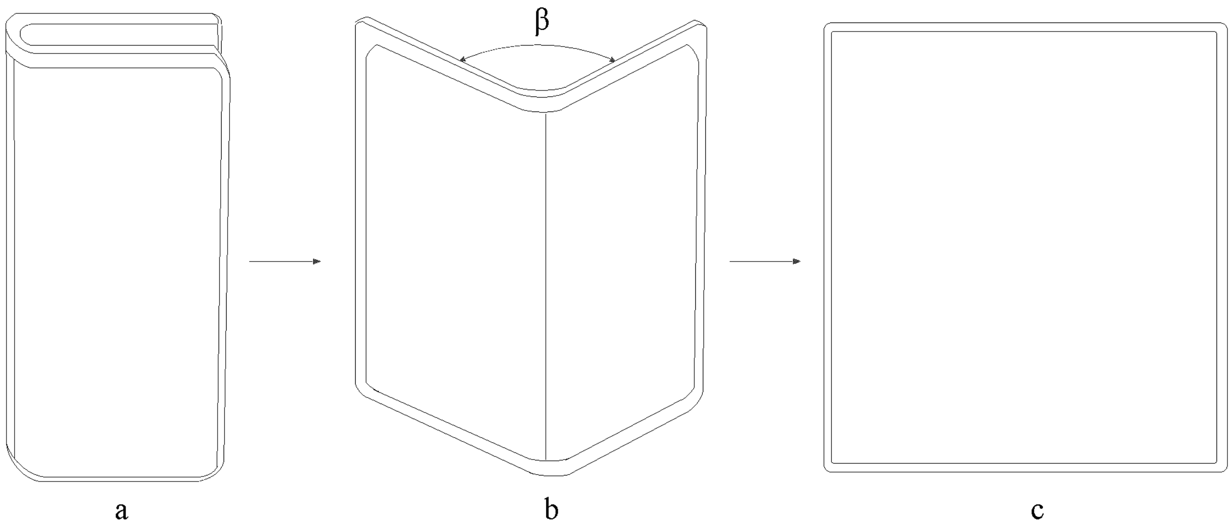
β
a
b
c

FIG. 1

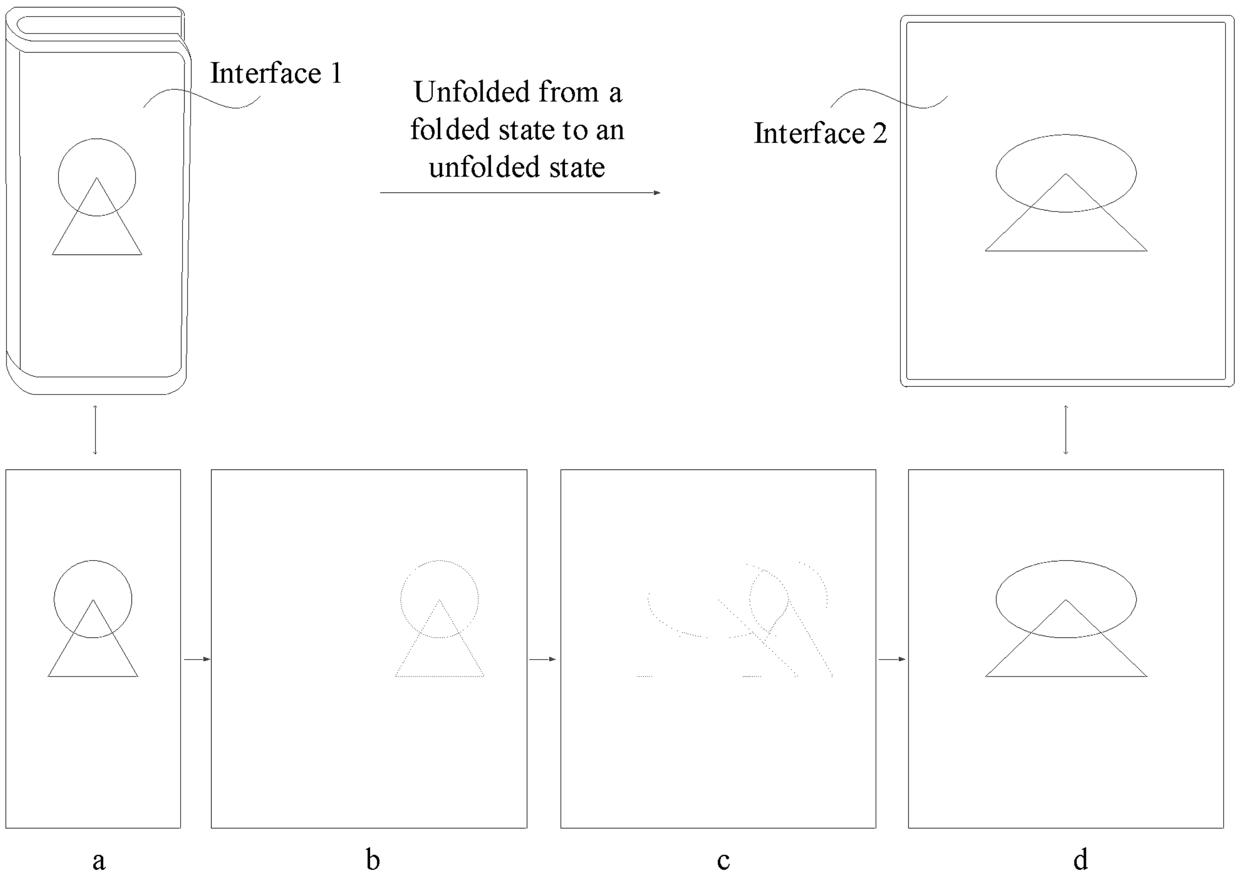
Interface 1
Unfolded from a folded state to an unfolded state
Interface 2
a
b
c
d

FIG. 2

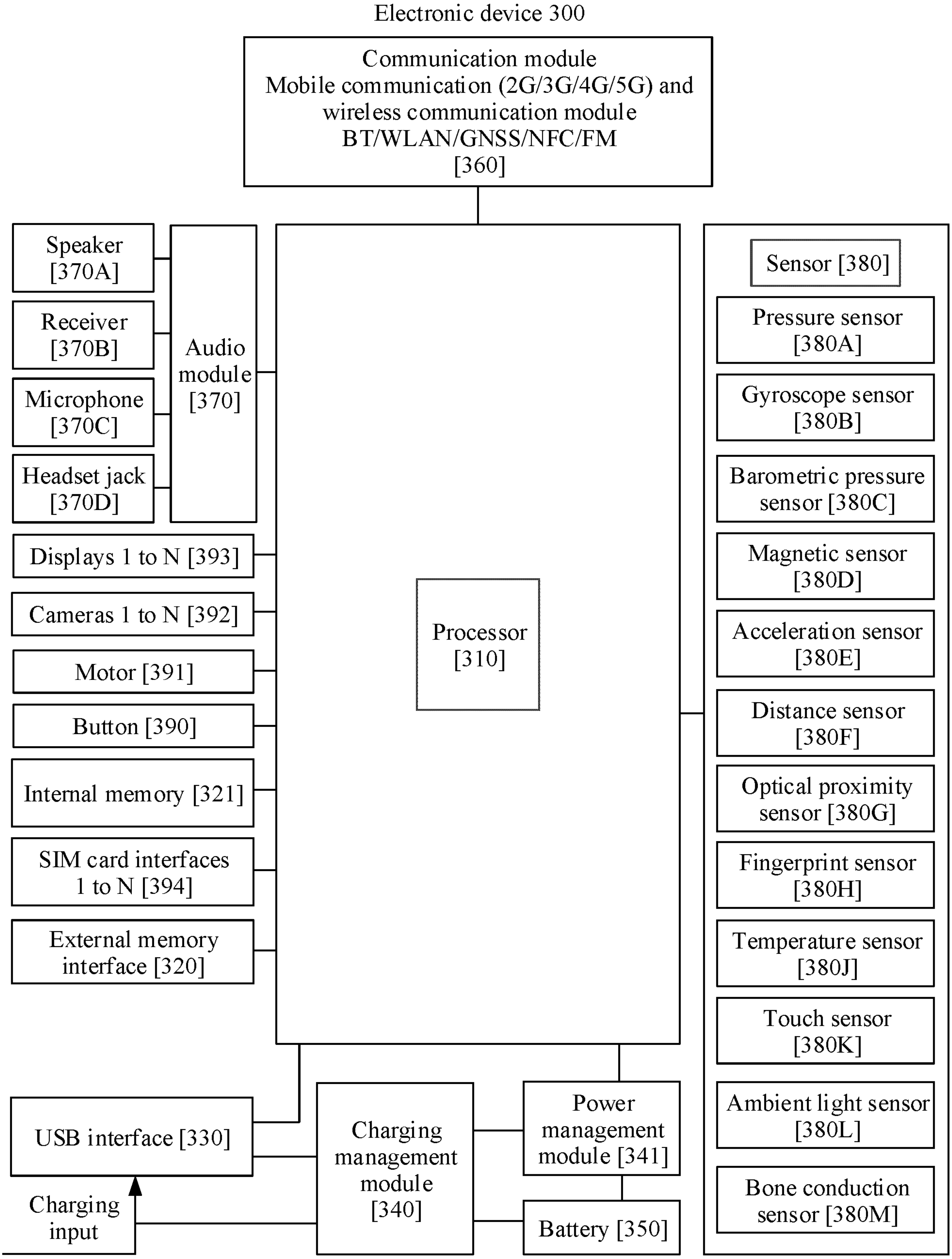
Electronic device 300
Communication module
Mobile communication (2G/3G/4G/5G) and
wireless communication module
BT/WLAN/GNSS/NFC/FM
[360]
Speaker
[370A]
Receiver
[370B]
Microphone
[370C]
Headset jack
[370D]
Audio
module
[370]
Displays 1 to N [393]
Cameras 1 to N [392]
Motor [391]
Button [390]
Internal memory [321]
SIM card interfaces
1 to N [394]
External memory
interface [320]
Processor
[310]
Sensor [380]
Pressure sensor
[380A]
Gyroscope sensor
[380B]
Barometric pressure
sensor [380C]
Magnetic sensor
[380D]
Acceleration sensor
[380E]
Distance sensor
[380F]
Optical proximity
sensor [380G]
Fingerprint sensor
[380H]
Temperature sensor
[380J]
Touch sensor
[380K]
Ambient light sensor
[380L]
Bone conduction
sensor [380M]
USB interface [330]
Charging
input
Charging
management
module
[340]
Power
management
module [341]
Battery [350]

FIG. 3

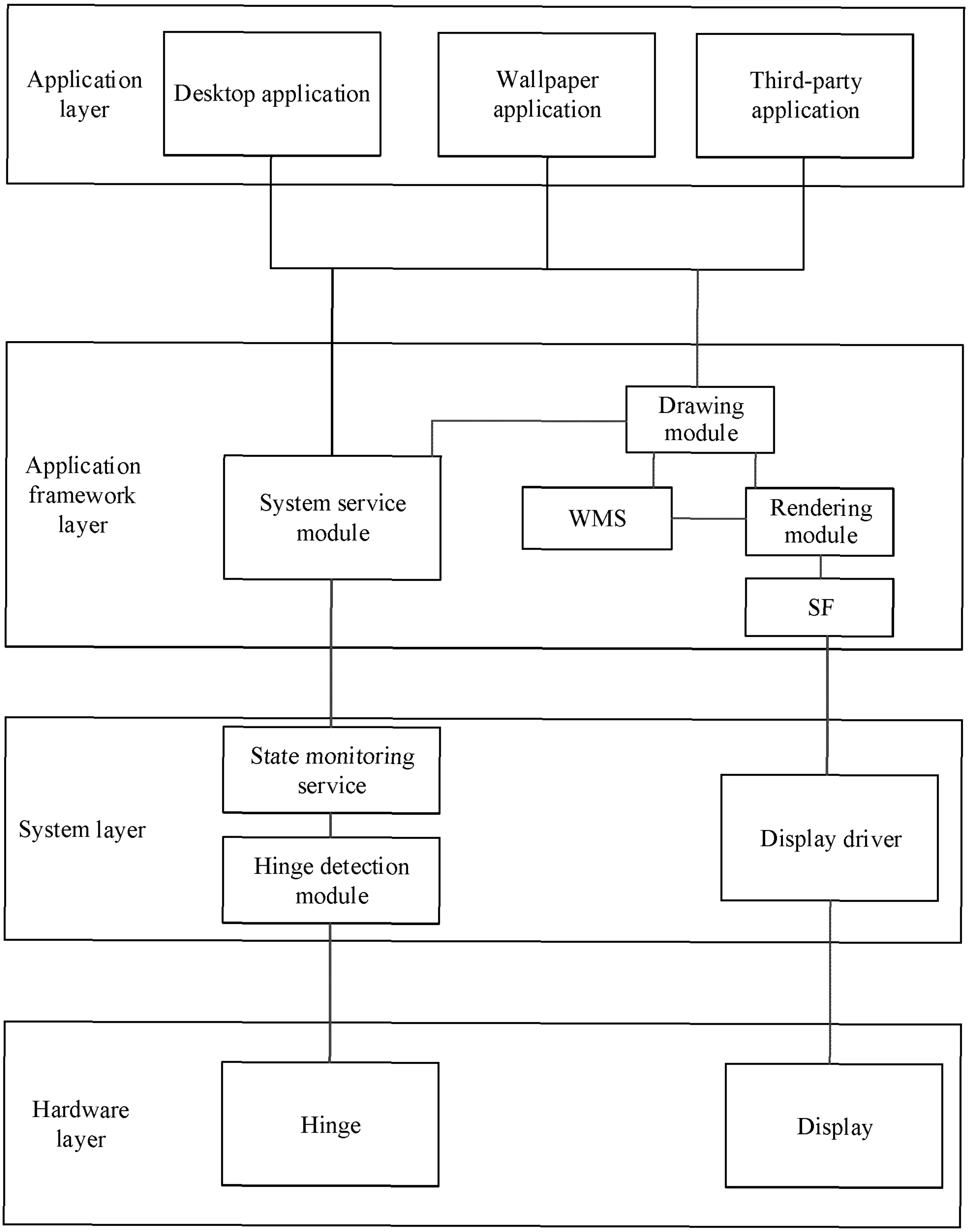
Application layer
Desktop application
Wallpaper application
Third-party application
Application framework layer
Drawing module
System service module
WMS
Rendering module
SF
System layer
State monitoring service
Hinge detection module
Display driver
Hardware layer
Hinge
Display

FIG. 4

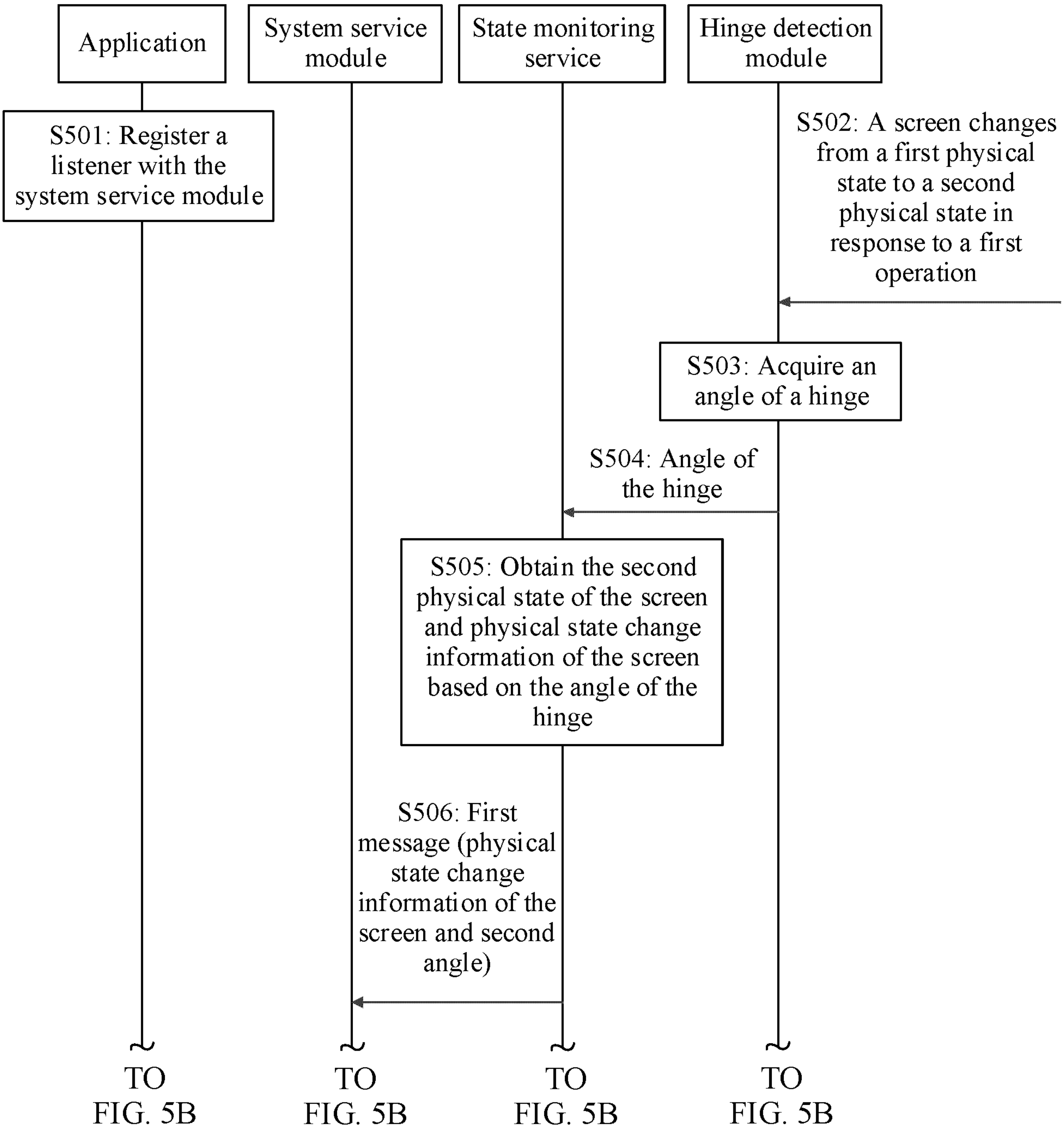
Application
System service module
State monitoring service
Hinge detection module
S501: Register a listener with the system service module
S502: A screen changes from a first physical state to a second physical state in response to a first operation
S503: Acquire an angle of a hinge
S504: Angle of the hinge
S505: Obtain the second physical state of the screen and physical state change information of the screen based on the angle of the hinge
S506: First message (physical state change information of the screen and second angle)
TO FIG. 5B
TO FIG. 5B
TO FIG. 5B
TO FIG. 5B

FIG. 5A

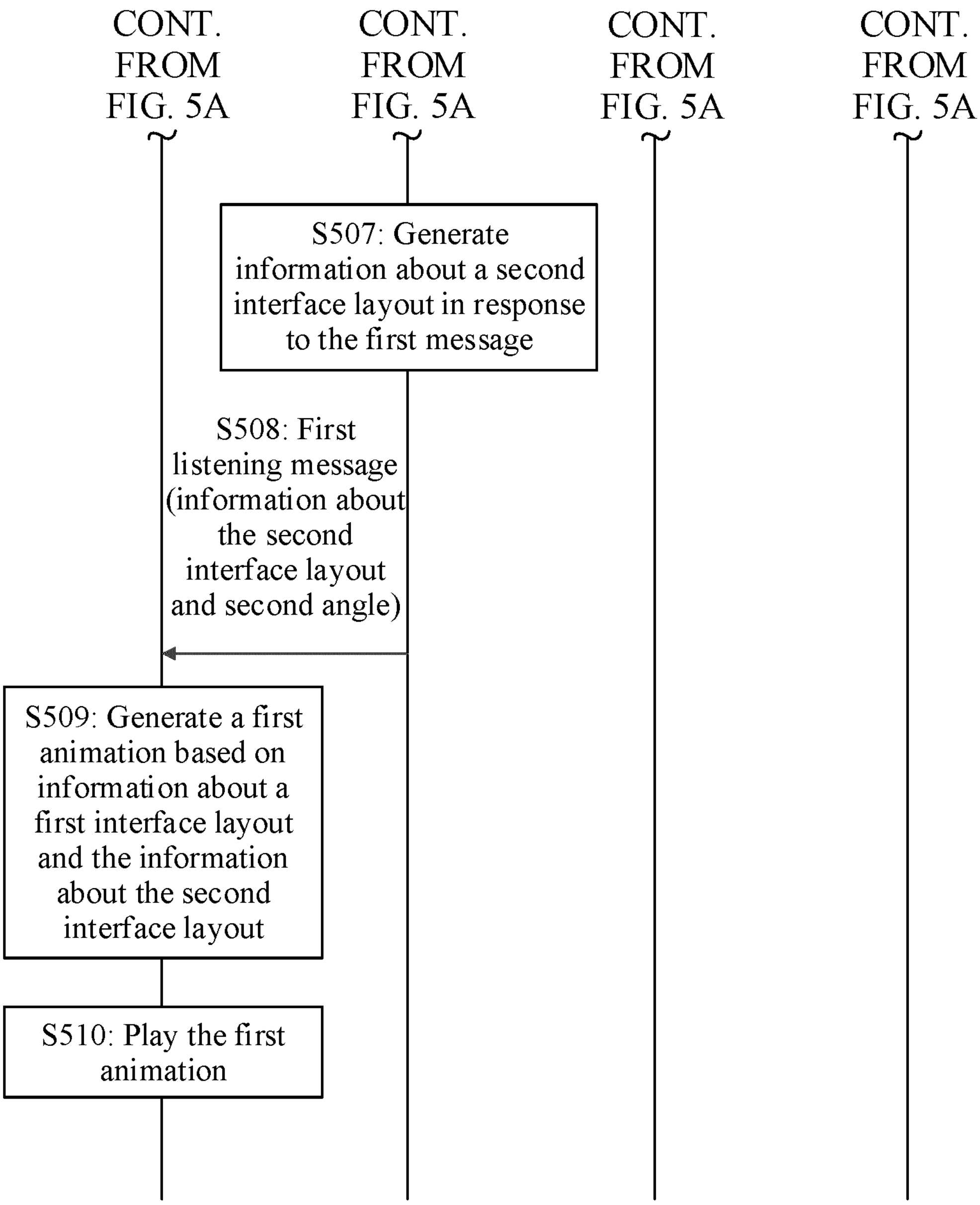
CONT. FROM FIG. 5A
CONT. FROM FIG. 5A
CONT. FROM FIG. 5A
CONT. FROM FIG. 5A
S507: Generate information about a second interface layout in response to the first message
S508: First listening message (information about the second interface layout and second angle)
S509: Generate a first animation based on information about a first interface layout and the information about the second interface layout
S510: Play the first animation

FIG. 5B

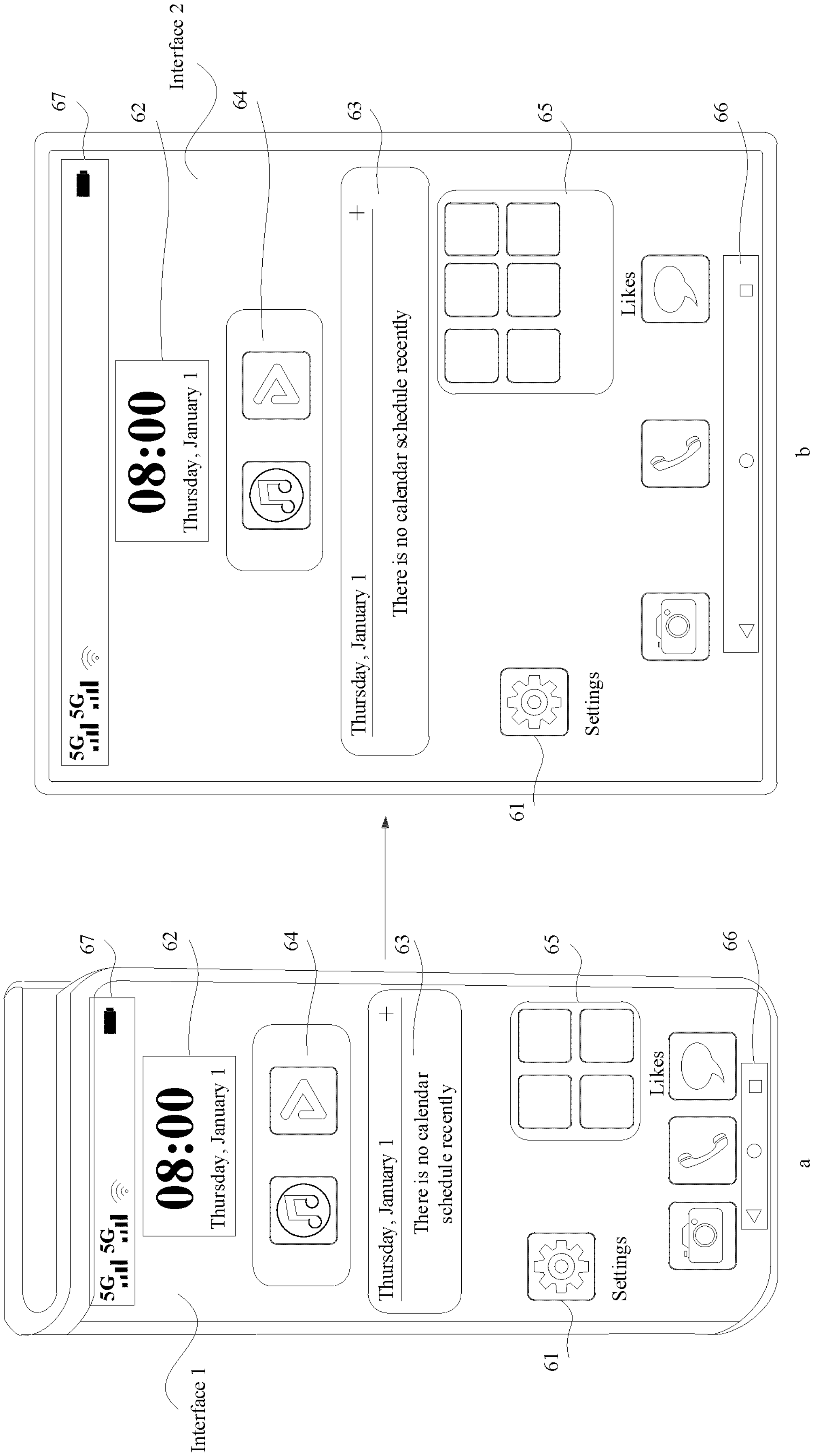
Interface 1
67
62
64
63
65
66
61
5G
5G
08:00
Thursday, January 1
Thursday, January 1
There is no calendar schedule recently
Settings
Likes
a
Interface 2
67
62
64
63
65
66
61
5G
5G
08:00
Thursday, January 1
Thursday, January 1
There is no calendar schedule recently
Settings
Likes
b

FIG. 6

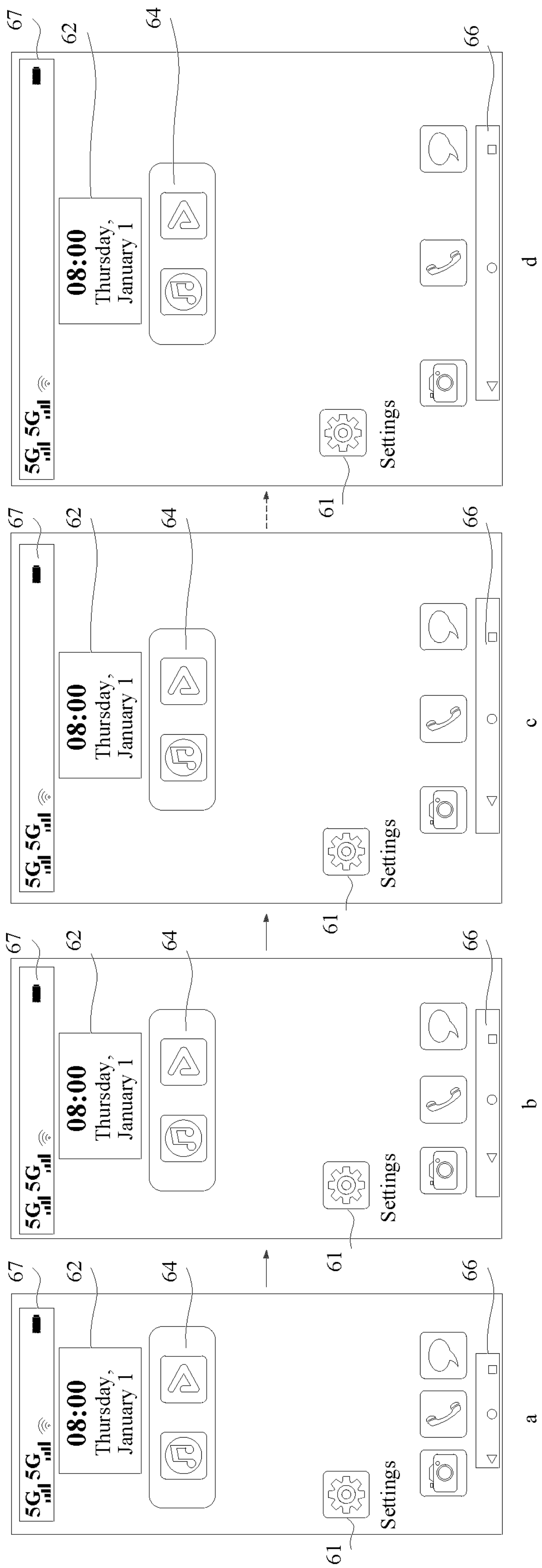


FIG. 7

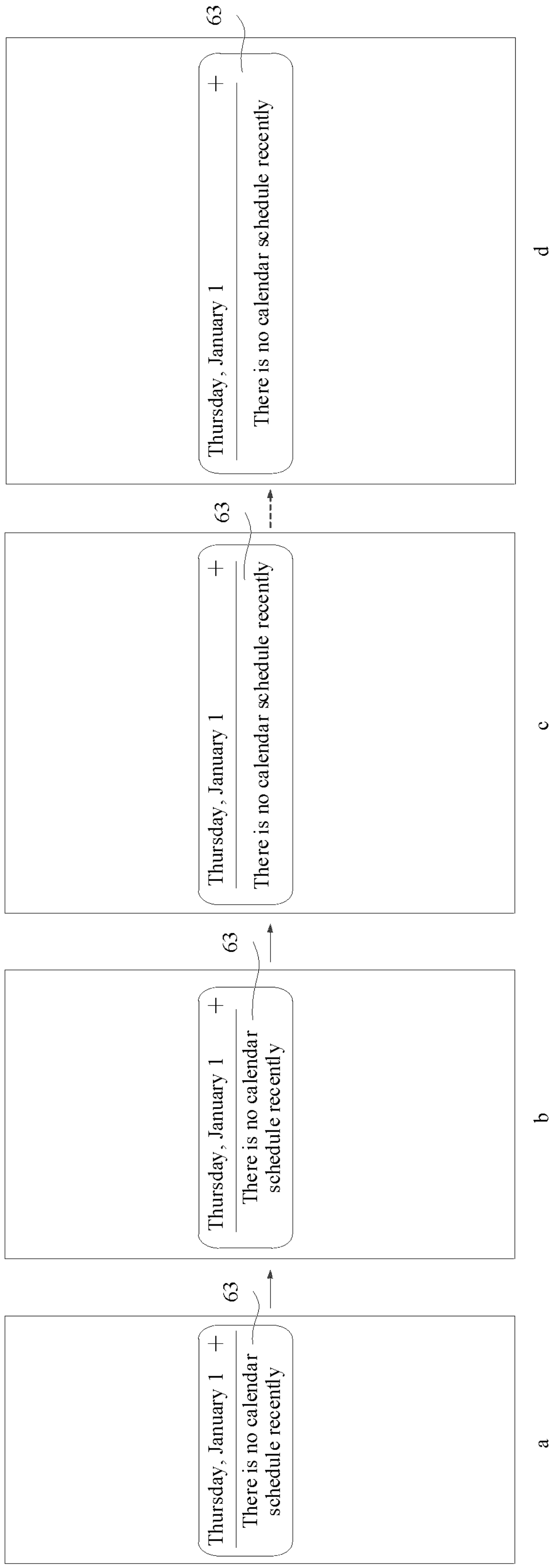
Thursday, January 1
There is no calendar schedule recently
63
a
b
c
d

FIG. 8

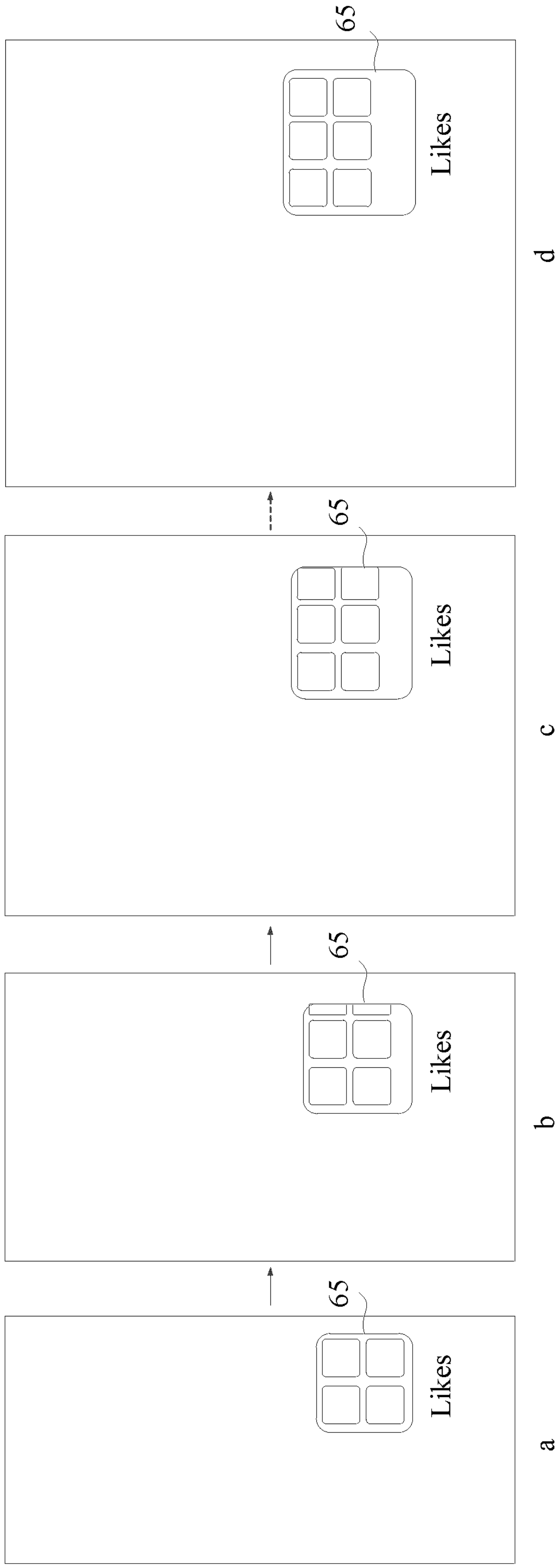


FIG. 9

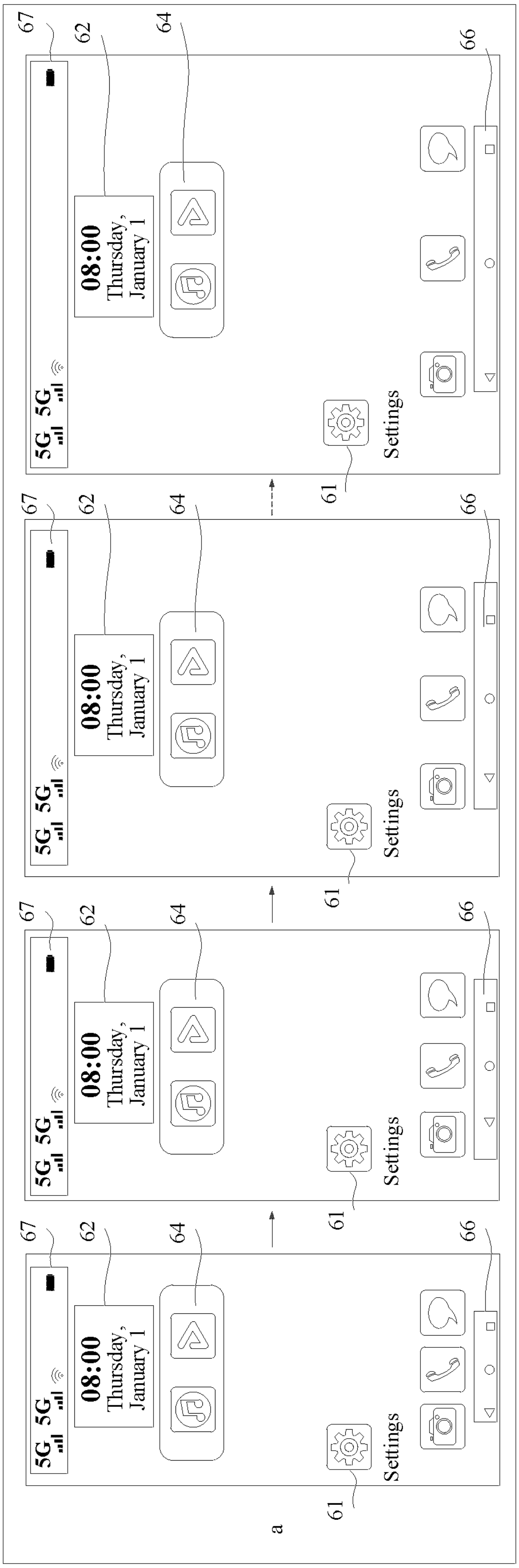


FIG. 10A

TO
FIG. 10B

CONT. FROM FIG. 10A

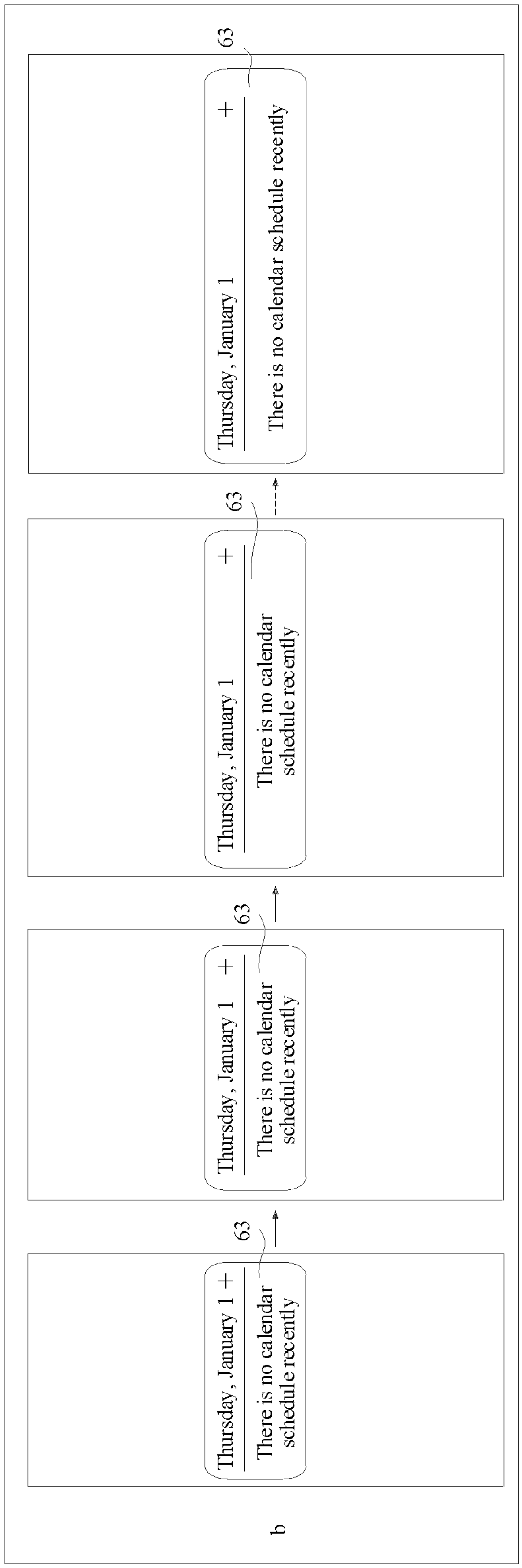


TO FIG. 10C

FIG. 10B

CONT. FROM FIG. 10B

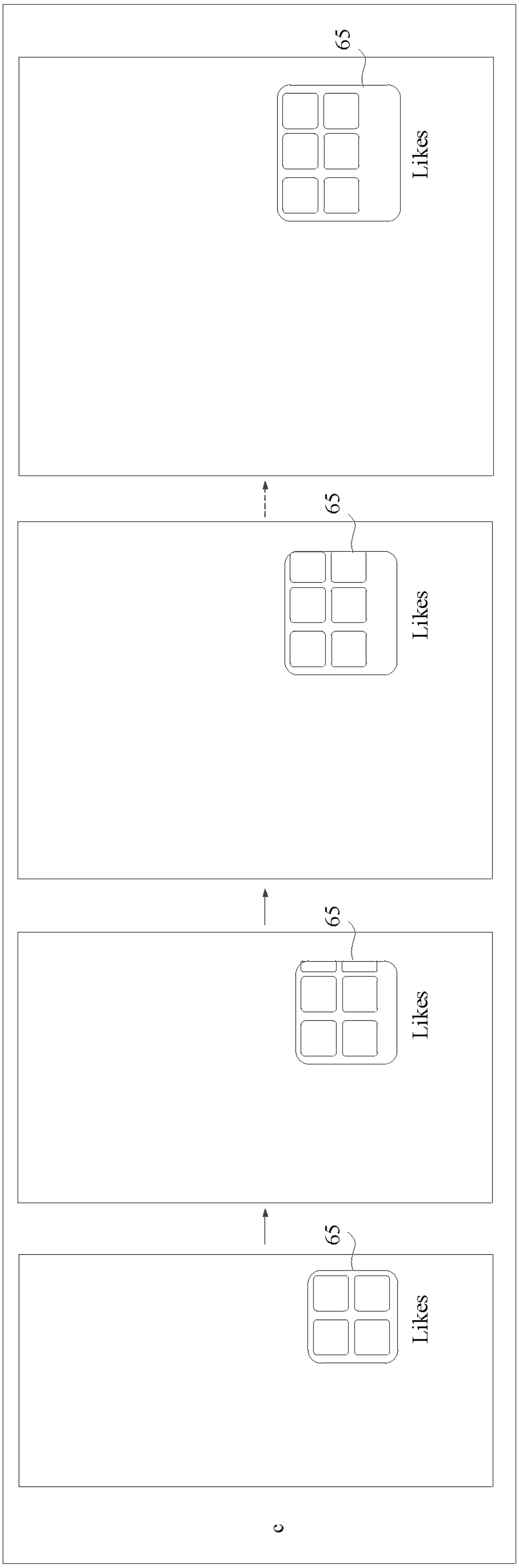


TO FIG. 10D

FIG. 10C

CONT. FROM FIG. 10C

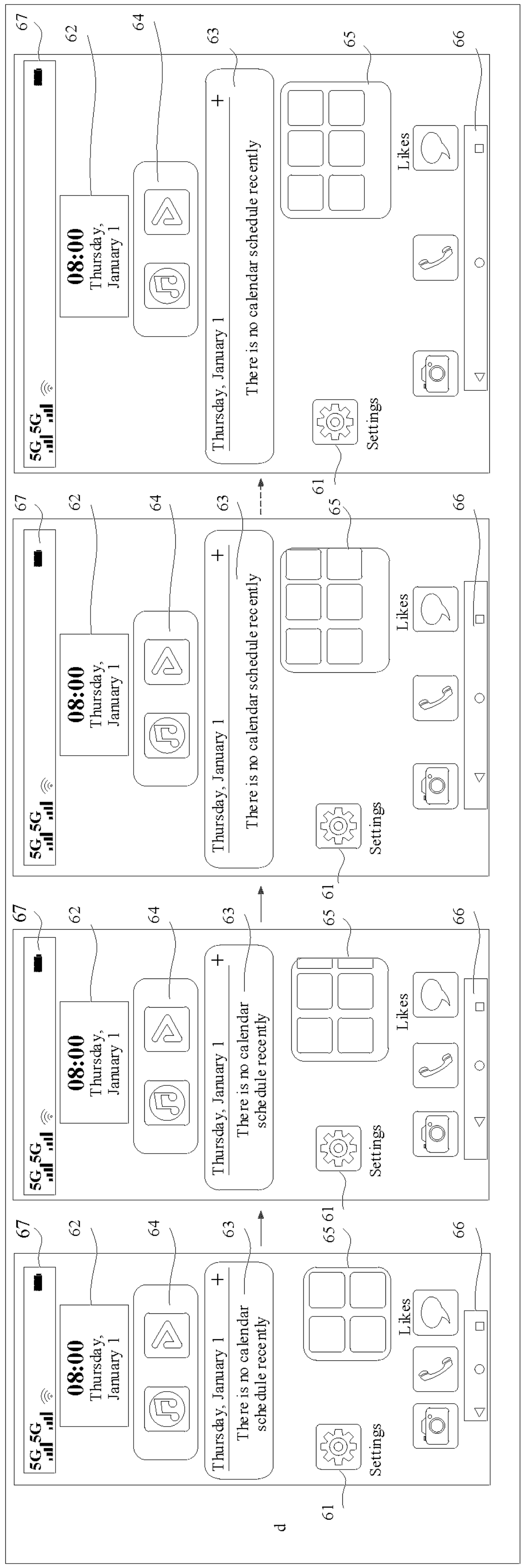


FIG. 10D

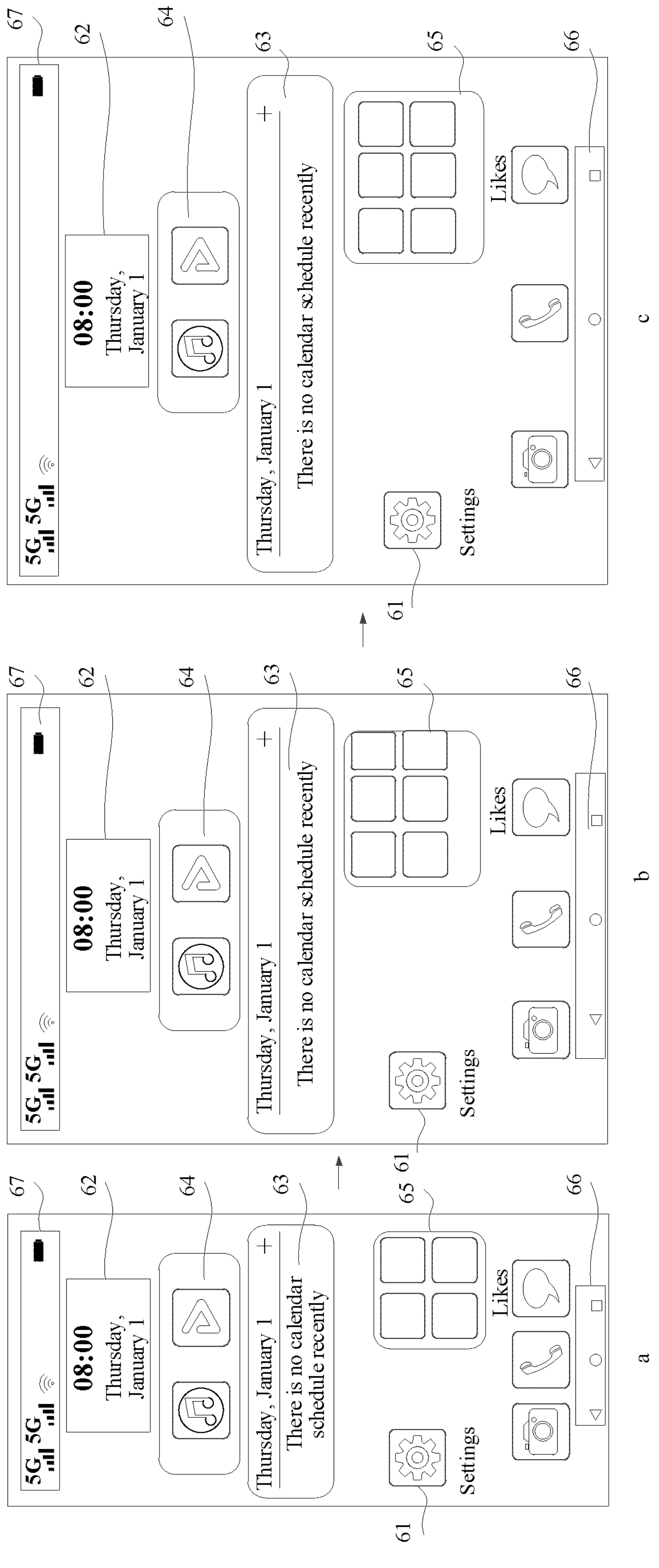
a
b
c
5G 5G
08:00
Thursday, January 1
Thursday, January 1
There is no calendar schedule recently
Settings
Likes
61
62
63
64
65
66
67

FIG. 11

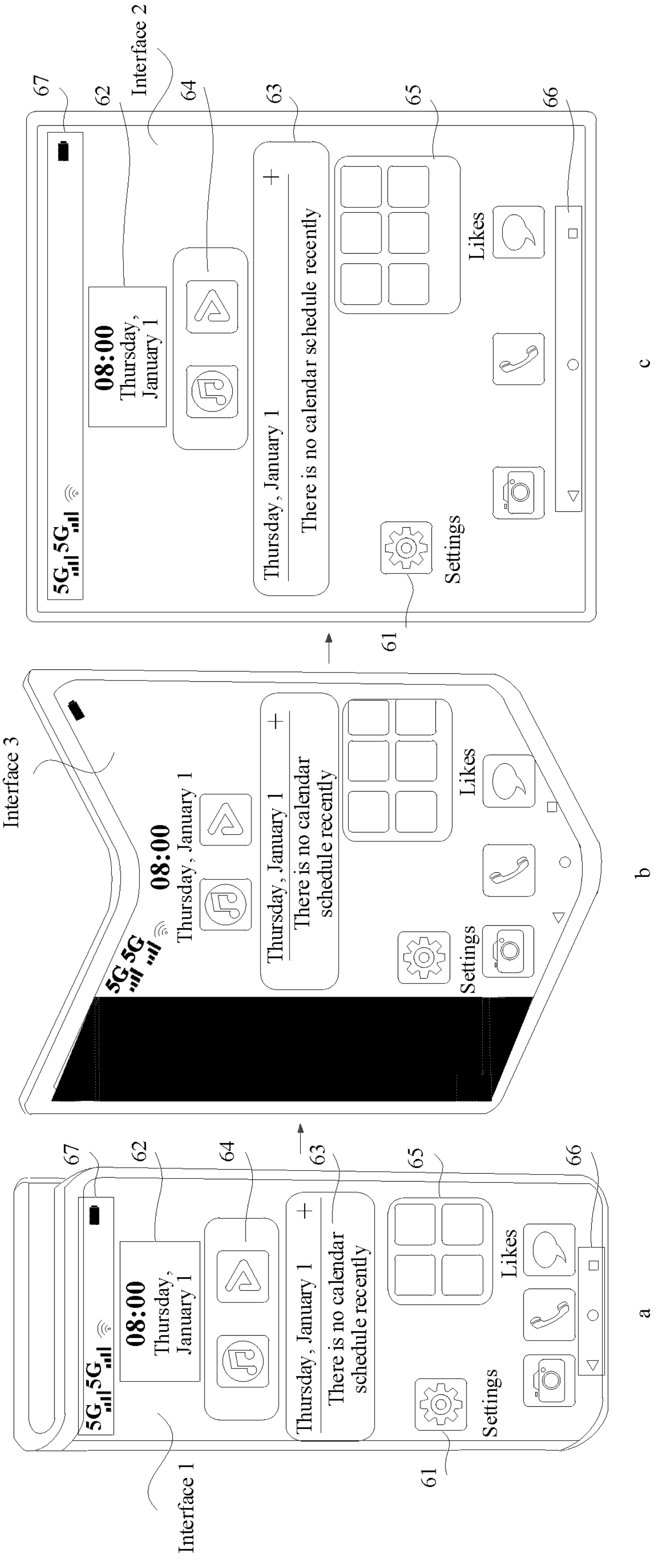
Interface 1
Interface 2
Interface 3
08:00
Thursday, January 1
Thursday, January 1
There is no calendar schedule recently
Likes
Settings
61
62
63
64
65
66
67
a
b
c

FIG. 12A

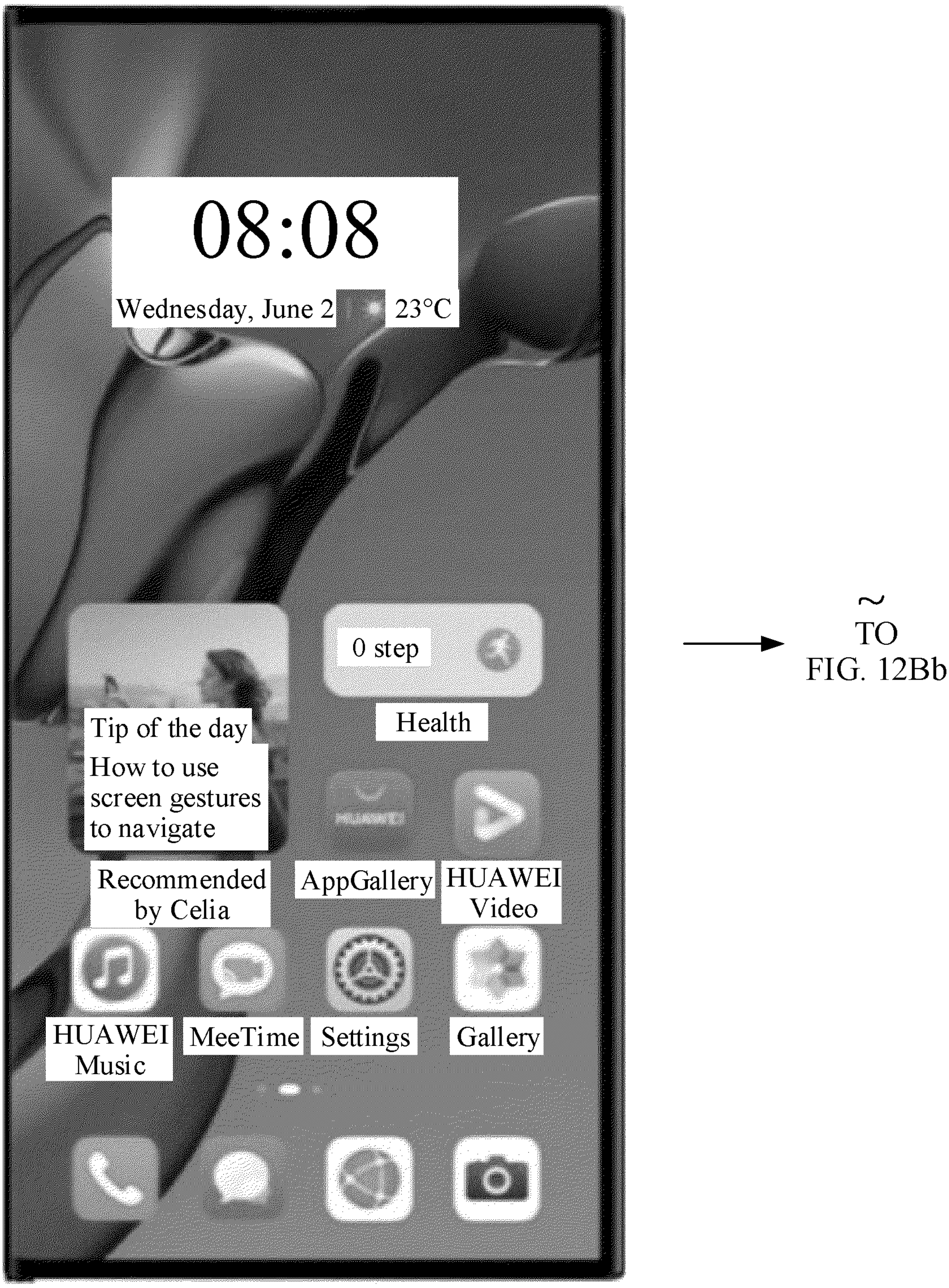
08:08
Wednesday, June 2
23°C
0 step
Health
Tip of the day
How to use screen gestures to navigate
Recommended by Celia
AppGallery
HUAWEI Video
HUAWEI Music
MeeTime
Settings
Gallery
TO FIG. 12Bb

FIG. 12Ba

CONT.
FROM
FIG. 12Ba

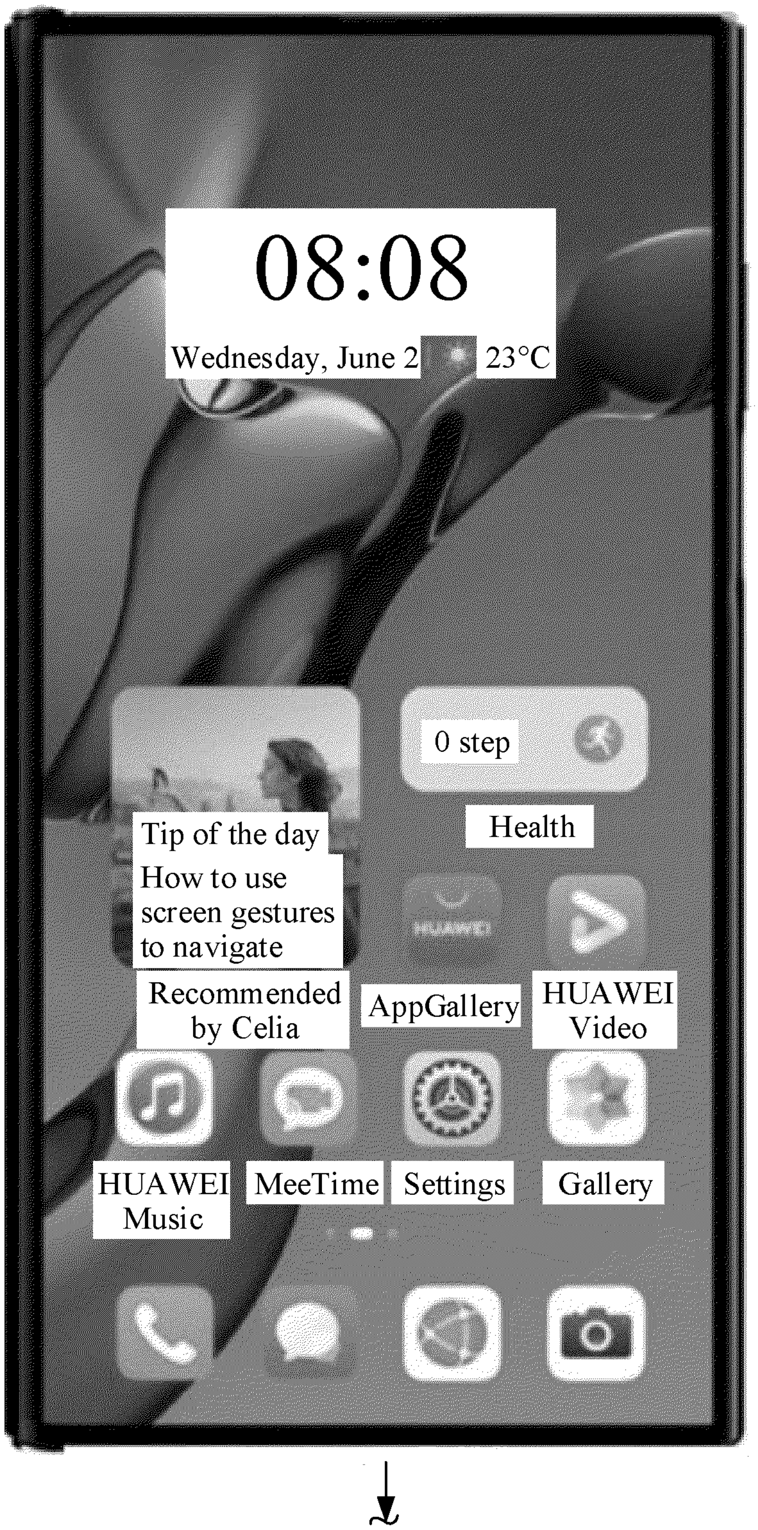


TO
FIG. 12Bc

FIG. 12Bb

CONT.
FROM
FIG. 12Bb

TO
FIG. 12Bd

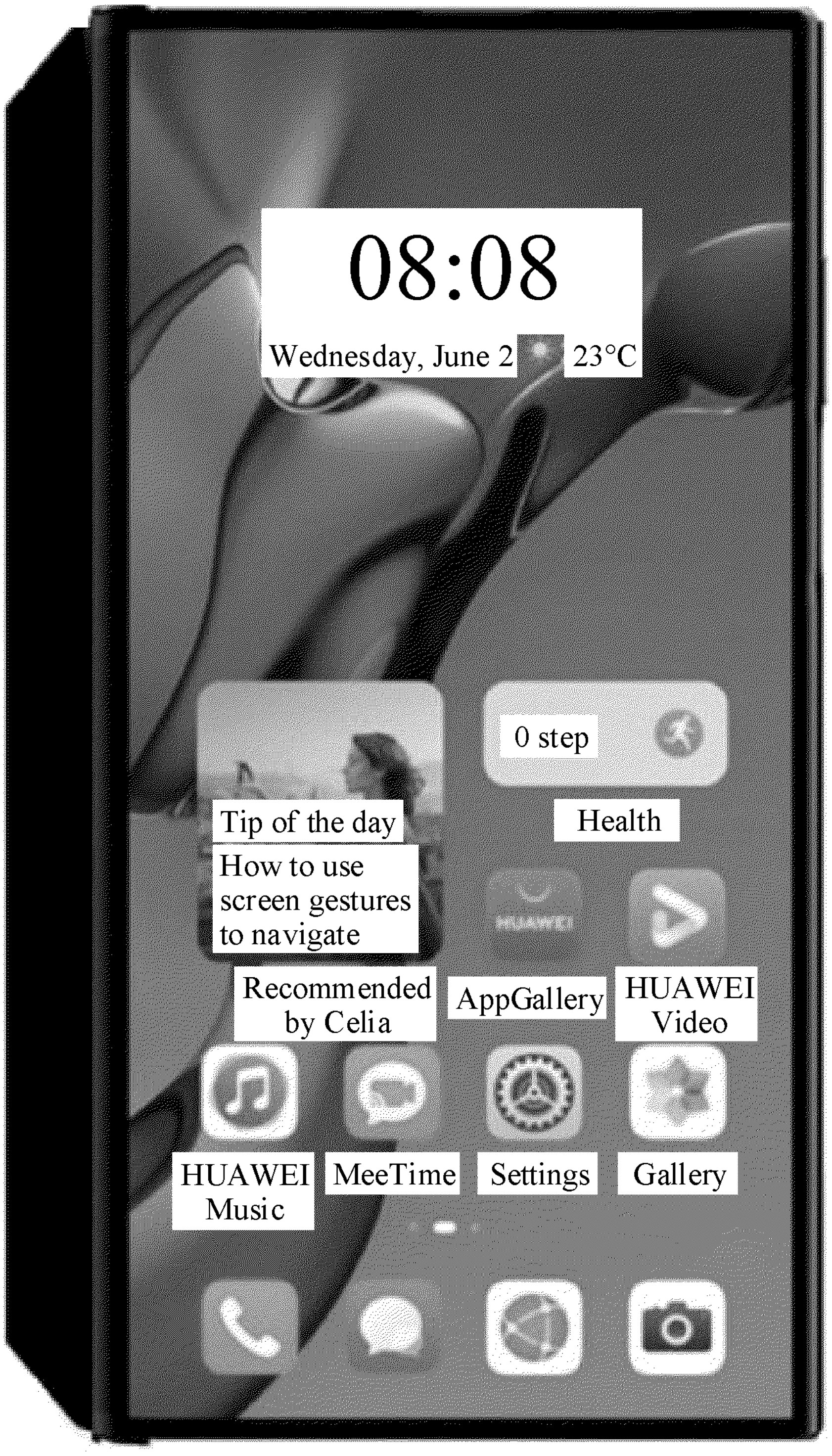


FIG. 12Bc

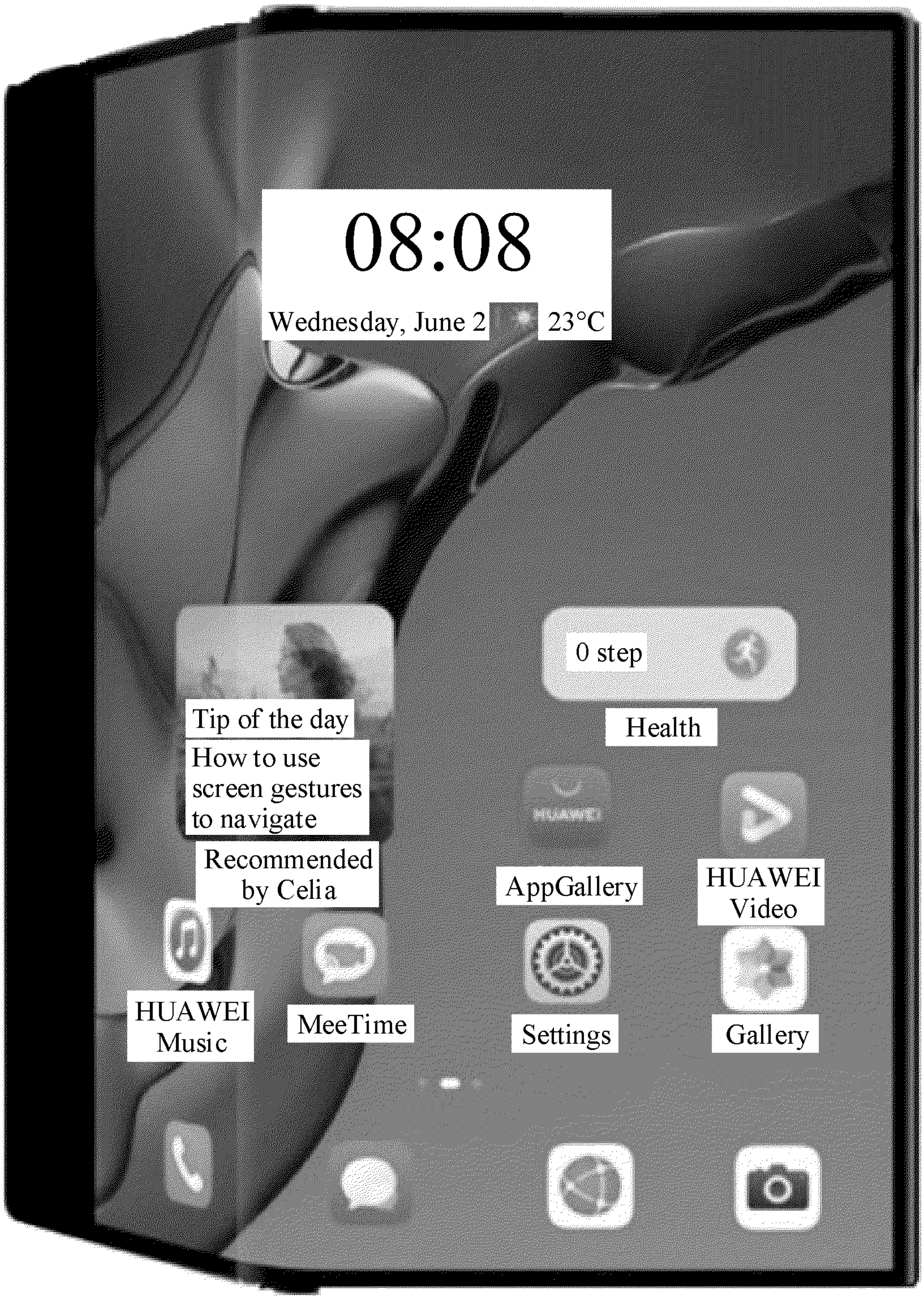


CONT. FROM FIG. 12Bc

TO FIG. 12Be

FIG. 12Bd

CONT.
FROM
FIG. 12Bd

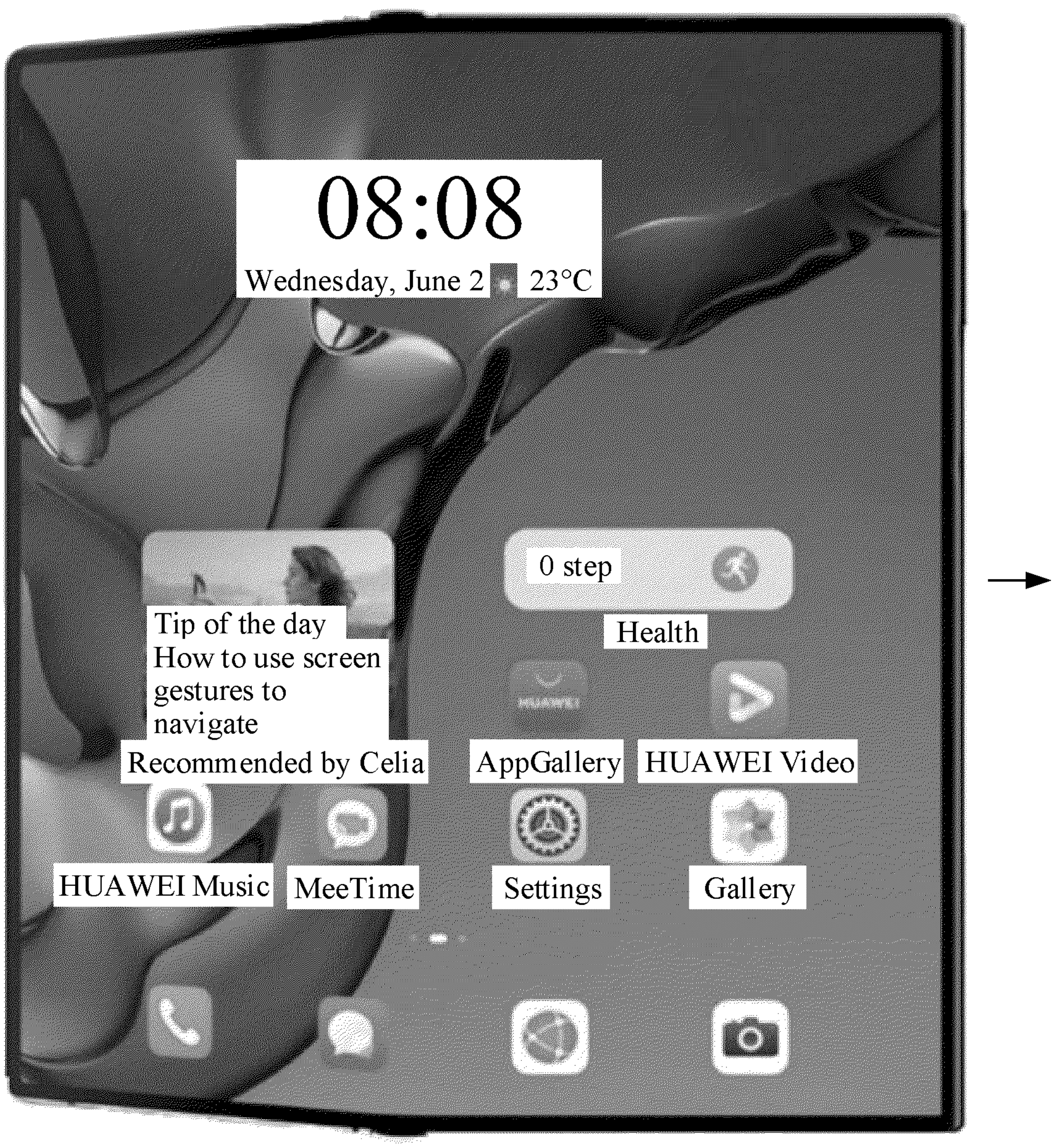


TO
FIG. 12Bf

FIG. 12Be

CONT.
FROM
FIG. 12Be

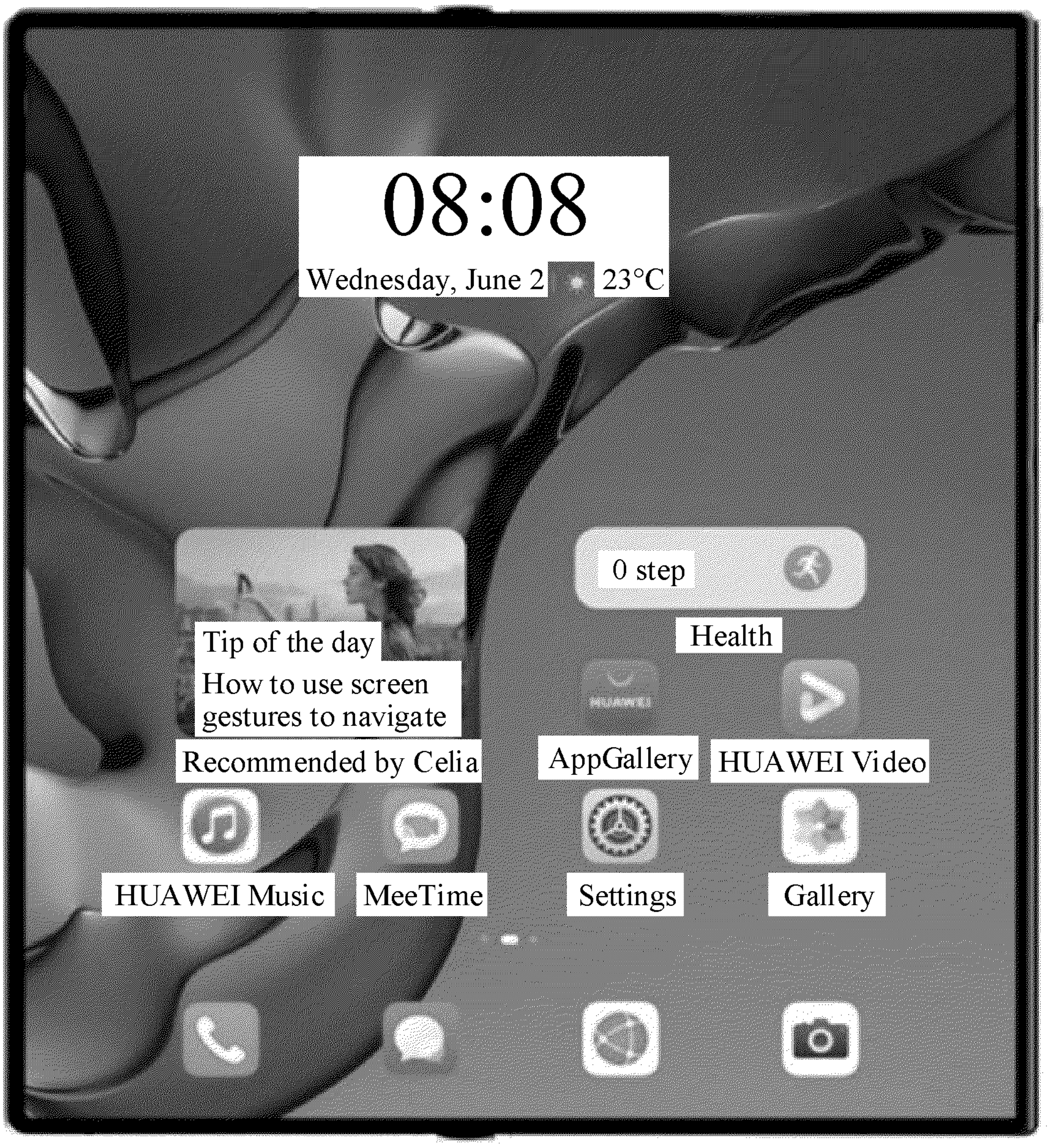


FIG. 12Bf

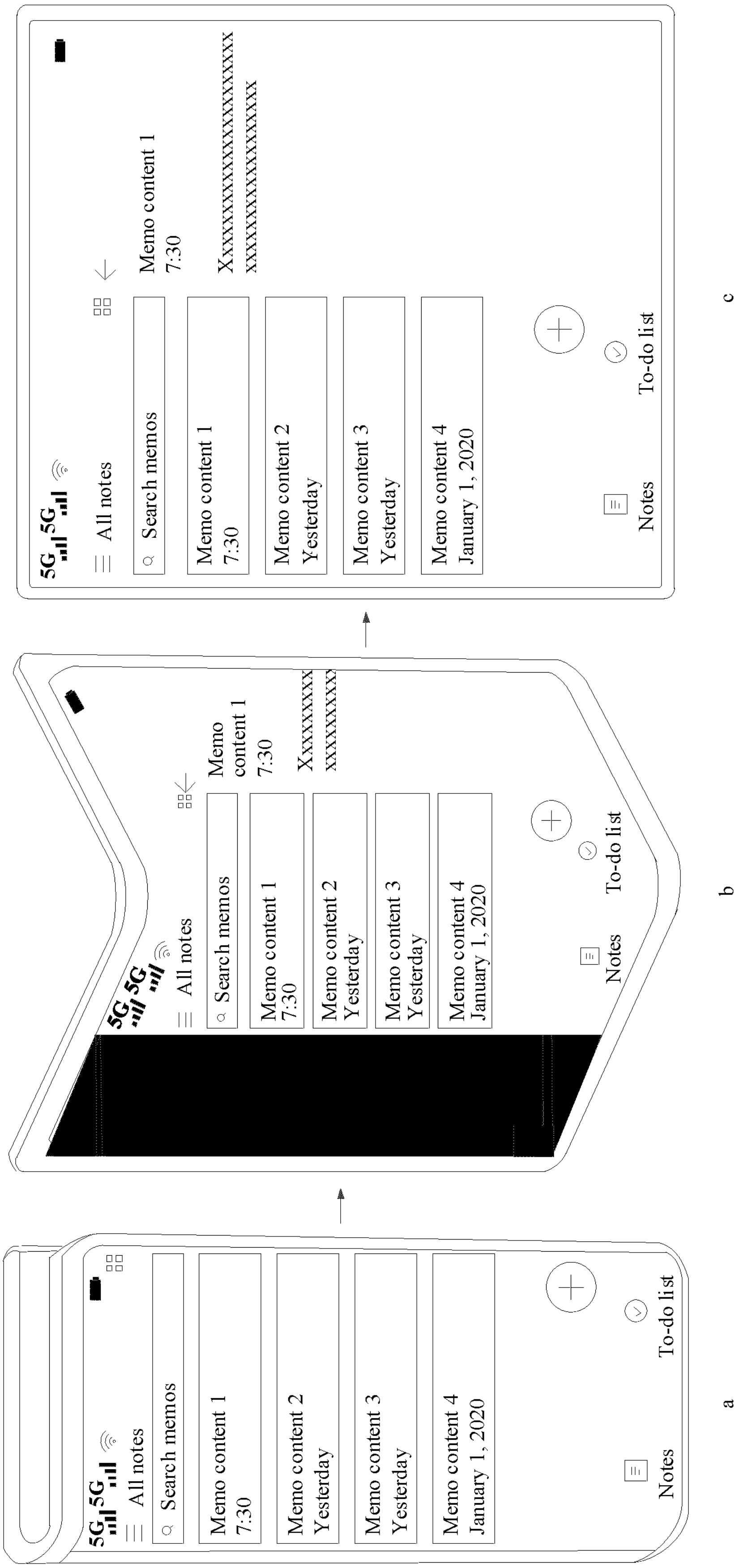
5G 5G
All notes
Search memos
Memo content 1
7:30
Memo content 2
Yesterday
Memo content 3
Yesterday
Memo content 4
January 1, 2020
Notes
To-do list
a
Memo content 1
7:30
Xxxxxxxxx
xxxxxxxxx
b
Memo content 1
7:30
Xxxxxxxxxxxxxxxxxxxxx
xxxxxxxxxxxxxxxxxxx
c

FIG. 13A

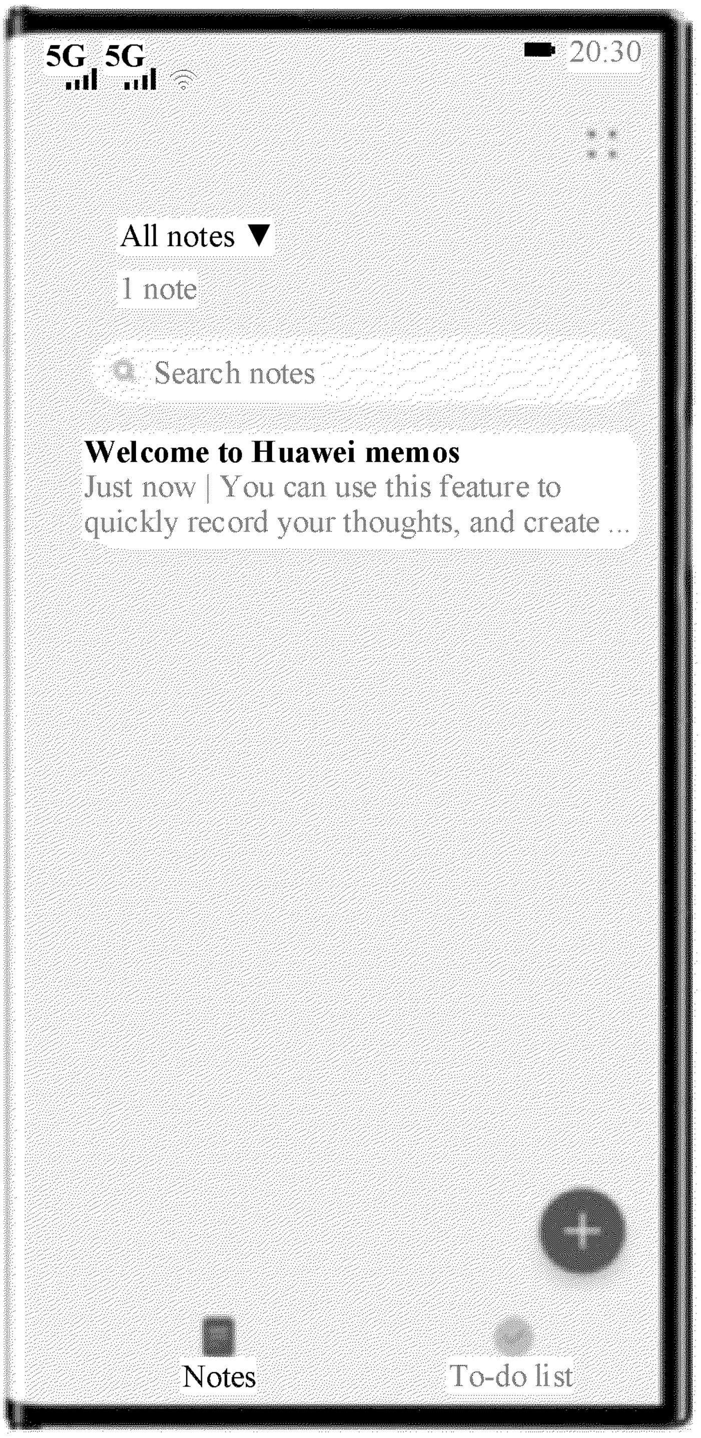


TO FIG. 13Bb

FIG. 13Ba

CONT.
FROM
FIG. 13Ba

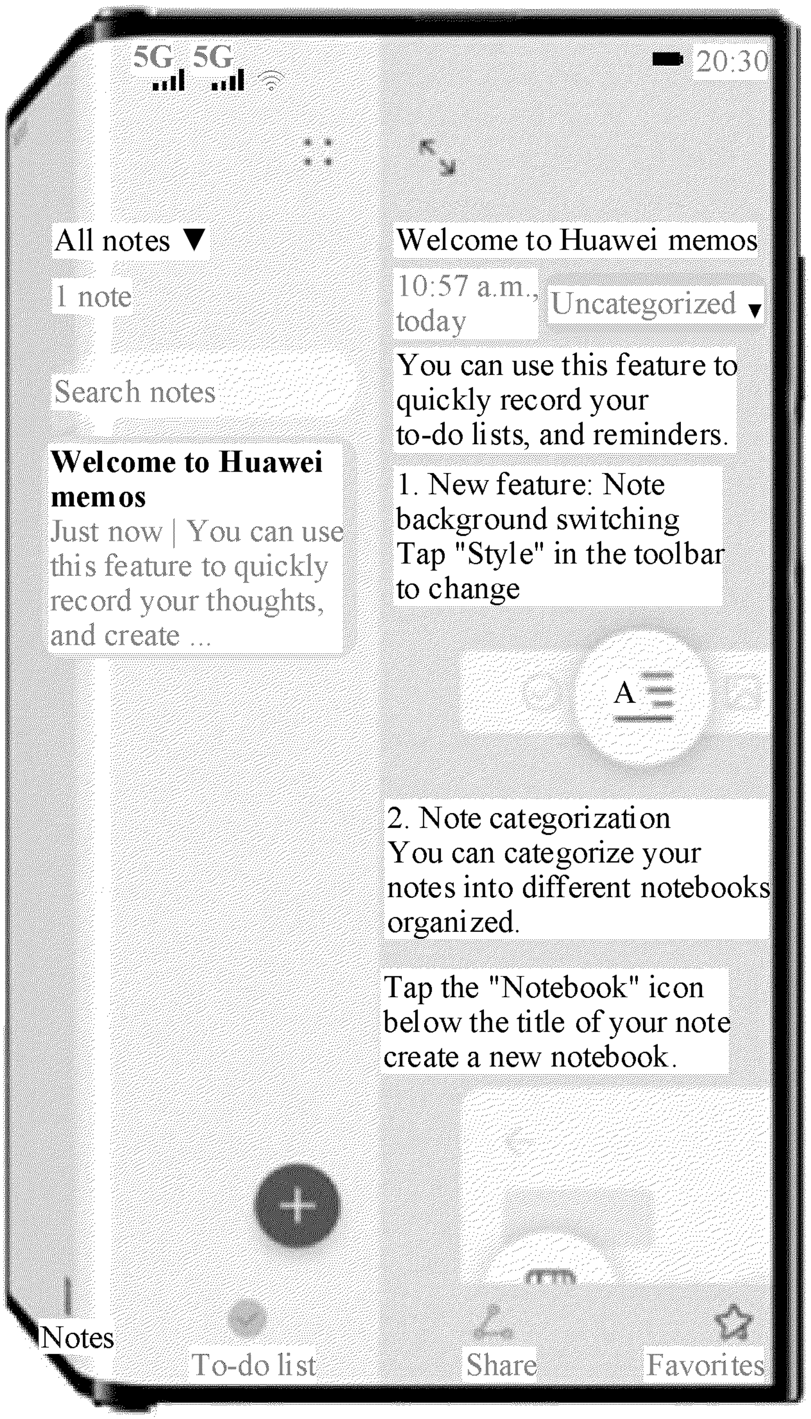


TO
FIG. 13Bc

FIG. 13Bb

CONT.
FROM
FIG. 13Bb

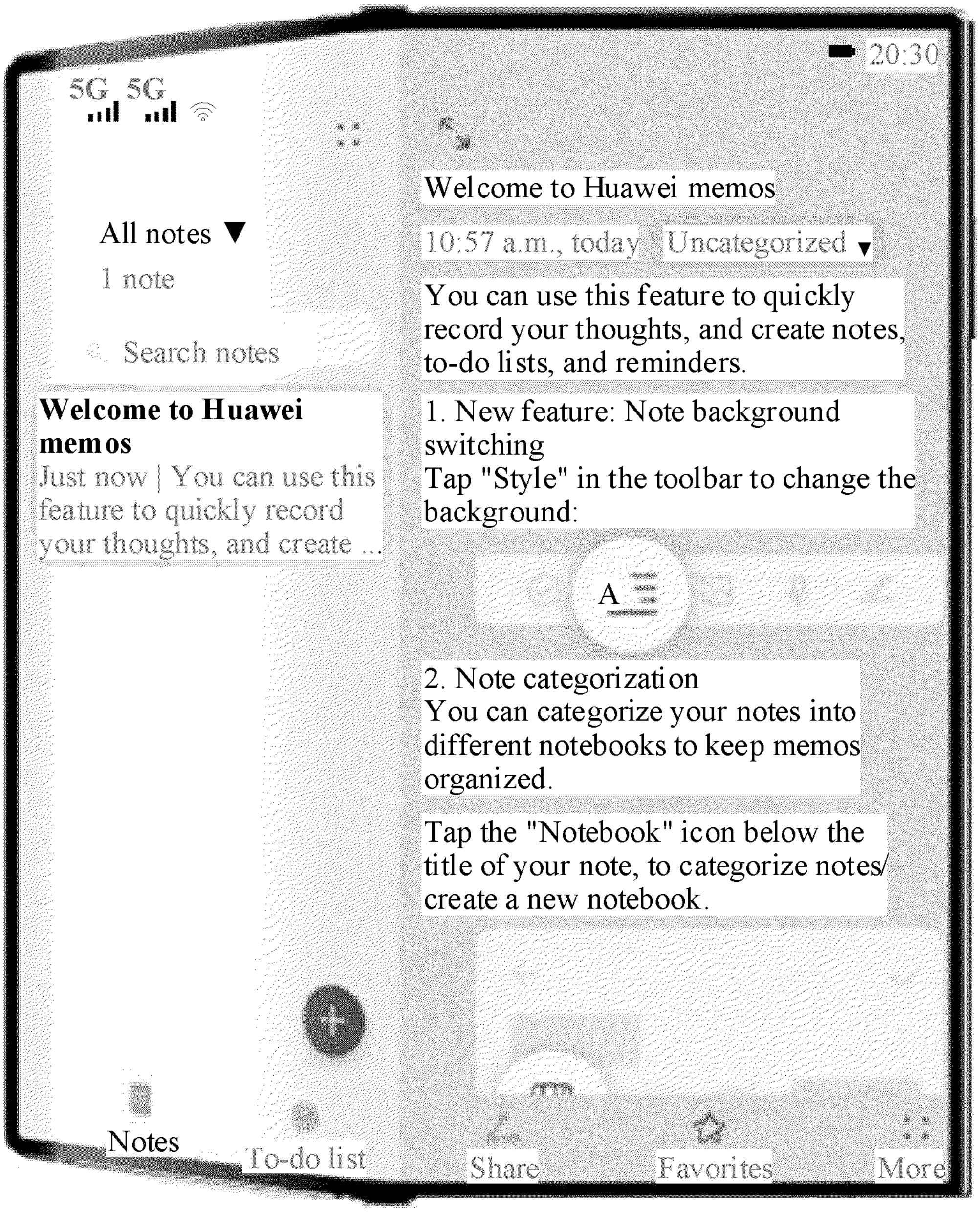


TO
FIG. 13Bd

FIG. 13Bc

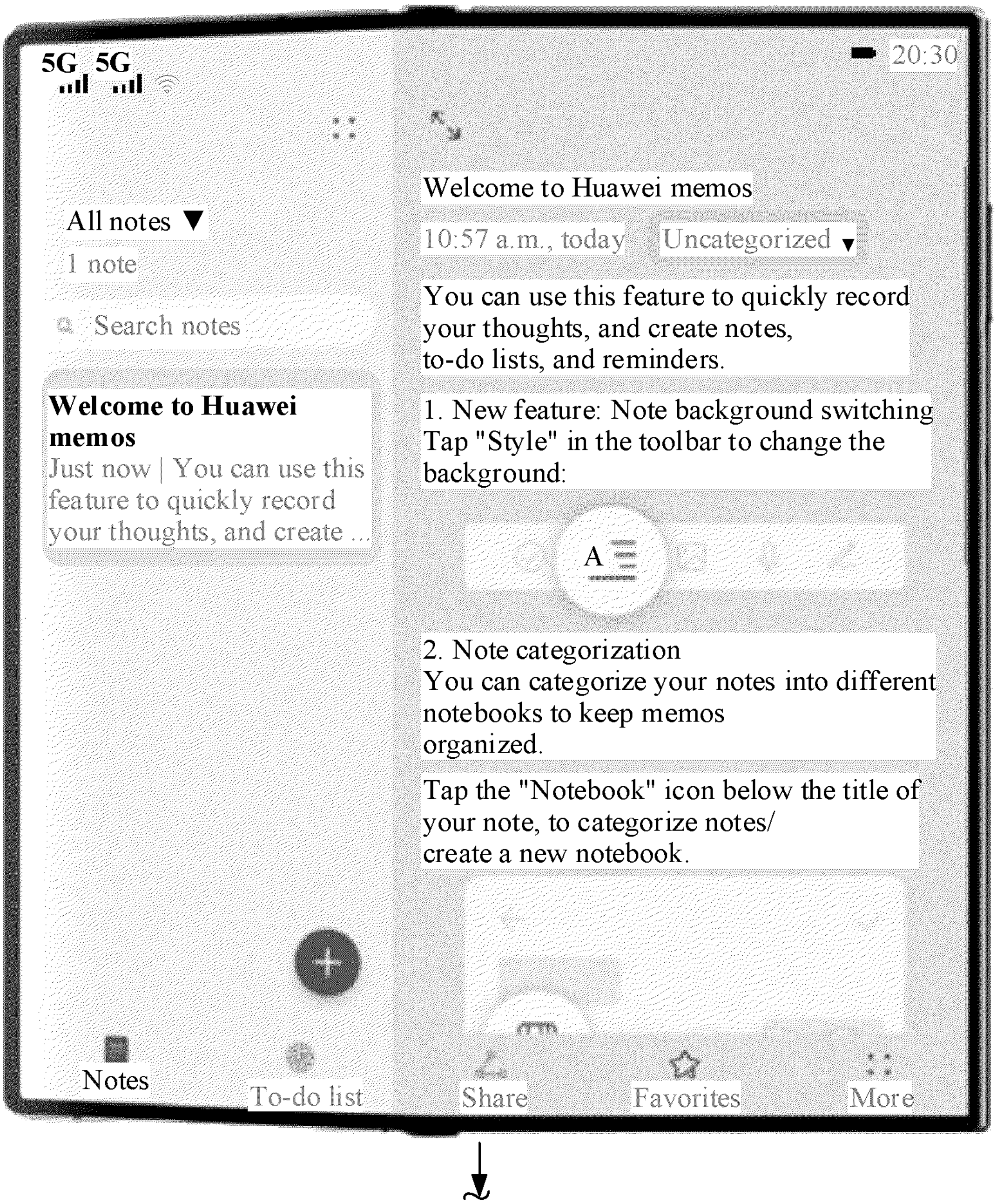


CONT. FROM FIG. 13Bc

TO FIG. 13Be

FIG. 13Bd

CONT.
FROM
FIG. 13Bd

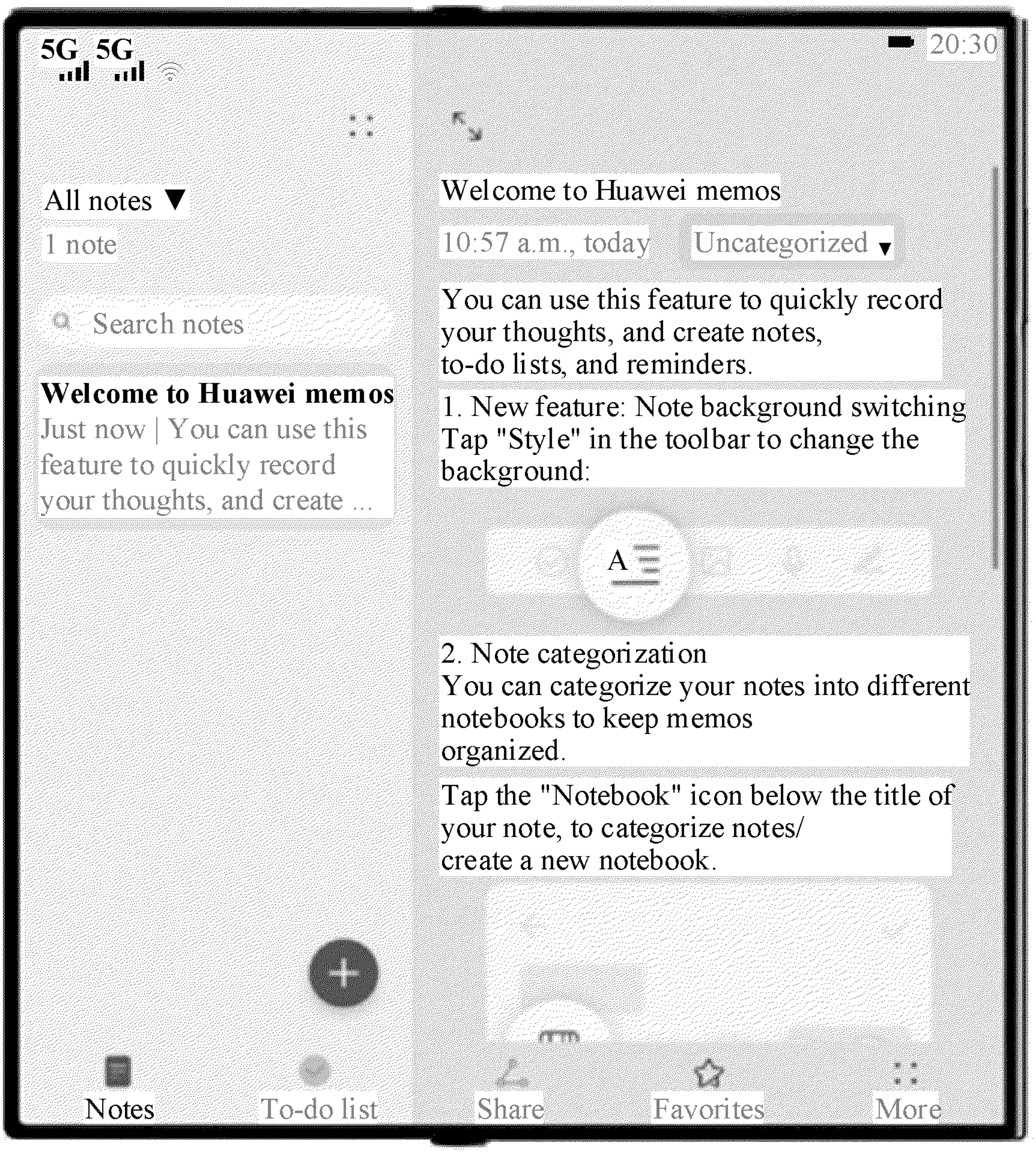


FIG. 13Be

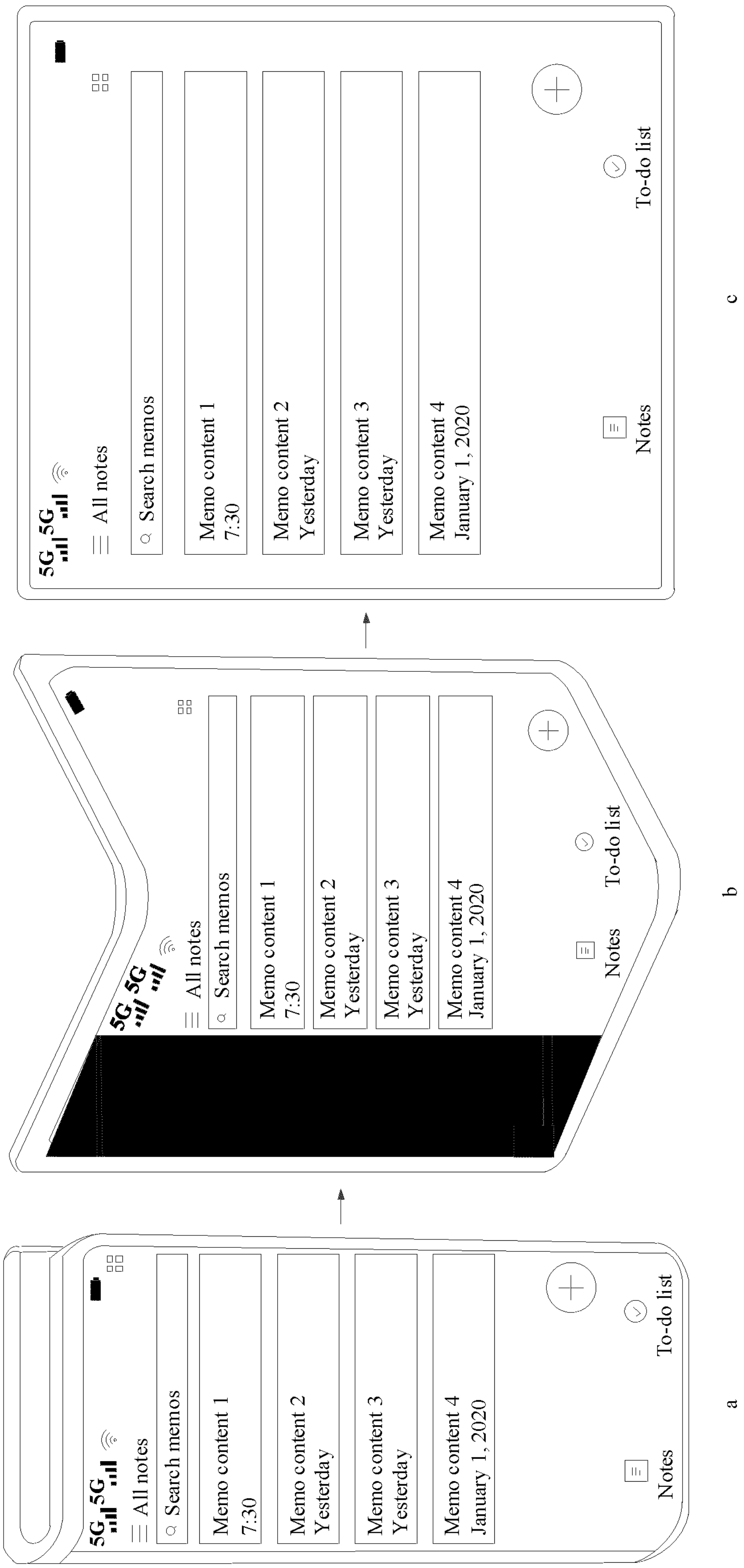
5G 5G
All notes
Search memos
Memo content 1
7:30
Memo content 2
Yesterday
Memo content 3
Yesterday
Memo content 4
January 1, 2020
Notes
To-do list
a
b
c

FIG. 14

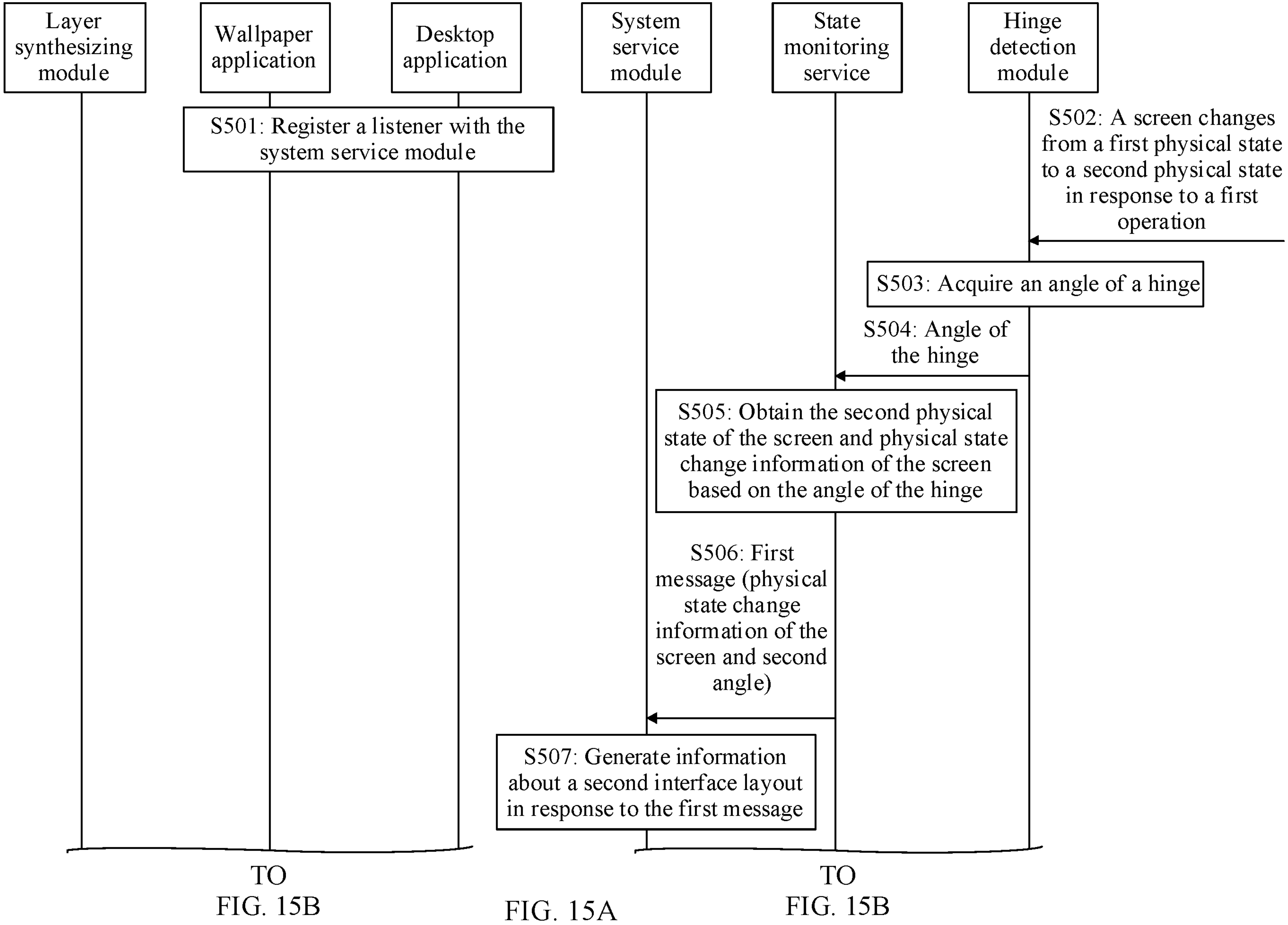
Layer synthesizing module
Wallpaper application
Desktop application
System service module
State monitoring service
Hinge detection module
S501: Register a listener with the system service module
S502: A screen changes from a first physical state to a second physical state in response to a first operation
S503: Acquire an angle of a hinge
S504: Angle of the hinge
S505: Obtain the second physical state of the screen and physical state change information of the screen based on the angle of the hinge
S506: First message (physical state change information of the screen and second angle)
S507: Generate information about a second interface layout in response to the first message
TO FIG. 15B
TO FIG. 15B

FIG. 15A

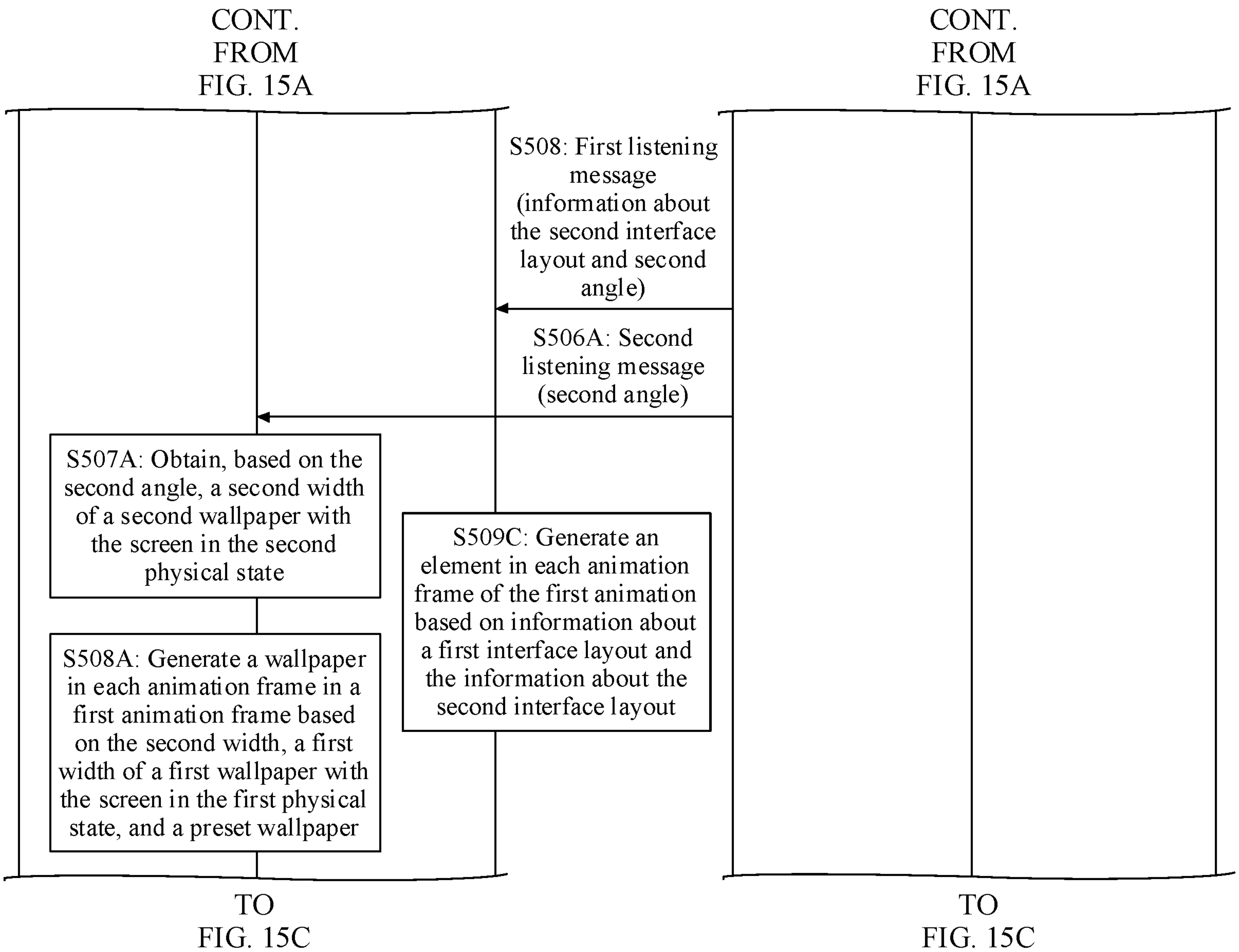
CONT.
FROM
FIG. 15A
CONT.
FROM
FIG. 15A
S508: First listening message (information about the second interface layout and second angle)
S506A: Second listening message (second angle)
S507A: Obtain, based on the second angle, a second width of a second wallpaper with the screen in the second physical state
S508A: Generate a wallpaper in each animation frame in a first animation frame based on the second width, a first width of a first wallpaper with the screen in the first physical state, and a preset wallpaper
S509C: Generate an element in each animation frame of the first animation based on information about a first interface layout and the information about the second interface layout
TO
FIG. 15C
TO
FIG. 15C

FIG. 15B

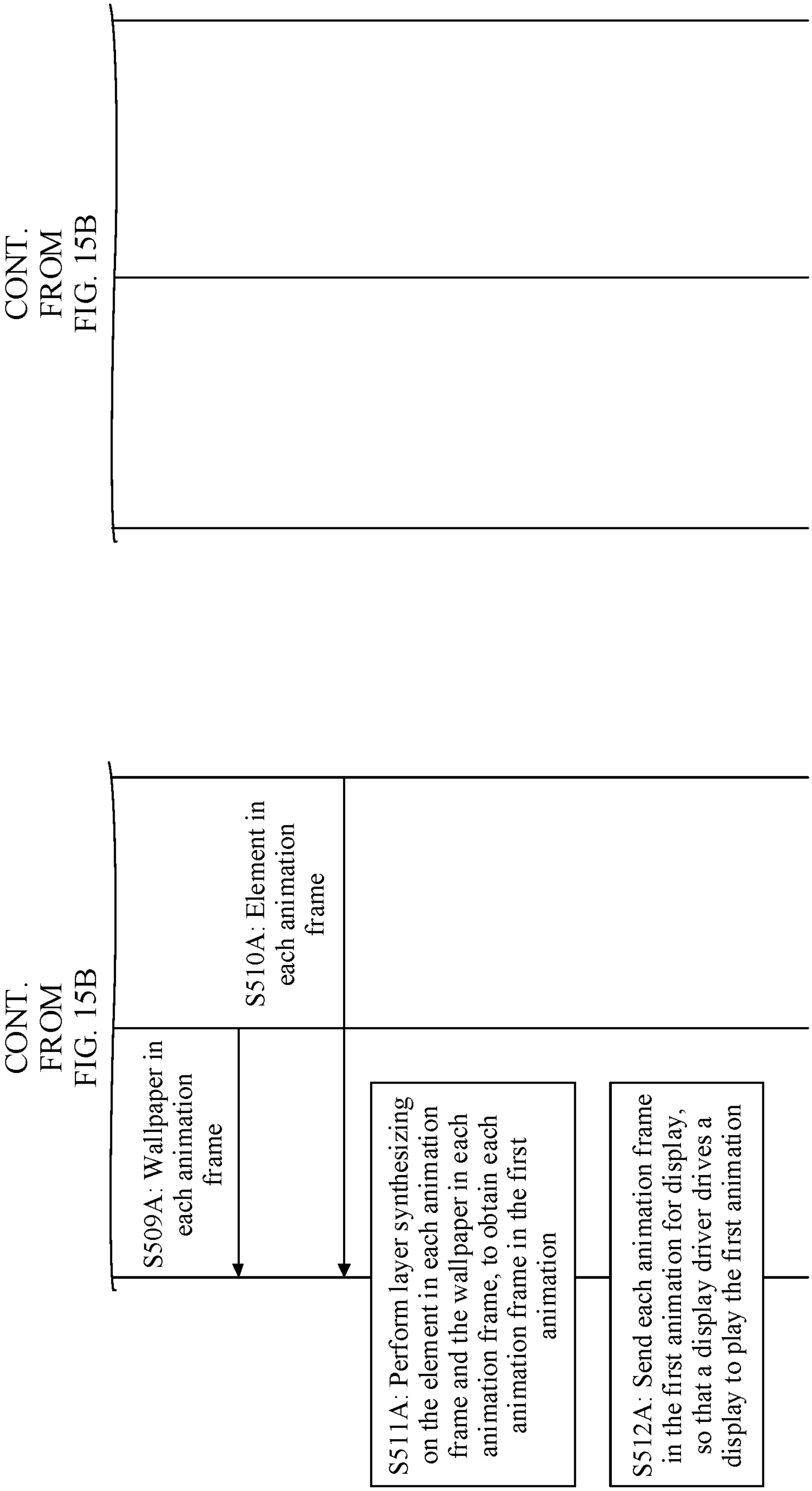
CONT.
FROM
FIG. 15B
CONT.
FROM
FIG. 15B
S509A: Wallpaper in each animation frame
S510A: Element in each animation frame
S511A: Perform layer synthesizing on the element in each animation frame and the wallpaper in each animation frame, to obtain each animation frame in the first animation
S512A: Send each animation frame in the first animation for display, so that a display driver drives a display to play the first animation

FIG. 15C

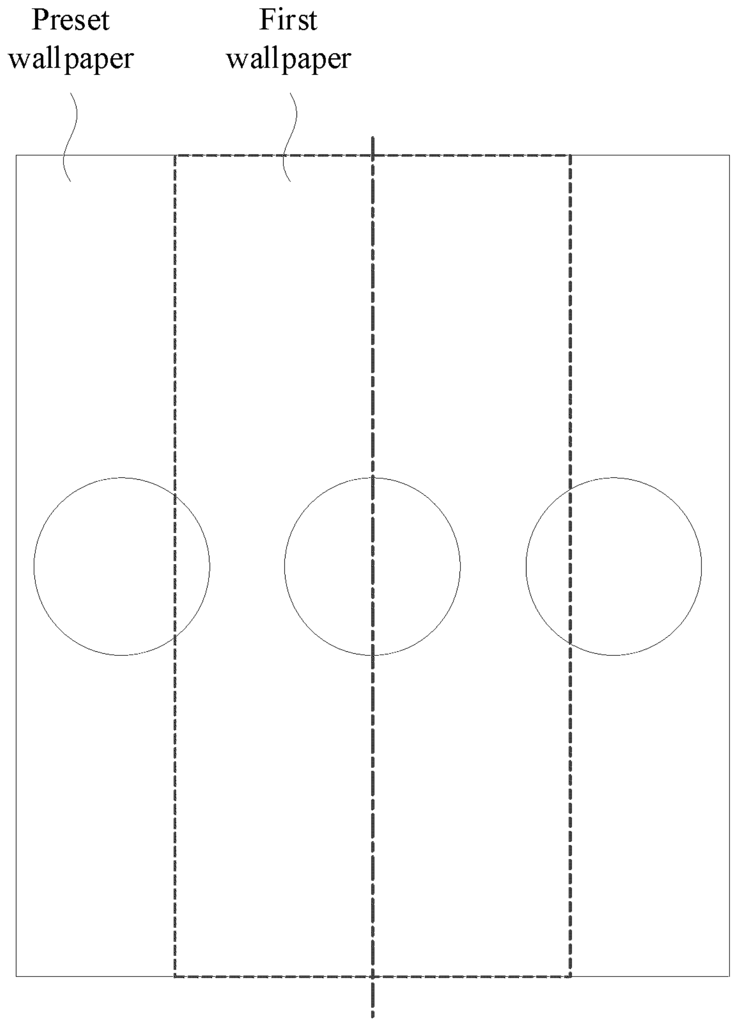


FIG. 16A

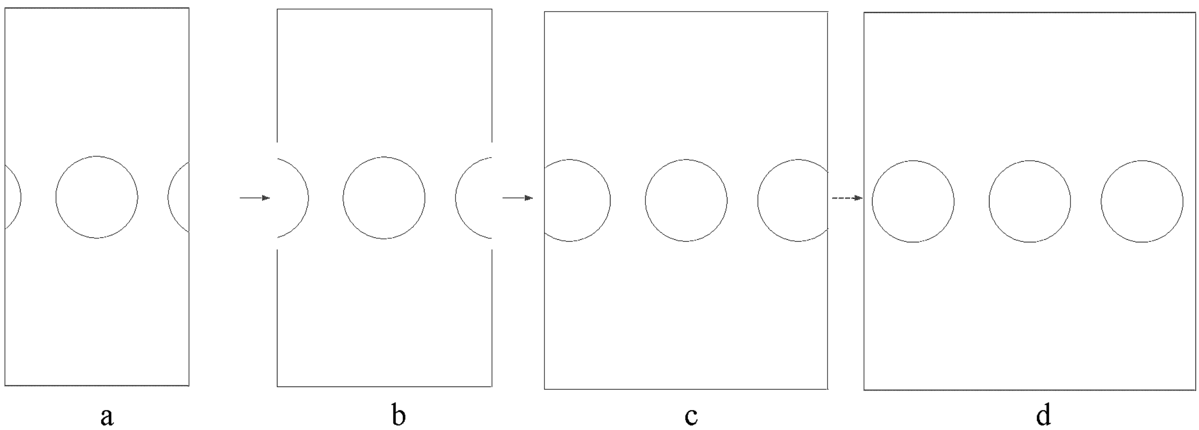


FIG. 16B

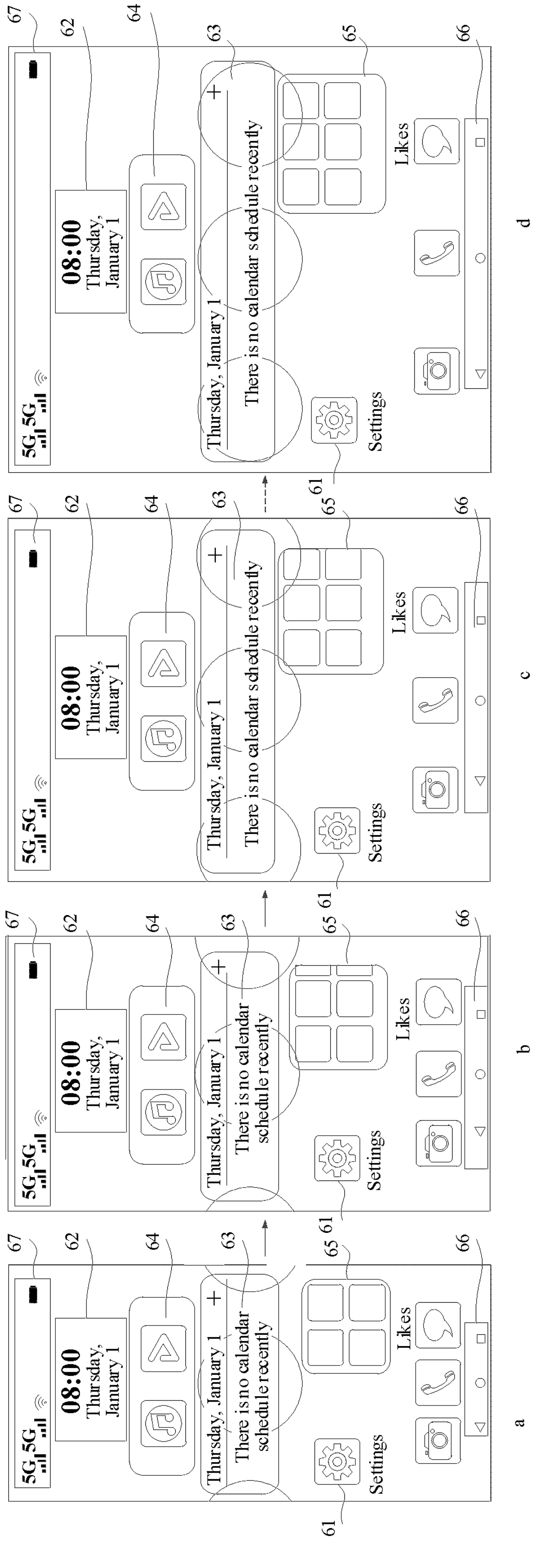

67
62
64
63
65
66
61
5G 5G
08:00
Thursday, January 1
Thursday, January 1
There is no calendar schedule recently
Settings
Likes
a
b
c
d


FIG. 16C

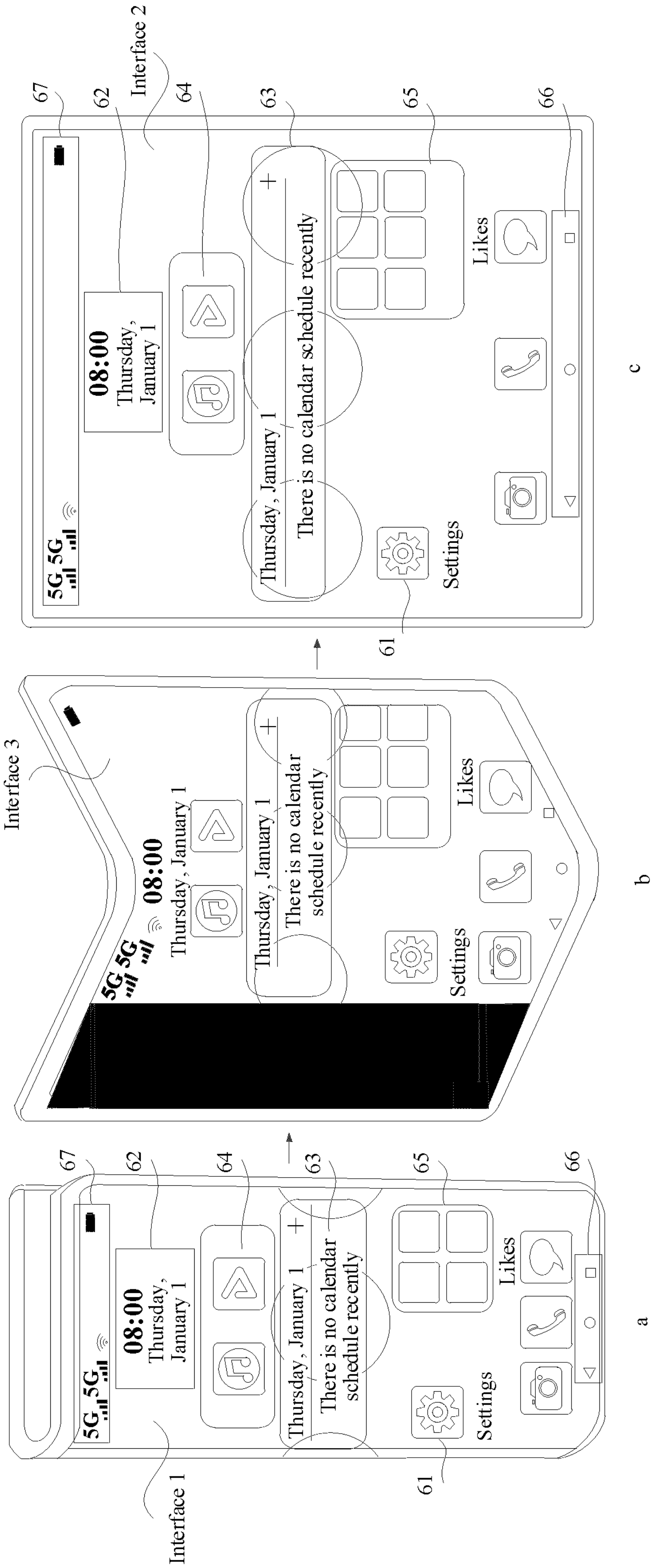
Interface 1
Interface 2
Interface 3
67
62
64
63
65
66
61
08:00
Thursday, January 1
Thursday, January 1
There is no calendar schedule recently
Likes
Settings
5G 5G
a
b
c

FIG. 16D

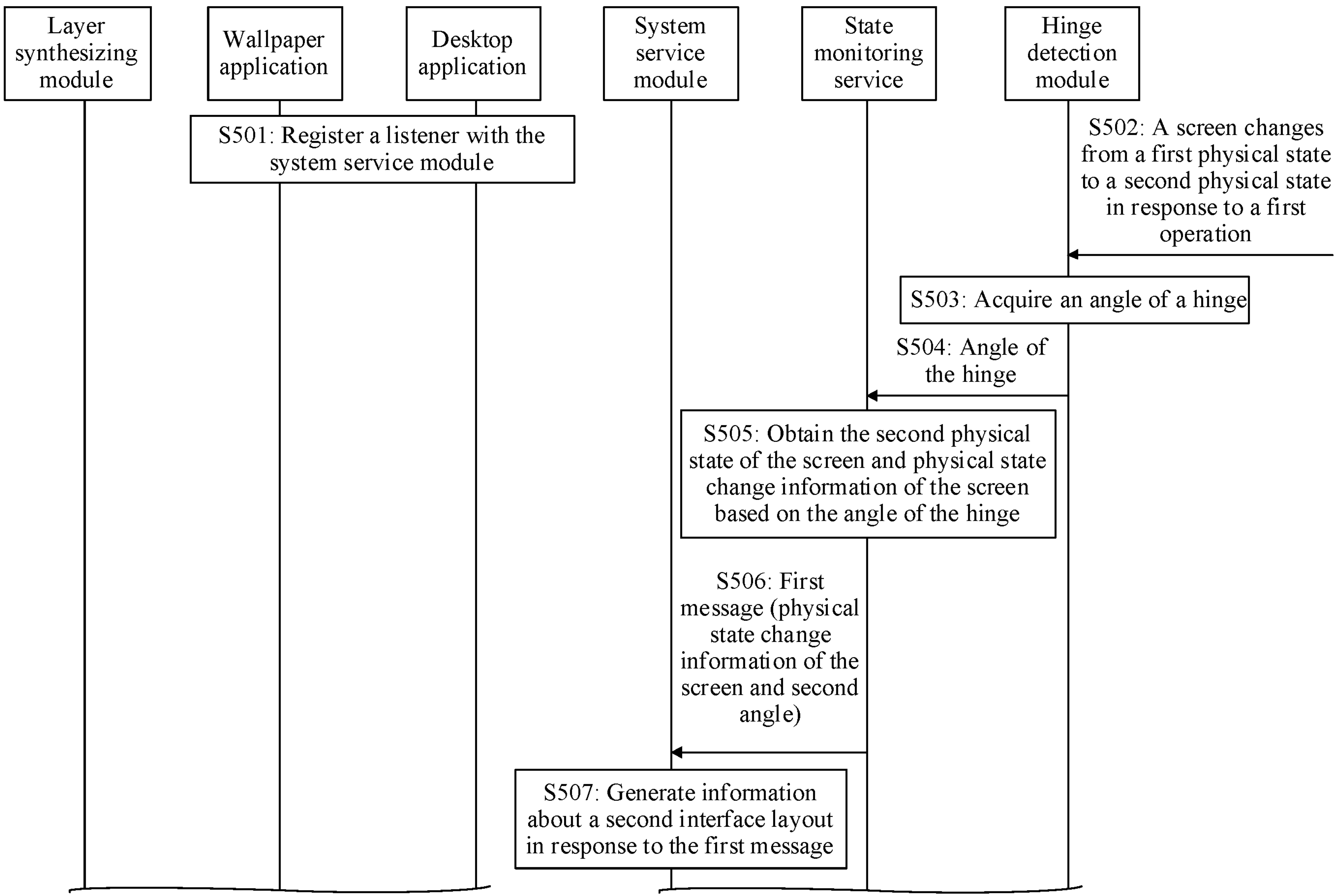


TO FIG. 17B

FIG. 17A

TO FIG. 17B

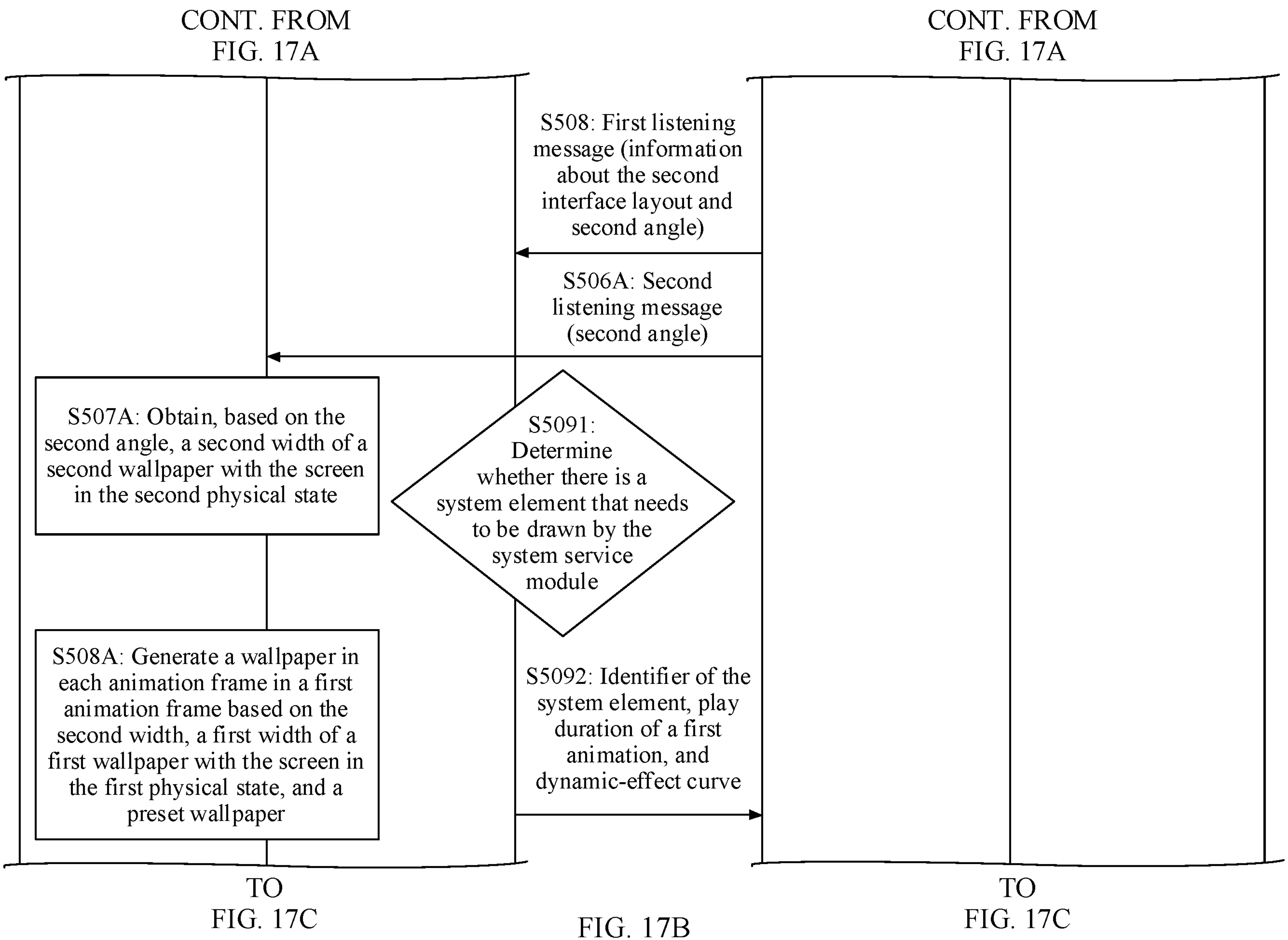
CONT. FROM FIG. 17A
CONT. FROM FIG. 17A
S508: First listening message (information about the second interface layout and second angle)
S506A: Second listening message (second angle)
S507A: Obtain, based on the second angle, a second width of a second wallpaper with the screen in the second physical state
S5091: Determine whether there is a system element that needs to be drawn by the system service module
S508A: Generate a wallpaper in each animation frame in a first animation frame based on the second width, a first width of a first wallpaper with the screen in the first physical state, and a preset wallpaper
S5092: Identifier of the system element, play duration of a first animation, and dynamic-effect curve
TO FIG. 17C
TO FIG. 17C

FIG. 17B

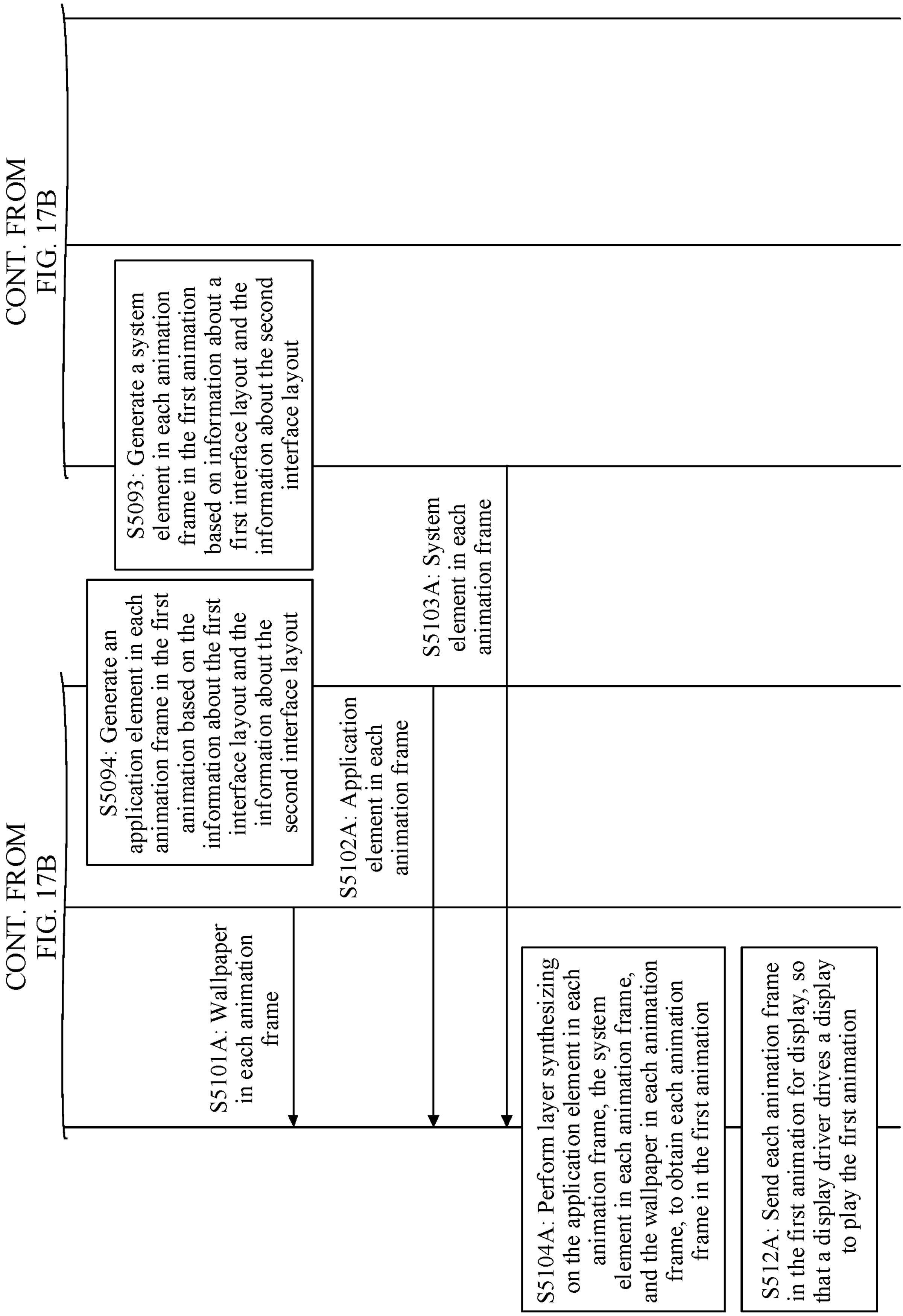
CONT. FROM FIG. 17B
CONT. FROM FIG. 17B
S5093: Generate a system element in each animation frame in the first animation based on information about a first interface layout and the information about the second interface layout
S5094: Generate an application element in each animation frame in the first animation based on the information about the first interface layout and the information about the second interface layout
S5101A: Wallpaper in each animation frame
S5102A: Application element in each animation frame
S5103A: System element in each animation frame
S5104A: Perform layer synthesizing on the application element in each animation frame, the system element in each animation frame, and the wallpaper in each animation frame, to obtain each animation frame in the first animation
S512A: Send each animation frame in the first animation for display, so that a display driver drives a display to play the first animation

FIG. 17C

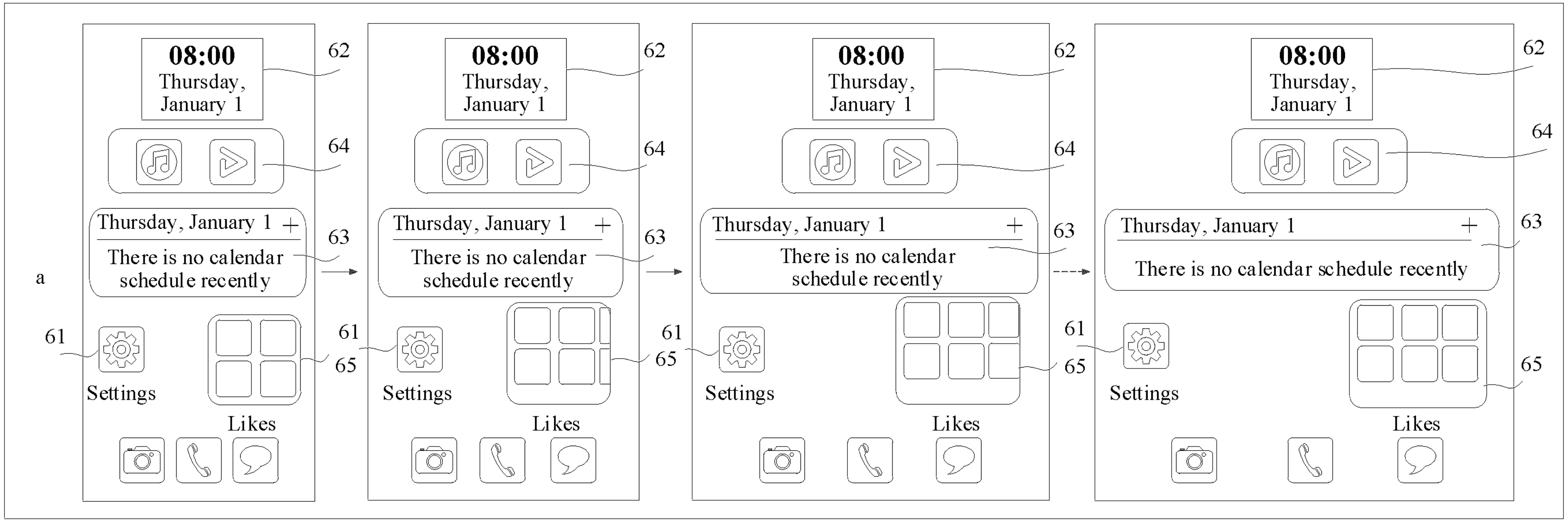


+
~
TO
FIG. 18B

FIG. 18A

CONT.
FROM
FIG. 18A

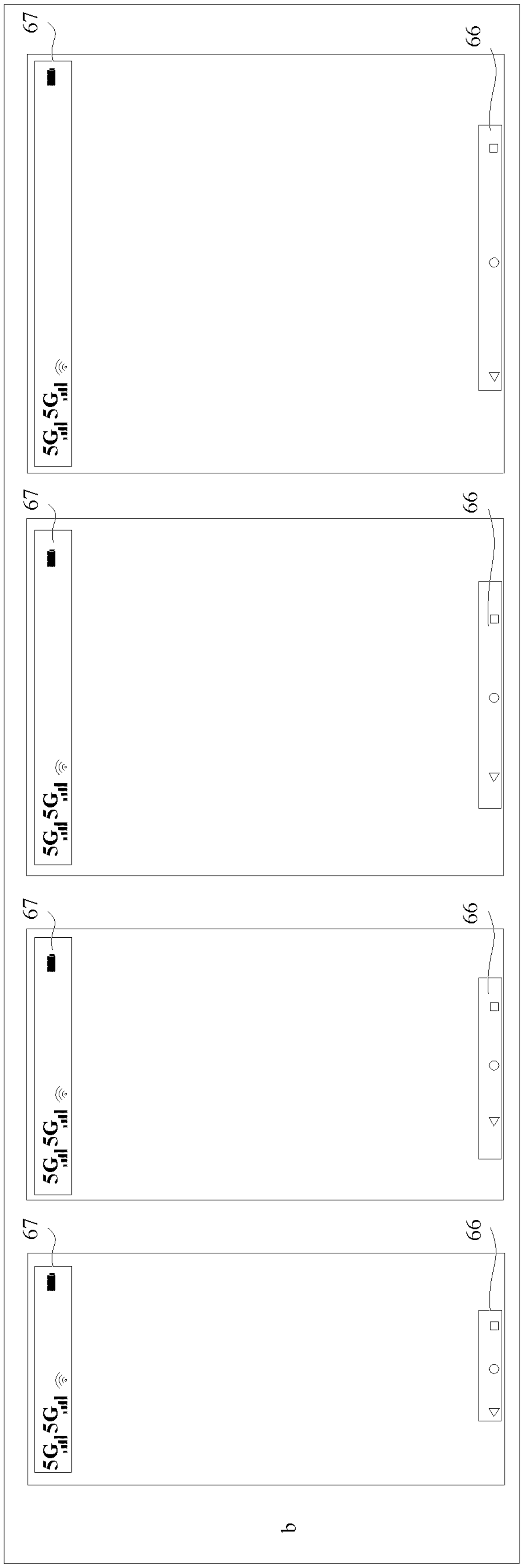


TO
FIG. 18C
FIG. 18B

CONT.
FROM
FIG. 18B

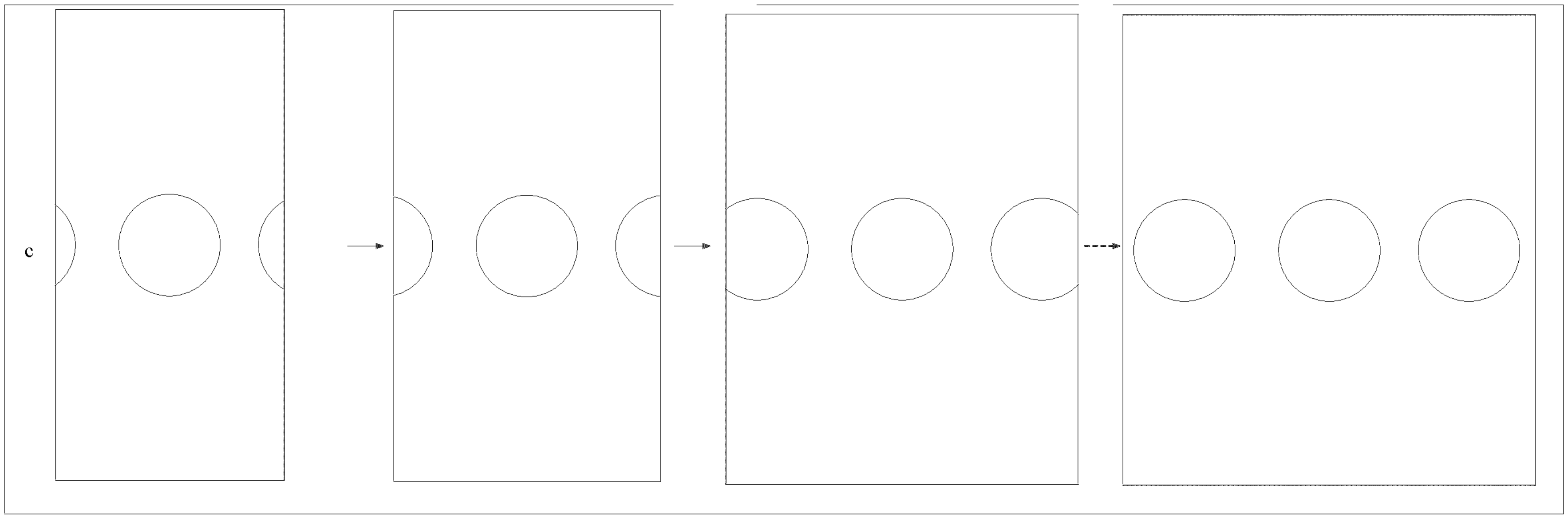


TO
FIG. 18D

FIG. 18C

CONT.
FROM
FIG. 18C

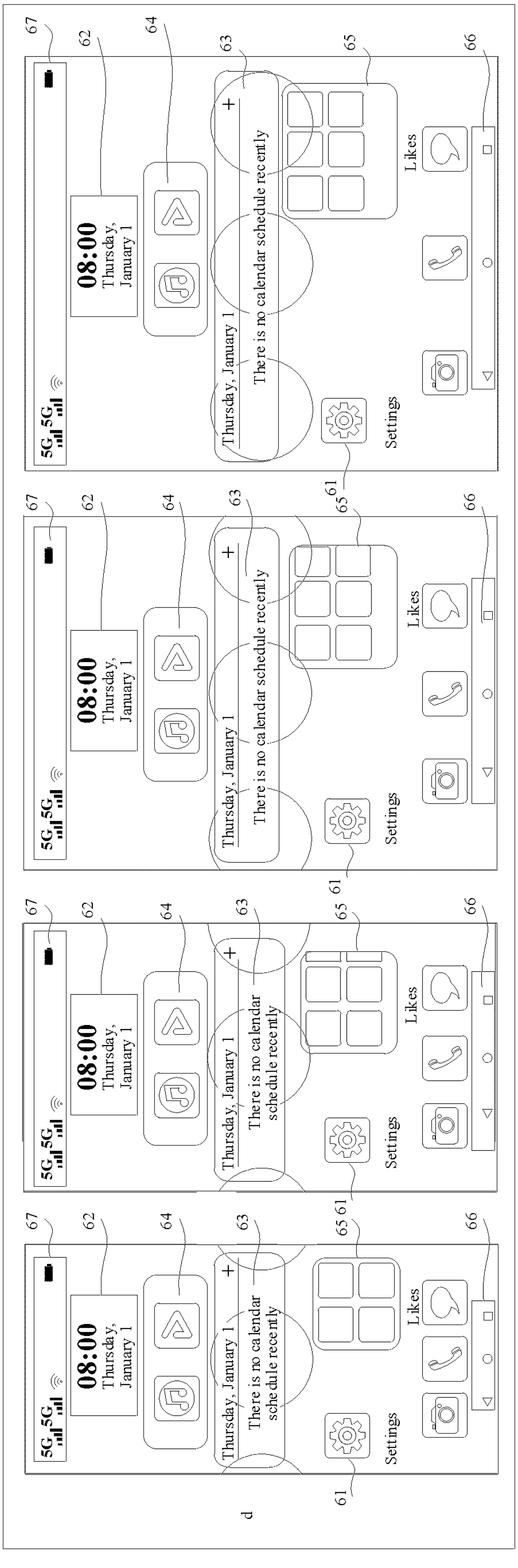


FIG. 18D

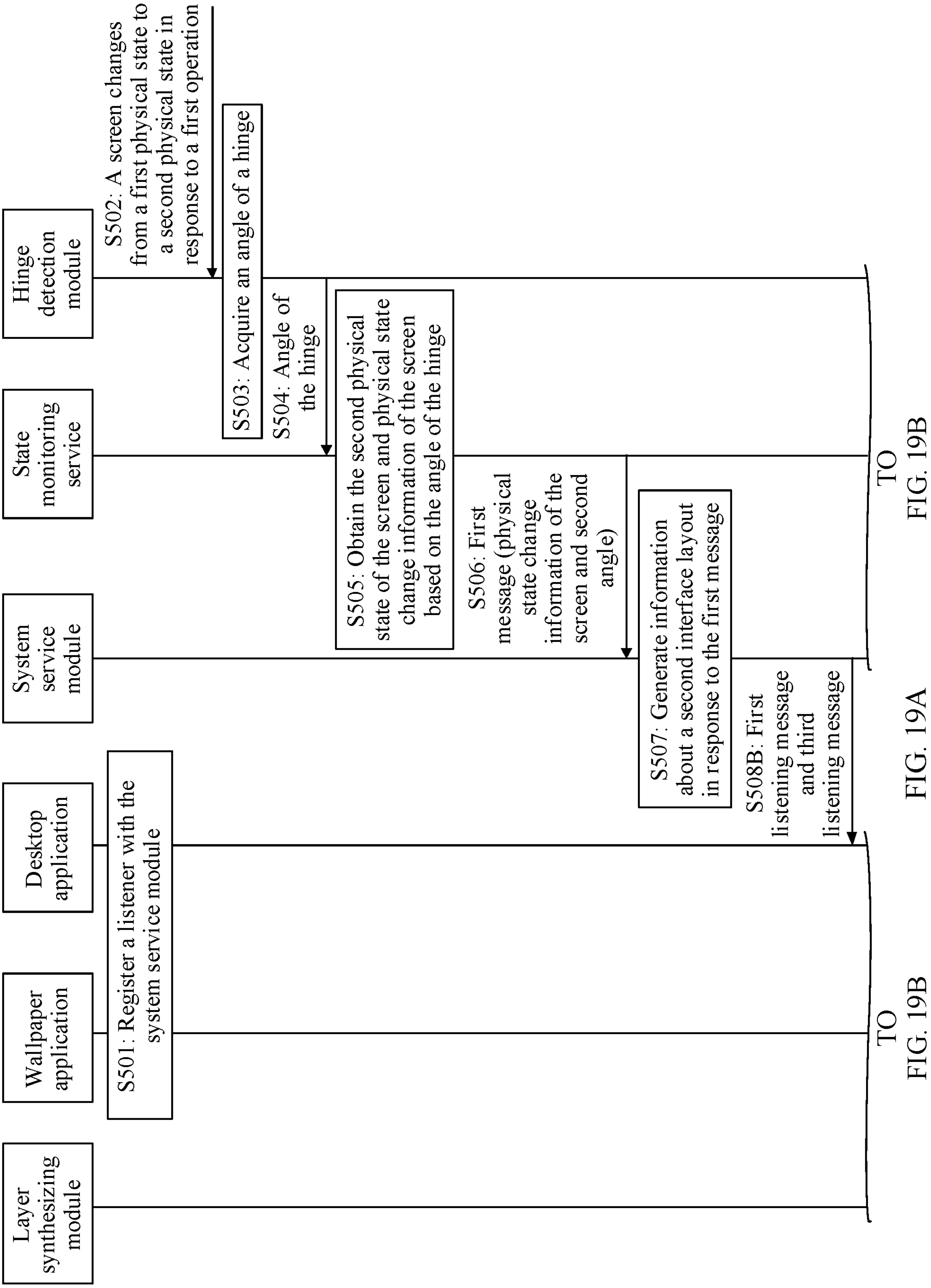
Hinge detection module
State monitoring service
System service module
Desktop application
Wallpaper application
Layer synthesizing module
S501: Register a listener with the system service module
S502: A screen changes from a first physical state to a second physical state in response to a first operation
S503: Acquire an angle of a hinge
S504: Angle of the hinge
S505: Obtain the second physical state of the screen and physical state change information of the screen based on the angle of the hinge
S506: First message (physical state change information of the screen and second angle)
S507: Generate information about a second interface layout in response to the first message
S508B: First listening message and third listening message
TO FIG. 19B
TO FIG. 19B

FIG. 19A

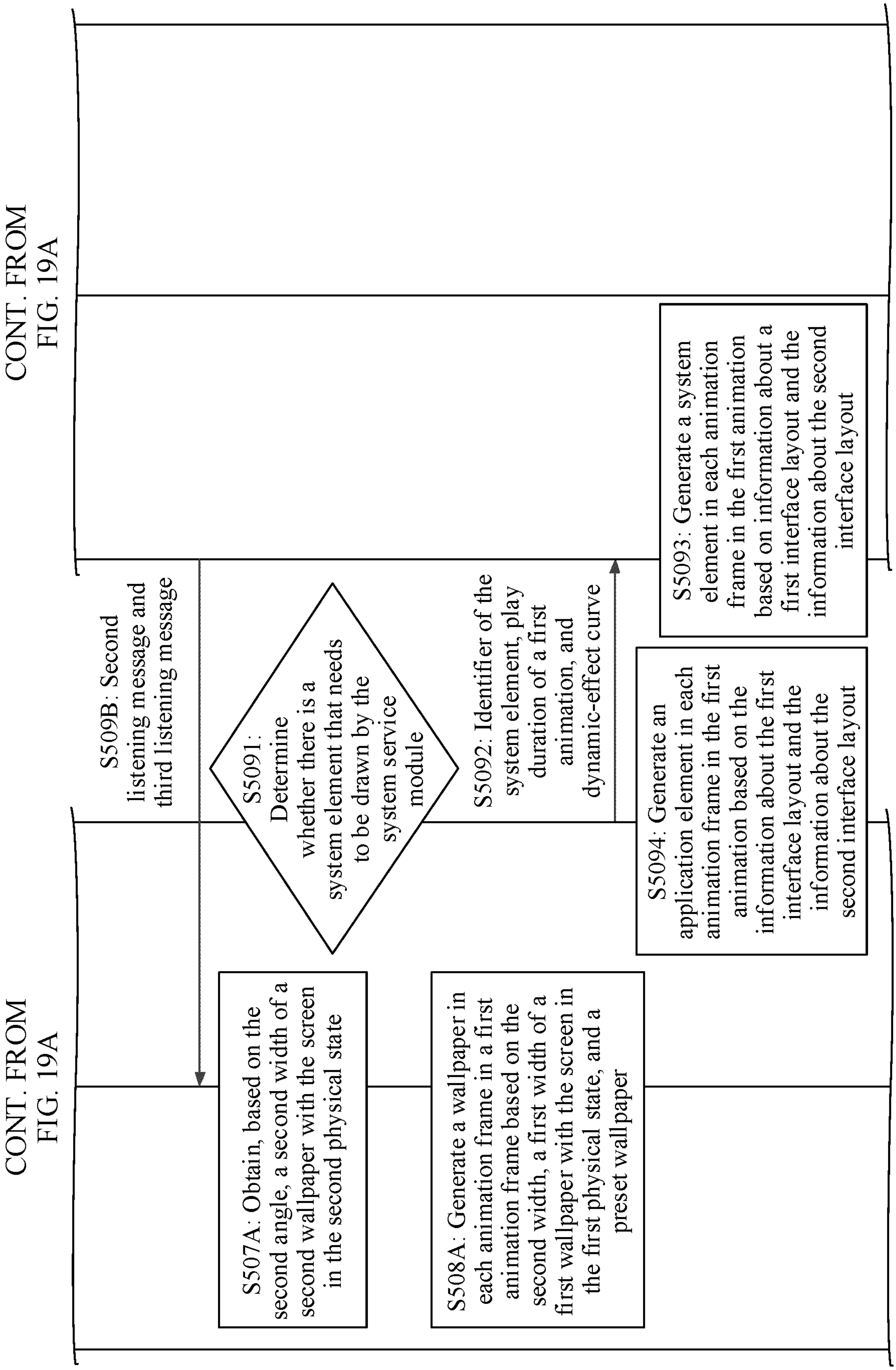


TO FIG. 19C

FIG. 19B

TO FIG. 19C

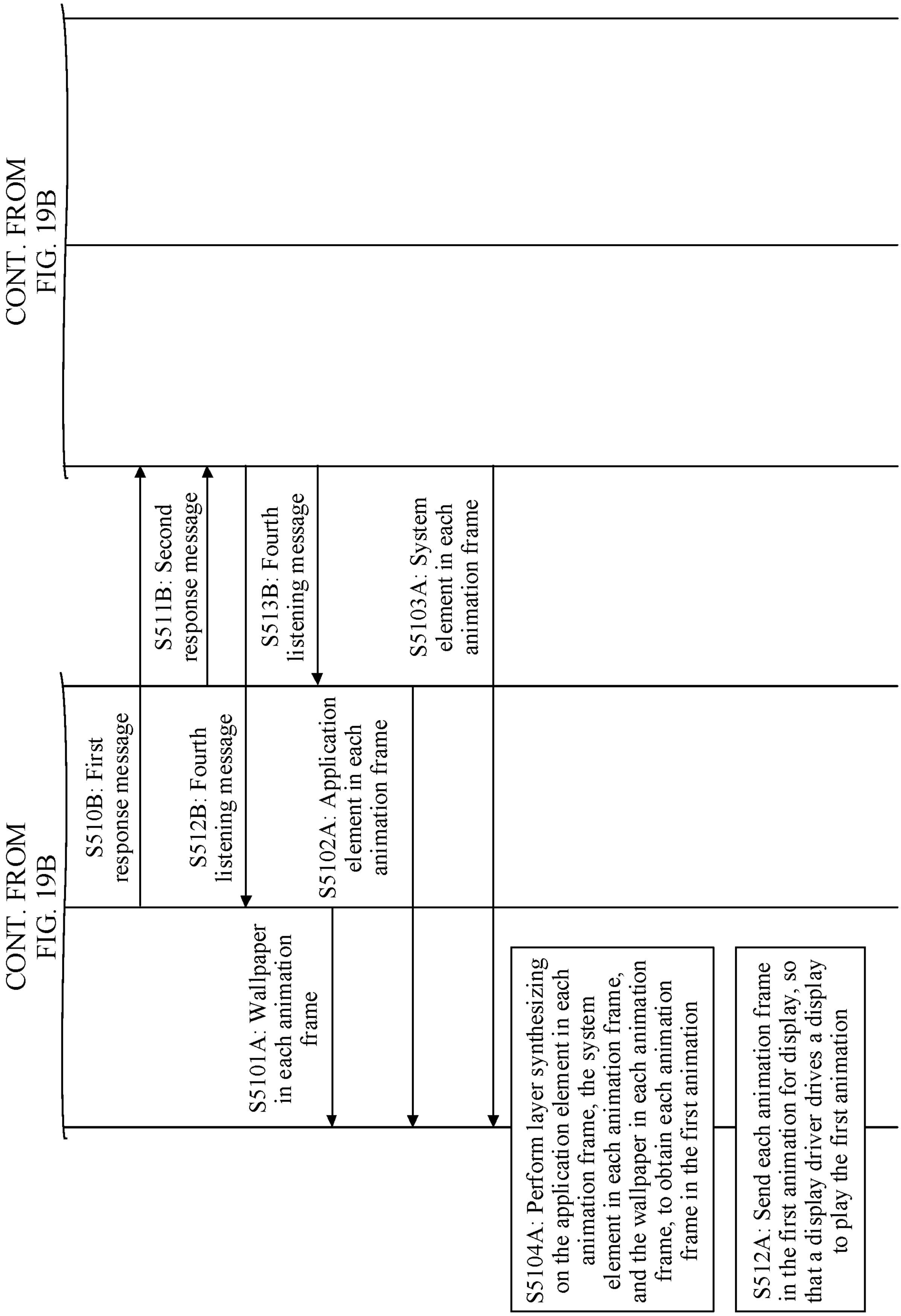
CONT. FROM FIG. 19B
CONT. FROM FIG. 19B
S510B: First response message
S512B: Fourth listening message
S5102A: Application element in each animation frame
S511B: Second response message
S513B: Fourth listening message
S5103A: System element in each animation frame
S5101A: Wallpaper in each animation frame
S5104A: Perform layer synthesizing on the application element in each animation frame, the system element in each animation frame, and the wallpaper in each animation frame, to obtain each animation frame in the first animation
S512A: Send each animation frame in the first animation for display, so that a display driver drives a display to play the first animation

FIG. 19C

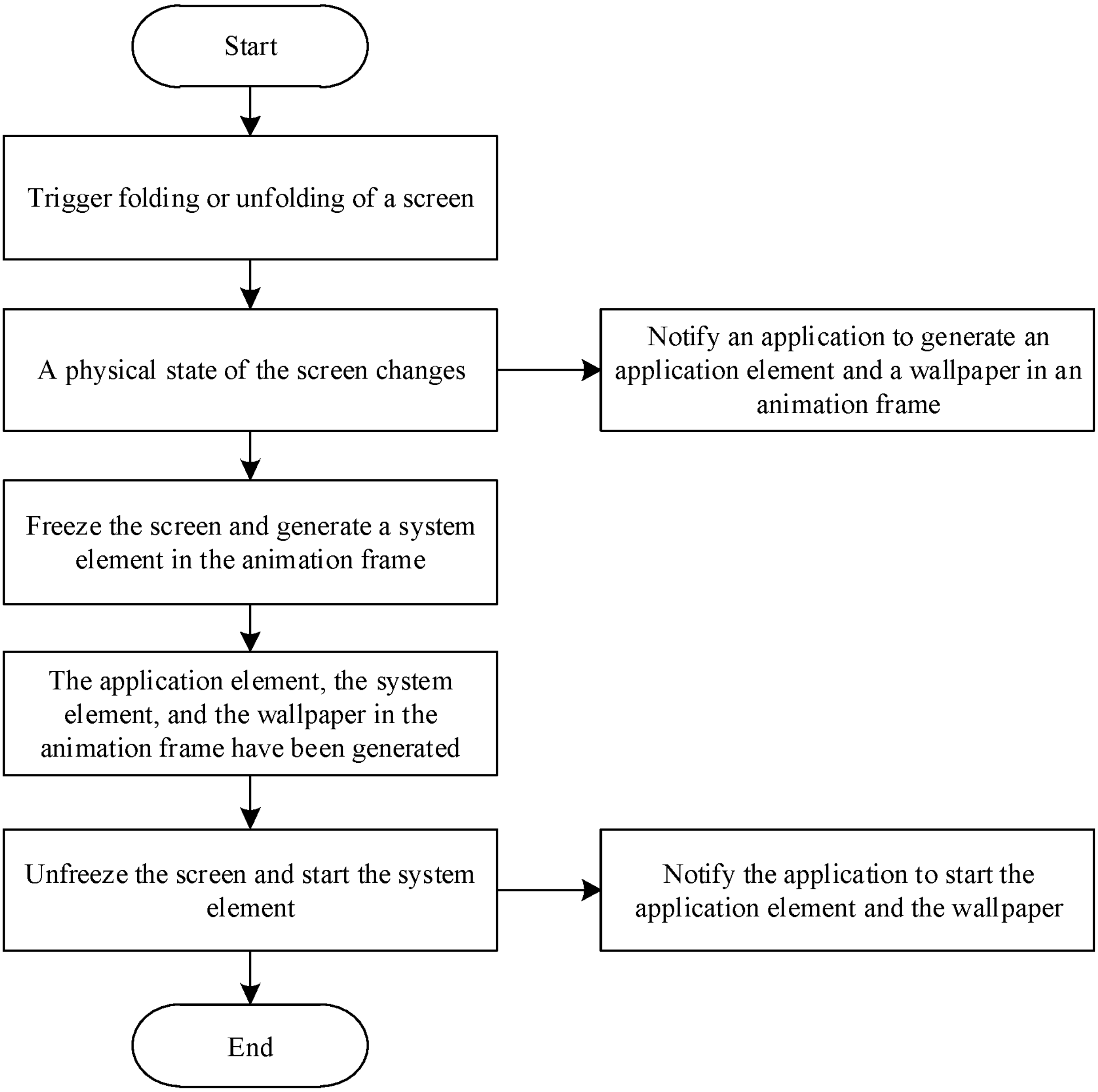
Start
Trigger folding or unfolding of a screen
A physical state of the screen changes
Notify an application to generate an application element and a wallpaper in an animation frame
Freeze the screen and generate a system element in the animation frame
The application element, the system element, and the wallpaper in the animation frame have been generated
Unfreeze the screen and start the system element
Notify the application to start the application element and the wallpaper
End

FIG. 20

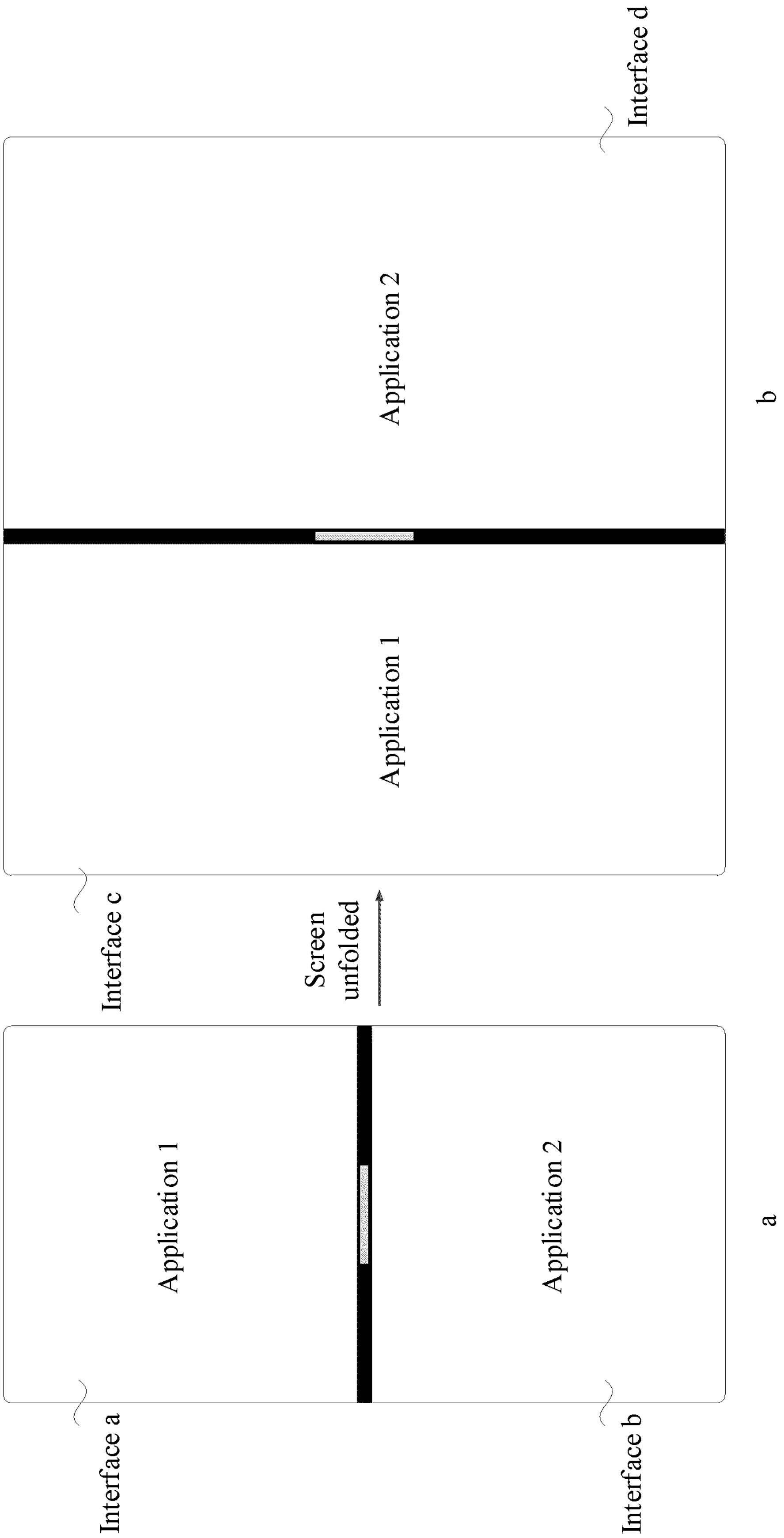
Interface a
Application 1
Application 2
Interface b
a
Screen unfolded
Interface c
Application 1
Application 2
Interface d
b

FIG. 21

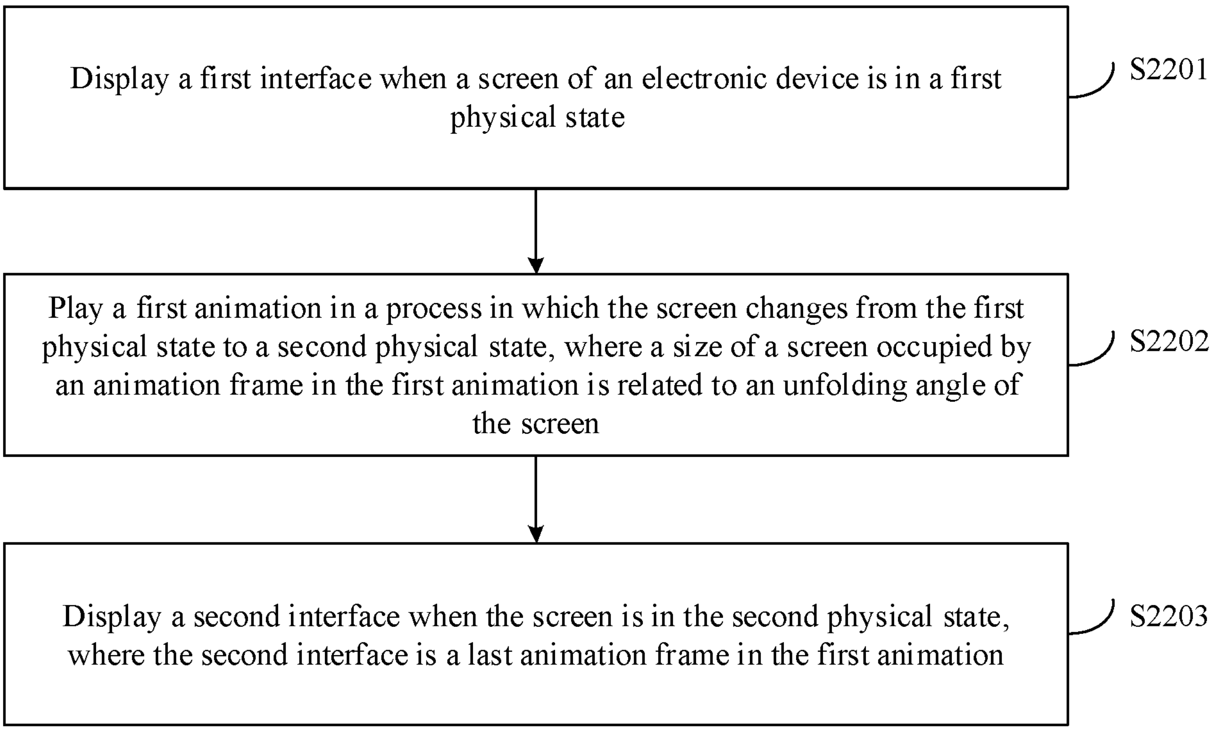
Display a first interface when a screen of an electronic device is in a first physical state
S2201
Play a first animation in a process in which the screen changes from the first physical state to a second physical state, where a size of a screen occupied by an animation frame in the first animation is related to an unfolding angle of the screen
S2202
Display a second interface when the screen is in the second physical state, where the second interface is a last animation frame in the first animation
S2203

FIG. 22

**INTERNATIONAL SEARCH REPORT**

International application No.
**PCT/CN2023/089393**

**A. CLASSIFICATION OF SUBJECT MATTER**

G06F 3/14(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

VEN, CNABS, CNTXT, WOTXT, CNKI, IEEE: 华为技术有限公司, 柔性, 折叠, 展开, 屏幕, 显示, 电子设备, 手机, 动态, 动画, 角度, flexible, folding, screen, display, electronic device, phone, dynamic, animation, angle

**C. DOCUMENTS CONSIDERED TO BE RELEVANT**

| Category* | Citation of document, with indication, where appropriate, of the relevant passages | Relevant to claim No. |
|---|---|---|
| X | CN 112506386 A (HUAWEI TECHNOLOGIES CO., LTD.) 16 March 2021 (2021-03-16) description, paragraphs 28, 68 and 180-206, and figures 12-13 | 1-12 |
| X | CN 112558898 A (HUAWEI TECHNOLOGIES CO., LTD.) 26 March 2021 (2021-03-26) description, paragraphs 71-107 | 1-12 |
| A | CN 114115769 A (HUAWEI TECHNOLOGIES CO., LTD.) 01 March 2022 (2022-03-01) entire document | 1-12 |
| A | US 2016372083 A1 (INTEL CORP.) 22 December 2016 (2016-12-22) entire document | 1-12 |
| A | WO 2021232961 A1 (GUANGDONG OPPO MOBILE TELECOMMUNICATIONS CORP., LTD.) 25 November 2021 (2021-11-25) entire document | 1-12 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **14 June 2023** | **21 June 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/089393**

| Patent document cited in search report | | | Publication date (day/month/year) | Patent family member(s) | | | Publication date (day/month/year) |
|---|---|---|---|---|---|---|---|
| CN | 112506386 | A | 16 March 2021 | WO | 2021052279 | A1 | 25 March 2021 |
| | | | | KR | 20220062061 | A | 13 May 2022 |
| | | | | EP | 4024182 | A1 | 06 July 2022 |
| | | | | US | 2022197584 | A1 | 23 June 2022 |
| | | | | EP | 4024182 | A4 | 09 November 2022 |
| | | | | JP | 2022548121 | W | 16 November 2022 |
| CN | 112558898 | A | 26 March 2021 | WO | 2021047251 | A1 | 18 March 2021 |
| | | | | KR | 20220058955 | A | 10 May 2022 |
| | | | | US | 2022269463 | A1 | 25 August 2022 |
| CN | 114115769 | A | 01 March 2022 | | None | | |
| US | 2016372083 | A1 | 22 December 2016 | WO | 2016204869 | A1 | 22 December 2016 |
| WO | 2021232961 | A1 | 25 November 2021 | CN | 113687743 | A | 23 November 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202210462994